(19) **Europäisches Patentamt European Patent Office Office européen des brevets**

(11) **EP 4 742 816 A1**

(12) **EUROPEAN PATENT APPLICATION**

(43) Date of publication:
13.05.2026 Bulletin 2026/20

(21) Application number: 25214152.8

(22) Date of filing: 07.11.2025

(51) International Patent Classification (IPC):
*H04W 74/0833* (2024.01)   *H04W 74/00* (2009.01)

(52) Cooperative Patent Classification (CPC):
**H04W 74/0833; H04W 74/006**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 08.11.2024 US 202463718394 P

(71) Applicant: Comcast Cable Communications, LLC
Philadelphia, PA 19103 (US)

(72) Inventors:
• SIVAVAKEESAR, Sivapathalingham
  Philadelphia, 19103 (US)
• CHUN, SungDuck
  Philadelphia, 19103 (US)
• DINAN, Esmael Hejazi
  Philadelphia, 19103 (US)

• DASHTAKI, Mohammad Ghadir Khoshkholgh
  Philadelphia, 19103 (US)
• PRASAD, Gautham
  Philadelphia, 19103 (US)
• KAZMI, Muhammad Ali
  Philadelphia, 19103 (US)
• ZHOU, Hua
  Philadelphia, 19103 (US)
• XU, Jian
  Philadelphia, 19103 (US)
• RYU, Jinsook
  Philadelphia, 19103 (US)
• PARK, Kyungmin
  Philadelphia, 19103 (US)

(74) Representative: V.O.
P.O. Box 87930
2508 DH Den Haag (NL)

(54) **SATELLITE COVERAGE ENHANCEMENTS**

(57) A wireless device may communicate with a base station in a terrestrial or non-terrestrial network. One or more system information block messages may indicate multiple random access resource sets of a synchronization signal block. Each resource may correspond to a different type of random access procedure, such as a 2-step or 4-step procedure. A transmit power pattern of the synchronization signal block may indicate a random access resource set to be used.

A first message: RRC message (e.g., SIB) comprising SSB transmission power configuration in time-domain and/or SSB DTX/DRX configuration of one or more SSBs, radio resource allocation of one or more procedures (e.g., first random access (RA) resources (RA1) for use by a first RA type, second random access (RA) resources (RA2) for use by a second RA type) at different SSB transmission powers and one or more received power threshold (e.g., SS-RSRP) configuration of one or more procedures (e.g., a first threshold to select the first RA type) 2505

Consider i) SSB transmission power configuration in time-domain and/or SSB DTX/DRX configuration of one or more SSBs; ii) radio resource allocation of one or more procedures (e.g., first random access (RA) resources (RA1) for use by a first RA type, second random access (RA) resources (RA2) for use by a second RA type) ; iii) one or more received power threshold (e.g., SS-RSRP) configuration (e.g., a threshold to select the first RA type) 2510

A Second message – (e.g., RRC message (e.g., SIB), Short Message or L1/2 signaling) – e.g., use the first RA resources to perform the second RA type procedure. 2515

Carry out one or more actions: e.g., use the first RA resources to perform the second RA type procedure. 2520

SS-RSRP: Synchronization Signal - Reference Signal Received Power 2525

**FIG. 25**

**Description**

CROSS-REFERENCE TO RELATED APPLICATIONS

This application claims the benefit of U.S. Provisional Application No. 63/718,394 filed on November 8, 2024. The above-referenced application is hereby incorporated by reference in its entirety.

BACKGROUND

A wireless device communicates with a base station. The wireless device receives configuration parameters for communicating with the base station via a cell.

SUMMARY

The following summary presents a simplified summary of certain features. The summary is not an extensive overview and is not intended to identify key or critical elements.

A wireless device may communicate with a base station. A synchronization signal block may be used to configure wireless communications. Variations in a transmit power or power pattern of the synchronization signal block may affect how a device selects between different types of random access resources, such as those used for 2-step and 4-step random access procedures. In both terrestrial and non-terrestrial networks (e.g., satellite systems), a base station may broadcast system information blocks that associate multiple random access resource sets with a given synchronization signal block or transmit power pattern. By aligning the transmit power configuration with these resource sets, the base station can influence device behavior to balance energy use, coverage, and access reliability. This coordination allows wireless devices to determine suitable random access resources and improve overall connection success even as synchronization signal block transmission power is dynamically varied across beams or cells.

These and other features and advantages are described in greater detail below.

BRIEF DESCRIPTION OF THE DRAWINGS

Examples of several of the various embodiments of the present disclosure are described herein with reference to the drawings.

FIG. 1A and FIG. 1B show example communication networks.

FIG. 2A shows an example user plane.

FIG. 2B shows an example control plane configuration.

FIG. 3 shows example of protocol layers.

FIG. 4A shows an example downlink data flow for a user plane configuration.

FIG. 4B shows an example format of a Medium Access Control (MAC) subheader in a MAC Protocol Data Unit (PDU).

FIG. 5A shows an example mapping for downlink channels.

FIG. 5B shows an example mapping for uplink channels.

FIG. 6 shows example radio resource control (RRC) states and RRC state transitions.

FIG. 7 shows an example configuration of a frame.

FIG. 8 shows an example resource configuration of one or more carriers.

FIG. 9 shows an example configuration of bandwidth parts (BWPs).

FIG. 10A shows example carrier aggregation configurations based on component carriers.

FIG. 10B shows example group of cells.

FIG. 11A shows an example mapping of one or more synchronization signal/physical broadcast channel (SS/PBCH) blocks.

FIG. 11B shows an example mapping of one or more channel state information reference signals (CSI-RSs).

FIG. 12A shows examples of downlink beam management procedures.

FIG. 12B shows examples of uplink beam management procedures.

FIG. 13A shows an example four-step random access procedure.

FIG. 13B shows an example two-step random access procedure.

FIG. 13C shows an example two-step random access procedure.

FIG. 14A shows an example of control resource set (CORESET) configurations.

FIG. 14B shows an example of a control channel element to resource element group (CCE-to-REG) mapping.

FIG. 15A shows an example of communications between a wireless device and a base station.

FIG. 15B shows example elements of a computing device that may be used to implement any of the various devices described herein

FIG. 16A, FIG. 16B, FIG. 16C, and FIG. 16D show examples of uplink and downlink signal transmission.

FIG. 17A, FIG. 17B, FIG. 17C, and FIG. 17D shows one or more interface management procedures taking place between any two nodes.

FIG. 18A, FIG. 18B, FIG. 18C, and FIG. 18D shows procedure and the purpose of the next generation setup procedure.

FIG. 19 shows one or more configuration parameters making up a system information block 1.

FIG. 20 shows one or more configuration parameters making up a system information block 19.

FIG. 21A and FIG. 21B show a network providing access to one or more wireless devices.

FIG. 22 shows an example of a base station operating one or more beams under severe energy constraints.

FIG. 23 shows an example of an SSB transmission by a base station in a cell.

FIG. 24 shows an example of a base station not dynamically changing a transmission power of one or more synchronization signal blocks to save energy.

FIG. 25 shows an example where a base station operates under energy constraints.

FIG. 26A and FIG. 26B show SSB transmission power configuration in the time-domain.

FIG. 27 shows an example where a base station operates under energy constraints.

FIG. 28 shows an example where a base station may dynamically change SSB transmission powers due to an energy-constrained operation.

FIG. 29A and FIG. 29B show an example where a base station may dynamically change SSB transmission powers due to an energy-constrained operation.

FIG. 30 shows an example of neighboring base stations exchanging a beam configuration of each of one or more beams.

FIG. 31 shows how a base station may transmit a beam configuration of each of one or more beams.

FIG. 32 shows an example of a base station transmitting a beam configuration of each of one or more beams that the base station operates to a core network node.

FIG. 33 shows an example of a base station dynamically changing SSB transmission powers due to an energy-constrained operation.

DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems.

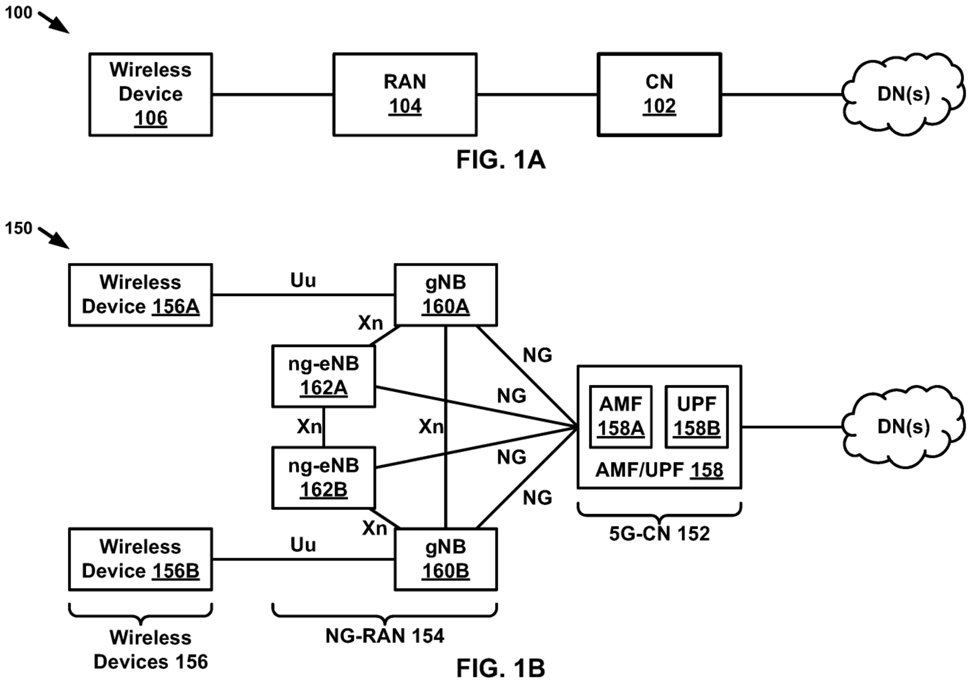

FIG. 1A shows an example communication network 100. The communication network 100 may comprise a mobile communication network). The communication network 100 may comprise, for example, a public land mobile network (PLMN) operated/managed/run by a network operator. The communication network 100 may comprise one or more of a core network (CN) 102, a radio access network (RAN) 104, and/or a wireless device 106. The communication network 100 may comprise, and/or a device within the communication network 100 may communicate with (e.g., via CN 102), one or more data networks (DN(s)) 108. The wireless device 106 may communicate with one or more DNs 108, such as public DNs (e.g., the Internet), private DNs, and/or intra-operator DNs. The wireless device 106 may communicate with the one or more DNs 108 via the RAN 104 and/or via the CN 102. The CN 102 may provide/configure the wireless device 106 with one or more interfaces to the one or more DNs 108. As part of the interface functionality, the CN 102 may set up end-to-end connections between the wireless device 106 and the one or more DNs 108, authenticate the wireless device 106, provide/configure charging functionality, etc.

The wireless device 106 may communicate with the RAN 104 via radio communications over an air interface. The RAN 104 may communicate with the CN 102 via various communications (e.g., wired communications and/or wireless communications). The wireless device 106 may establish a connection with the CN 102 via the RAN 104. The RAN 104 may provide/configure scheduling, radio resource management, and/or retransmission protocols, for example, as part of the radio communications. The communication direction from the RAN 104 to the wireless device 106 over/via the air interface may be referred to as the downlink and/or downlink communication direction. The communication direction from the wireless device 106 to the RAN 104 over/via the air interface may be referred to as the uplink and/or uplink communication direction. Downlink transmissions may be separated and/or distinguished from uplink transmissions, for example, based on at least one of: frequency division duplexing (FDD), time-division duplexing (TDD), any other duplexing schemes, and/or one or more combinations thereof.

As used throughout, the term "wireless device" may comprise one or more of: a mobile device, a fixed (e.g., non-mobile) device for which wireless communication is configured or usable, a computing device, a node, a device capable of wirelessly communicating, or any other device capable of sending and/or receiving signals. As non-limiting examples, a wireless device may comprise, for example: a telephone, a cellular phone, a Wi-Fi phone, a smartphone, a tablet, a computer, a laptop, a sensor, a meter, a wearable device, an Internet of Things (IoT) device, a hotspot, a cellular repeater, a vehicle roadside unit (RSU), a relay node, an automobile, a wireless user device (e.g., user equipment (UE), a user terminal (UT), etc.), an access terminal (AT), a mobile station, a handset, a wireless transmit and receive unit (WTRU), a wireless communication device, and/or any combination thereof.

The RAN 104 may comprise one or more base stations (not shown). As used throughout, the term "base station" may comprise one or more of: a base station, a node, a Node B (NB), an evolved NodeB (eNB), a gNB, an ng-eNB, a relay node (e.g., an integrated access and backhaul (IAB) node), a donor node (e.g., a donor eNB, a donor gNB, etc.), an access point (e.g., a Wi-Fi access point), a transmission and reception point (TRP), a computing device, a device capable of wirelessly communicating, or any other device capable of sending and/or receiving signals. A base station may comprise one or more of each element listed above. A base station may comprise one or more TRPs. As other non-limiting examples, a base station may comprise for example, one or more of: a Node B (e.g., associated with Universal Mobile Telecommunications System (UMTS) and/or third-generation (3G) standards), an Evolved Node B (eNB) (e.g., associated with Evolved-Universal Terrestrial Radio Access (E-UTRA) and/or fourth-generation (4G) standards), a remote radio head (RRH), a baseband processing unit coupled to one or more remote radio heads (RRHs), a repeater node or relay node used to extend the coverage area of a donor node, a Next Generation Evolved Node B (ng-eNB), a Generation Node B (gNB) (e.g., associated with NR and/or fifth-generation (5G) standards), an access point (AP) (e.g., associated with, for example, Wi-Fi or any other suitable wireless communication standard), any other generation base station, and/or any combination thereof. A base station may comprise one or more devices, such as at least one base station central device (e.g., a gNB Central Unit (gNB-CU)) and at least one base station distributed device (e.g., a gNB Distributed Unit (gNB-DU)).

A base station (e.g., in the RAN 104) may comprise one or more sets of antennas for communicating with the wireless device 106 wirelessly (e.g., via an over the air interface). One or more base stations may comprise sets (e.g., three sets or any other quantity of sets) of antennas to respectively control multiple cells or sectors (e.g., three cells, three sectors, any other quantity of cells, or any other quantity of sectors). The size of a cell may be determined by a range at which a receiver (e.g., a base station receiver) may successfully receive transmissions from a transmitter (e.g., a wireless device transmitter) operating in the cell. One or more cells of base stations (e.g., by alone or in combination with other cells) may provide/configure a radio coverage to the wireless device 106 over a wide geographic area to support wireless device mobility. A base station comprising three sectors (e.g., or n-sector, where n refers to any quantity n) may be referred to as a three-sector site (e.g., or an n-sector site) or a three-sector base station (e.g., an n-sector base station).

One or more base stations (e.g., in the RAN 104) may be implemented as a sectored site with more or less than three sectors. One or more base stations of the RAN 104 may be implemented as an access point, as a baseband processing device/unit coupled to several RRHs, and/or as a repeater or relay node used to extend the coverage area of a node (e.g., a donor node). A baseband processing device/unit coupled to RRHs may be part of a centralized or cloud RAN architecture, for example, where the baseband processing device/unit may be centralized in a pool of baseband processing devices/units or virtualized. A repeater node may amplify and send (e.g., transmit, retransmit, rebroadcast, etc.) a radio signal received from a donor node. A relay node may perform the substantially the same/similar functions as a repeater node. The relay node may decode the radio signal received from the donor node, for example, to remove noise before amplifying and sending the radio signal.

The RAN 104 may be deployed as a homogenous network of base stations (e.g., macrocell base stations) that have similar antenna patterns and/or similar high-level transmit powers. The RAN 104 may be deployed as a heterogeneous network of base stations (e.g., different base stations that have different antenna patterns). In heterogeneous networks, small cell base stations may be used to provide/configure small coverage areas, for example, coverage areas that overlap with comparatively larger coverage areas provided/configured by other base stations (e.g., macrocell base stations). The small coverage areas may be provided/configured in areas with high data traffic (or so-called "hotspots") or in areas with a weak macrocell coverage. Examples of small cell base stations may comprise, in order of decreasing coverage area, microcell base stations, picocell base stations, and femtocell base stations or home base stations.

Examples described herein may be used in a variety of types of communications. For example, communications may be in accordance with the Third-Generation Partnership Project (3GPP) (e.g., one or more network elements similar to those of the communication network 100), communications in accordance with Institute of Electrical and Electronics Engineers (IEEE), communications in accordance with International Telecommunication Union (ITU), communications in accordance with International Organization for Standardization (ISO), etc. The 3GPP has produced specifications for multiple generations of mobile networks: a 3G network known as UMTS, a 4G network known as Long-Term Evolution (LTE) and LTE Advanced (LTE-A), and a 5G network known as 5G System (5GS) and NR system. 3GPP may produce specifications for additional generations of communication networks (e.g., 6G and/or any other generation of communication network). Examples may be described with reference to one or more elements (e.g., the RAN) of a 3GPP 5G network, referred to as a next-generation RAN (NG-RAN), or any other communication network, such as a 3GPP network and/or a non-3GPP network. Examples described herein may be applicable to other communication networks, such as 3G and/or 4G networks, and communication networks that may not yet be finalized/specified (e.g., a 3GPP 6G network), satellite communication networks, and/or any other communication network. NG-RAN implements and updates 5G radio access technology referred to as NR and may be provisioned to implement 4G radio access technology and/or other radio access technologies, such as other 3GPP and/or non-3GPP radio access technologies.

FIG. 1B shows an example communication network 150. The communication network may comprise a mobile communication network. The communication network 150 may comprise, for example, a PLMN operated/managed/run by a network operator. The communication network 150 may comprise one or more of: a CN 152 (e.g., a 5G core network (5G-CN)), a RAN 154 (e.g., an NG-RAN), and/or wireless devices 156A and 156B (collectively wireless device(s) 156). The communication network 150 may comprise, and/or a device within the communication network 150 may communicate with (e.g., via CN 152), one or more data networks (DN(s)) 170. These components may be implemented and operate in substantially the same or similar manner as corresponding components described with respect to FIG. 1A.

The CN 152 (e.g., 5G-CN) may provide/configure the wireless device(s) 156 with one or more interfaces to one or more DNs 170, such as public DNs (e.g., the Internet), private DNs, and/or intra-operator DNs. As part of the interface functionality, the CN 152 (e.g., 5G-CN) may set up end-to-end connections between the wireless device(s) 156 and the one or more DNs, authenticate the wireless device(s) 156, and/or provide/configure charging functionality. The CN 152 (e.g., the 5G-CN) may be a service-based architecture, which may differ from other CNs (e.g., such as a 3GPP 4G CN). The architecture of nodes of the CN 152 (e.g., 5G-CN) may be defined as network functions that offer services via interfaces to other network functions. The network functions of the CN 152 (e.g., 5G CN) may be implemented in several ways, for example, as network elements on dedicated or shared hardware, as software instances running on dedicated or shared hardware, and/or as virtualized functions instantiated on a platform (e.g., a cloud-based platform).

The CN 152 (e.g., 5G-CN) may comprise an Access and Mobility Management Function (AMF) device 158A and/or a User Plane Function (UPF) device 158B, which may be separate components or one component AMF/UPF device 158. The UPF device 158B may serve as a gateway between a RAN 154 (e.g., NG-RAN) and the one or more DNs 170. The UPF device 158B may perform functions, such as: packet routing and forwarding, packet inspection and user plane policy rule enforcement, traffic usage reporting, uplink classification to support routing of traffic flows to the one or more DNs 170, quality of service (QoS) handling for the user plane (e.g., packet filtering, gating, uplink/downlink rate enforcement, and uplink traffic verification), downlink packet buffering, and/or downlink data notification triggering. The UPF device 158B may serve as an anchor point for intra-/inter-Radio Access Technology (RAT) mobility, an external protocol (or packet) data unit (PDU) session point of interconnect to the one or more DNs, and/or a branching point to support a multi-homed PDU session. The wireless device(s) 156 may be configured to receive services via a PDU session, which may be a logical connection between a wireless device and a DN.

The AMF device 158A may perform functions, such as: Non-Access Stratum (NAS) signaling termination, NAS signaling security, Access Stratum (AS) security control, inter-CN node signaling for mobility between access networks (e.g., 3GPP access networks and/or non-3GPP networks), idle mode wireless device reachability (e.g., idle mode user equipment (UE) reachability for control and execution of paging retransmission), registration area management, intra-system and inter-system mobility support, access authentication, access authorization including checking of roaming rights, mobility management control (e.g., subscription and policies), network slicing support, and/or session management function (SMF) selection. NAS may refer to the functionality operating between a CN and a wireless device, and AS may refer to the functionality operating between a wireless device and a RAN.

The CN 152 (e.g., 5G-CN) may comprise one or more additional network functions that may not be shown in FIG. 1B. The CN 152 (e.g., 5G-CN) may comprise one or more devices implementing at least one of: a Session Management Function (SMF), an NR Repository Function (NRF), a Policy Control Function (PCF), a Network Exposure Function (NEF), a Unified Data Management (UDM), an Application Function (AF), an Authentication Server Function (AUSF), and/or any other function.

The RAN 154 (e.g., NG-RAN) may communicate with the wireless device(s) 156 via radio communications (e.g., an over the air interface). The wireless device(s) 156 may communicate with the CN 152 via the RAN 154. The RAN 154 (e.g., NG-RAN) may comprise one or more first-type base stations (e.g., gNBs comprising a gNB 160A and a gNB 160B (collectively gNBs 160)) and/or one or more second-type base stations (e.g., ng eNBs comprising an ng-eNB 162A and an ng-eNB 162B (collectively ng eNBs 162)). The RAN 154 may comprise one or more of any quantity of types of base station. The gNBs 160 and ng eNBs 162 may be referred to as base stations. The base stations (e.g., the gNBs 160 and ng eNBs 162) may comprise one or more sets of antennas for communicating with the wireless device(s) 156 wirelessly (e.g., an over an air interface). One or more base stations (e.g., the gNBs 160 and/or the ng eNBs 162) may comprise multiple sets of antennas to respectively control multiple cells (or sectors). The cells of the base stations (e.g., the gNBs 160 and the ng-eNBs 162) may provide a radio coverage to the wireless device(s) 156 over a wide geographic area to support wireless device mobility.

The base stations (e.g., the gNBs 160 and/or the ng-eNBs 162) may be connected to the CN 152 (e.g., 5G CN) via a first interface (e.g., an NG interface) and to other base stations via a second interface (e.g., an Xn interface). The NG and Xn interfaces may be established using direct physical connections and/or indirect connections over an underlying transport network, such as an internet protocol (IP) transport network. The base stations (e.g., the gNBs 160 and/or the ng-eNBs 162) may communicate with the wireless device(s) 156 via a third interface (e.g., a Uu interface). A base station (e.g., the gNB 160A) may communicate with the wireless device 156A via a Uu interface. The NG, Xn, and Uu interfaces may be associated with a protocol stack. The protocol stacks associated with the interfaces may be used by the network elements shown in FIG. 1B to exchange data and signaling messages. The protocol stacks may comprise two planes: a user plane and a control plane. Any other quantity of planes may be used (e.g., in a protocol stack). The user plane may handle data of interest to a user. The control plane may handle signaling messages of interest to the network elements.

One or more base stations (e.g., the gNBs 160 and/or the ng-eNBs 162) may communicate with one or more AMF/UPF devices, such as the AMF/UPF 158, via one or more interfaces (e.g., NG interfaces). A base station (e.g., the gNB 160A) may be in communication with, and/or connected to, the UPF 158B of the AMF/UPF 158 via an NG-User plane (NG-U) interface. The NG-U interface may provide/perform delivery (e.g., non-guaranteed delivery) of user plane PDUs between a base station (e.g., the gNB 160A) and a UPF device (e.g., the UPF 158B). The base station (e.g., the gNB 160A) may be in communication with, and/or connected to, an AMF device (e.g., the AMF 158A) via an NG-Control plane (NG-C) interface. The NG-C interface may provide/perform, for example, NG interface management, wireless device context management (e.g., UE context management), wireless device mobility management (e.g., UE mobility management), transport of NAS messages, paging, PDU session management, configuration transfer, and/or warning message transmission.

A wireless device may access the base station, via an interface (e.g., Uu interface), for the user plane configuration and the control plane configuration. The base stations (e.g., gNBs 160) may provide user plane and control plane protocol terminations towards the wireless device(s) 156 via the Uu interface. A base station (e.g., the gNB 160A) may provide user plane and control plane protocol terminations toward the wireless device 156A over a Uu interface associated with a first protocol stack. A base station (e.g., the ng-eNBs 162) may provide Evolved UMTS Terrestrial Radio Access (E UTRA) user plane and control plane protocol terminations towards the wireless device(s) 156 via a Uu interface (e.g., where E UTRA may refer to the 3GPP 4G radio-access technology). A base station (e.g., the ng-eNB 162B) may provide E UTRA user plane and control plane protocol terminations towards the wireless device 156B via a Uu interface associated with a second protocol stack. The user plane and control plane protocol terminations may comprise, for example, NR user plane and control plane protocol terminations, 4G user plane and control plane protocol terminations, etc.

The CN 152 (e.g., 5G-CN) may be configured to handle one or more radio accesses (e.g., NR, 4G, and/or any other radio accesses). It may also be possible for an NR network/device (or any first network/device) to connect to a 4G core network/device (or any second network/device) in a non-standalone mode (e.g., non-standalone operation). In a non-standalone mode/operation, a 4G core network may be used to provide (or at least support) control-plane functionality (e.g., initial access, mobility, and/or paging). Although only one AMF/UPF 158 is shown in FIG. 1B, one or more base stations (e.g., one or more gNBs and/or one or more ng-eNBs) may be connected to multiple AMF/UPF nodes, for example, to provide redundancy and/or to load share across the multiple AMF/UPF nodes.

An interface (e.g., Uu, Xn, and/or NG interfaces) between network elements (e.g., the network elements shown in FIG. 1B) may be associated with a protocol stack that the network elements may use to exchange data and signaling messages. A protocol stack may comprise two planes: a user plane and a control plane. Any other quantity of planes may be used (e.g., in a protocol stack). The user plane may handle data associated with a user (e.g., data of interest to a user). The control plane may handle data associated with one or more network elements (e.g., signaling messages of interest to the network elements).

The communication network 100 in FIG. 1A and/or the communication network 150 in FIG. 1B may comprise any quantity/number and/or type of devices, such as, for example, computing devices, wireless devices, mobile devices, handsets, tablets, laptops, internet of things (IoT) devices, hotspots, cellular repeaters, computing devices, and/or, more generally, user equipment (e.g., UE). Although one or more of the above types of devices may be referenced herein (e.g., UE, wireless device, computing device, etc.), it should be understood that any device herein may comprise any one or more of the above types of devices or similar devices. The communication network, and any other network referenced herein, may comprise an LTE network, a 5G network, a satellite network, and/or any other network for wireless communications (e.g., any 3GPP network and/or any non-3GPP network). Apparatuses, systems, and/or methods described herein may generally be described as implemented on one or more devices (e.g., wireless device, base station, eNB, gNB, computing device, etc.), in one or more networks, but it will be understood that one or more features and steps may be implemented on any device and/or in any network.

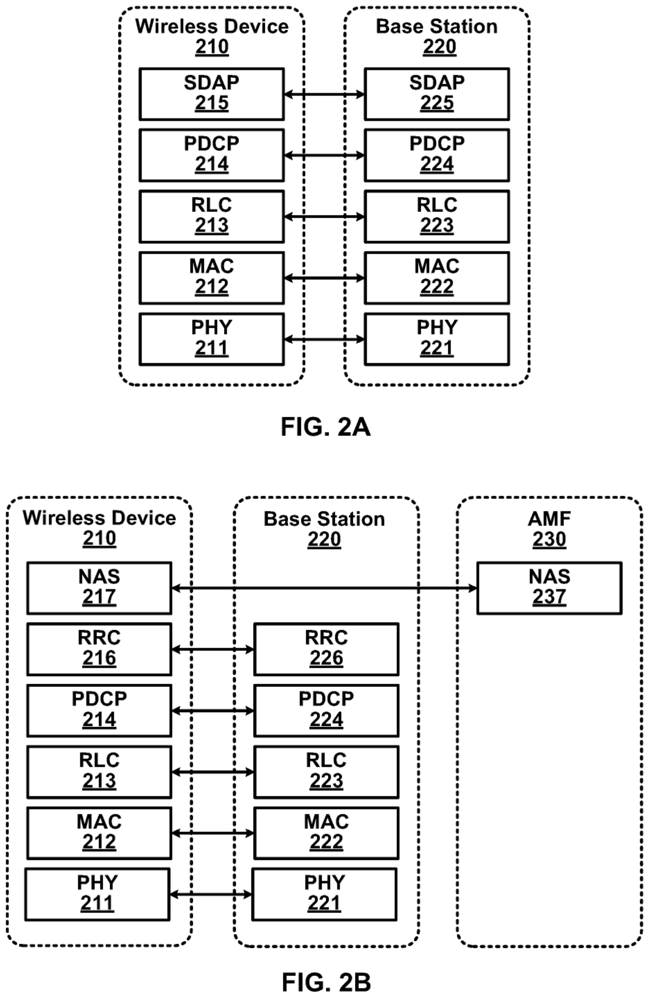

FIG. 2A shows an example user plane configuration. The user plane configuration may comprise, for example, an NR user plane protocol stack. FIG. 2B shows an example control plane configuration. The control plane configuration may comprise, for example, an NR control plane protocol stack. One or more of the user plane configuration and/or the control plane configuration may use a Uu interface that may be between a wireless device 210 and a base station 220. The protocol stacks shown in FIG. 2A and FIG. 2B may be substantially the same or similar to those used for the Uu interface between, for example, the wireless device 156A and the base station 160A shown in FIG. 1B.

A user plane configuration (e.g., an NR user plane protocol stack) may comprise multiple layers (e.g., five layers or any other quantity of layers) implemented in the wireless device 210 and the base station 220 (e.g., as shown in FIG. 2A). At the bottom of the protocol stack, physical layers (PHYs) 211 and 221 may provide transport services to the higher layers of the protocol stack and may correspond to layer 1 of the Open Systems Interconnection (OSI) model. The protocol layers above PHY 211 may comprise a medium access control layer (MAC) 212, a radio link control layer (RLC) 213, a packet data convergence protocol layer (PDCP) 214, and/or a service data application protocol layer (SDAP) 215. The protocol layers above PHY 221 may comprise a medium access control layer (MAC) 222, a radio link control layer (RLC) 223, a packet data convergence protocol layer (PDCP) 224, and/or a service data application protocol layer (SDAP) 225. One or more of the four protocol layers above PHY 211 may correspond to layer 2, or the data link layer, of the OSI model. One or more of the four protocol layers above PHY 221 may correspond to layer 2, or the data link layer, of the OSI model.

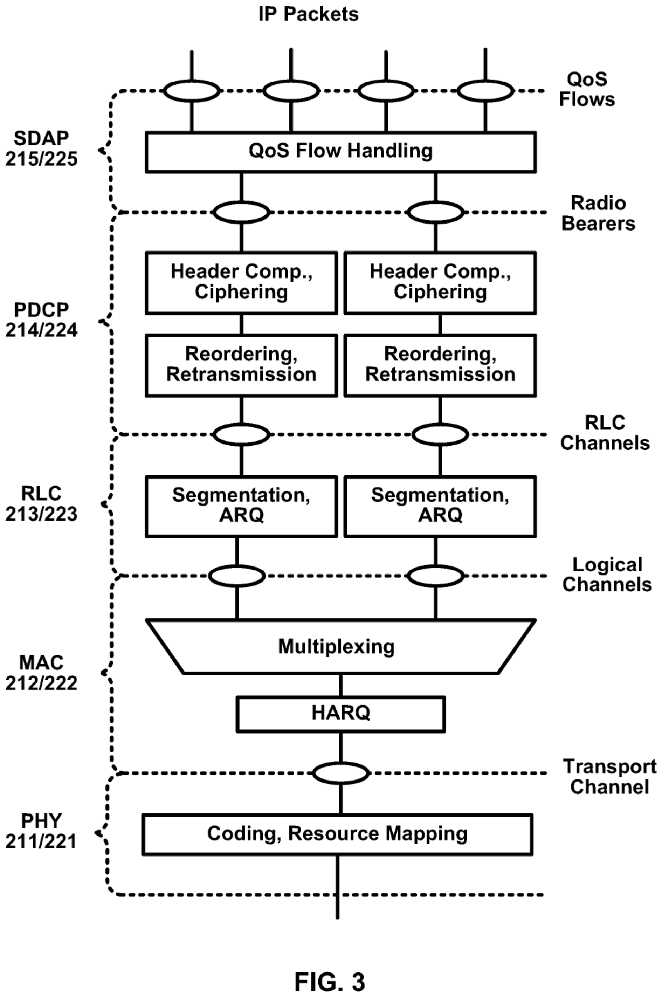

FIG. 3 shows an example of protocol layers. The protocol layers may comprise, for example, protocol layers of the NR user plane protocol stack. One or more services may be provided between protocol layers. SDAPs (e.g., SDAPS 215 and 225 shown in FIG. 2A and FIG. 3) may perform Quality of Service (QoS) flow handling. A wireless device (e.g., the wireless devices 106, 156A, 156B, and 210) may receive services through/via a PDU session, which may be a logical connection between the wireless device and a DN. The PDU session may have one or more QoS flows 310. A UPF (e.g., the UPF 158B) of a CN may map IP packets to the one or more QoS flows of the PDU session, for example, based on one or more QoS requirements (e.g., in terms of delay, data rate, error rate, and/or any other quality/service requirement). The SDAPs 215 and 225 may perform mapping/de-mapping between the one or more QoS flows 310 and one or more radio bearers 320 (e.g., data radio bearers). The mapping/demapping between the one or more QoS flows 310 and the radio bearers 320 may be determined by the SDAP 225 of the base station 220. The SDAP 215 of the wireless device 210 may be informed of the mapping between the QoS flows 310 and the radio bearers 320 via reflective mapping and/or control signaling received from the base station 220. For reflective mapping, the SDAP 225 of the base station 220 may mark the downlink packets with a QoS flow indicator (QFI), which may be monitored/detected/identified/indicated/observed by the SDAP 215 of the wireless device 210 to determine the mapping/de-mapping between the one or more QoS flows 310 and the radio bearers 320.

PDCPs (e.g., the PDCPs 214 and 224 shown in FIG. 2A and FIG. 3) may perform header compression/decompression, for example, to reduce the amount of data that may need to be transmitted (e.g., sent) over the air interface, ciphering/deciphering to prevent unauthorized decoding of data transmitted (e.g., sent) over the air interface, and/or integrity protection (e.g., to ensure control messages originate from intended sources). The PDCPs 214 and 224 may perform retransmissions of undelivered packets, in-sequence delivery and reordering of packets, and/or removal of packets received in duplicate due to, for example, a handover (e.g., an intra-gNB handover). The PDCPs 214 and 224 may perform packet duplication, for example, to improve the likelihood of the packet being received. A receiver may receive the packet in duplicate and may remove any duplicate packets. Packet duplication may be useful for certain services, such as services that require high reliability.

The PDCP layers (e.g., PDCPs 214 and 224) may perform mapping/de-mapping between a split radio bearer and RLC channels (e.g., RLC channels 330) (e.g., in a dual connectivity scenario/configuration). Dual connectivity may refer to a technique that allows a wireless device to communicate with multiple cells (e.g., two cells) or, more generally, multiple cell groups comprising: a master cell group (MCG) and a secondary cell group (SCG). A split bearer may be configured and/or used, for example, if a single radio bearer (e.g., such as one of the radio bearers provided/configured by the PDCPs 214 and 224 as a service to the SDAPs 215 and 225) is handled by cell groups in dual connectivity. The PDCPs 214 and 224 may map/de-map between the split radio bearer and RLC channels 330 belonging to the cell groups.

RLC layers (e.g., RLCs 213 and 223) may perform segmentation, retransmission via Automatic Repeat Request (ARQ), and/or removal of duplicate data units received from MAC layers (e.g., MACs 212 and 222, respectively). The RLC layers (e.g., RLCs 213 and 223) may support multiple transmission modes (e.g., three transmission modes: transparent mode (TM); unacknowledged mode (UM); and acknowledged mode (AM)). The RLC layers may perform one or more of the noted functions, for example, based on the transmission mode an RLC layer is operating. The RLC configuration may be per logical channel. The RLC configuration may not depend on numerologies and/or Transmission Time Interval (TTI) durations (or other durations). The RLC layers (e.g., RLCs 213 and 223) may provide/configure RLC channels as a service to the PDCP layers (e.g., PDCPs 214 and 224, respectively), such as shown in FIG. 3.

The MAC layers (e.g., MACs 212 and 222) may perform multiplexing/demultiplexing of logical channels and/or mapping between logical channels and transport channels. The multiplexing/demultiplexing may comprise multiplexing/demultiplexing of data units/data portions, belonging to the one or more logical channels, into/from Transport Blocks (TBs) delivered to/from the PHY layers (e.g., PHYs 211 and 221, respectively). The MAC layer of a base station (e.g., MAC 222) may be configured to perform scheduling, scheduling information reporting, and/or priority handling between wireless devices via dynamic scheduling. Scheduling may be performed by a base station (e.g., the base station 220 at the MAC 222) for downlink/or and uplink. The MAC layers (e.g., MACs 212 and 222) may be configured to perform error correction(s) via Hybrid Automatic Repeat Request (HARQ) (e.g., one HARQ entity per carrier in case of Carrier Aggregation (CA)), priority handling between logical channels of the wireless device 210 via logical channel prioritization and/or padding. The MAC layers (e.g., MACs 212 and 222) may support one or more numerologies and/or transmission timings. Mapping restrictions in a logical channel prioritization may control which numerology and/or transmission timing a logical channel may use. The MAC layers (e.g., the MACs 212 and 222) may provide/configure logical channels 340 as a service to the RLC layers (e.g., the RLCs 213 and 223).

The PHY layers (e.g., PHYs 211 and 221) may perform mapping of transport channels to physical channels and/or digital and analog signal processing functions, for example, for sending and/or receiving information (e.g., via an over the air interface). The digital and/or analog signal processing functions may comprise, for example, coding/decoding and/or modulation/demodulation. The PHY layers (e.g., PHYs 211 and 221) may perform multi-antenna mapping. The PHY layers (e.g., the PHYs 211 and 221) may provide/configure one or more transport channels (e.g., transport channels 350) as a service to the MAC layers (e.g., the MACs 212 and 222, respectively).

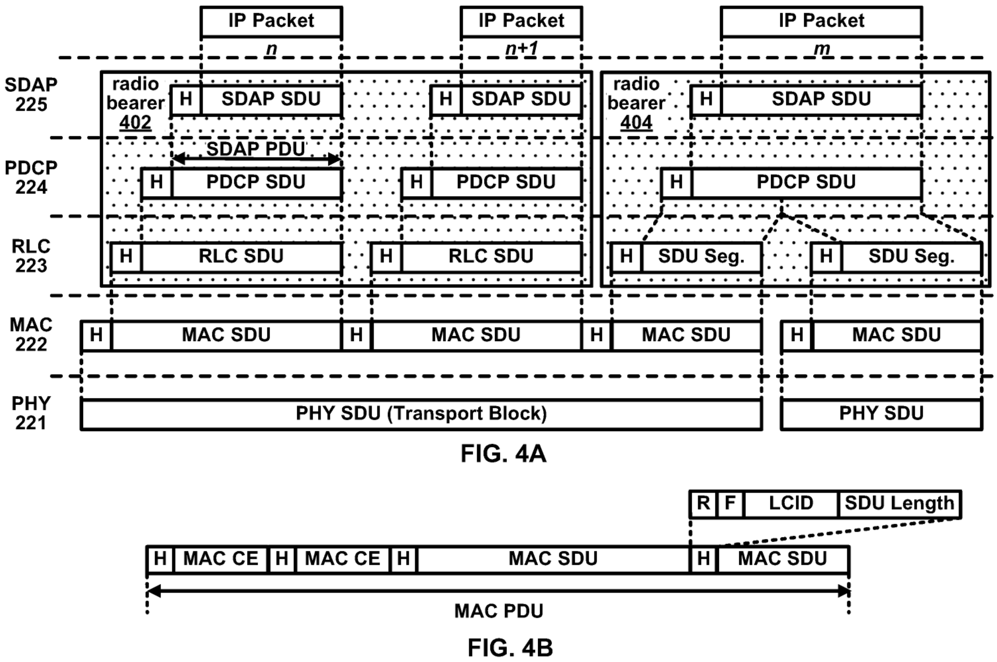

FIG. 4A shows an example downlink data flow for a user plane configuration. The user plane configuration may comprise, for example, the NR user plane protocol stack shown in FIG. 2A. One or more TBs may be generated, for example, based on a data flow via a user plane protocol stack. As shown in FIG. 4A, a downlink data flow of three IP packets (n, n+1, and m) via the NR user plane protocol stack may generate two TBs (e.g., at the base station 220). An uplink data flow via the NR user plane protocol stack may be similar to the downlink data flow shown in FIG. 4A. The three IP packets (n, n+1, and m) may be determined from the two TBs, for example, based on the uplink data flow via an NR user plane protocol stack. A first quantity of packets (e.g., three or any other quantity) may be determined from a second quantity of TBs (e.g., two or another quantity).

The downlink data flow may begin, for example, if the SDAP 225 receives the three IP packets (or other quantity of IP packets) from one or more QoS flows and maps the three packets (or other quantity of packets) to radio bearers (e.g., radio bearers 402 and 404). The SDAP 225 may map the IP packets n and n+1 to a first radio bearer 402 and map the IP packet m to a second radio bearer 404. An SDAP header (labeled with "H" preceding each SDAP SDU shown in FIG. 4A) may be added to an IP packet to generate an SDAP PDU, which may be referred to as a PDCP SDU. The data unit transferred from/to a higher protocol layer may be referred to as a service data unit (SDU) of the lower protocol layer, and the data unit transferred to/from a lower protocol layer may be referred to as a protocol data unit (PDU) of the higher protocol layer. As shown in FIG. 4A, the data unit from the SDAP 225 may be an SDU of lower protocol layer PDCP 224 (e.g., PDCP SDU) and may be a PDU of the SDAP 225 (e.g., SDAP PDU).

Each protocol layer (e.g., protocol layers shown in FIG. 4A) or at least some protocol layers may: perform its own function(s) (e.g., one or more functions of each protocol layer described with respect to FIG. 3), add a corresponding header, and/or forward a respective output to the next lower layer (e.g., its respective lower layer). The PDCP 224 may perform an IP-header compression and/or ciphering. The PDCP 224 may forward its output (e.g., a PDCP PDU, which is an RLC SDU) to the RLC 223. The RLC 223 may optionally perform segmentation (e.g., as shown for IP packet m in FIG. 4A). The RLC 223 may forward its outputs (e.g., two RLC PDUs, which are two MAC SDUs, generated by adding respective subheaders to two SDU segments (SDU Segs)) to the MAC 222. The MAC 222 may multiplex a quantity/number of RLC PDUs (MAC SDUs). The MAC 222 may attach a MAC subheader to an RLC PDU (MAC SDU) to form a TB. The MAC subheaders may be distributed across the MAC PDU (e.g., in an NR configuration as shown in FIG. 4A). The MAC subheaders may be entirely located at the beginning of a MAC PDU (e.g., in an LTE configuration). The NR MAC PDU structure may reduce a processing time and/or associated latency, for example, if the MAC PDU subheaders are computed before assembling the full MAC PDU.

FIG. 4B shows an example format of a MAC subheader in a MAC PDU. A MAC PDU may comprise a MAC subheader (H) and a MAC SDU. Each of one or more MAC subheaders may comprise an SDU length field for indicating the length (e.g., in bytes) of the MAC SDU to which the MAC subheader corresponds; a logical channel identifier (LCID) field for identifying/indicating the logical channel from which the MAC SDU originated to aid in the demultiplexing process; a flag (F) for indicating the size of the SDU length field; and a reserved bit (R) field for future use.

One or more MAC control elements (CEs) may be added to, or inserted into, the MAC PDU by a MAC layer, such as MAC 223 or MAC 222. As shown in FIG. 4B, two MAC CEs may be inserted/added before two MAC PDUs. The MAC CEs may be inserted/added at the beginning of a MAC PDU for downlink transmissions (as shown in FIG. 4B). One or more MAC CEs may be inserted/added at the end of a MAC PDU for uplink transmissions. MAC CEs may be used for in band control signaling. Example MAC CEs may comprise scheduling-related MAC CEs, such as buffer status reports and power headroom reports; activation/deactivation MAC CEs (e.g., MAC CEs for activation/deactivation of PDCP duplication detection, channel state information (CSI) reporting, sounding reference signal (SRS) transmission, and prior configured components); discontinuous reception (DRX)-related MAC CEs; timing advance MAC CEs; and random access-related MAC CEs. A MAC CE may be preceded by a MAC subheader with a similar format as described for the MAC subheader for MAC SDUs and may be identified with a reserved value in the LCID field that indicates the type of control information included in the corresponding MAC CE.

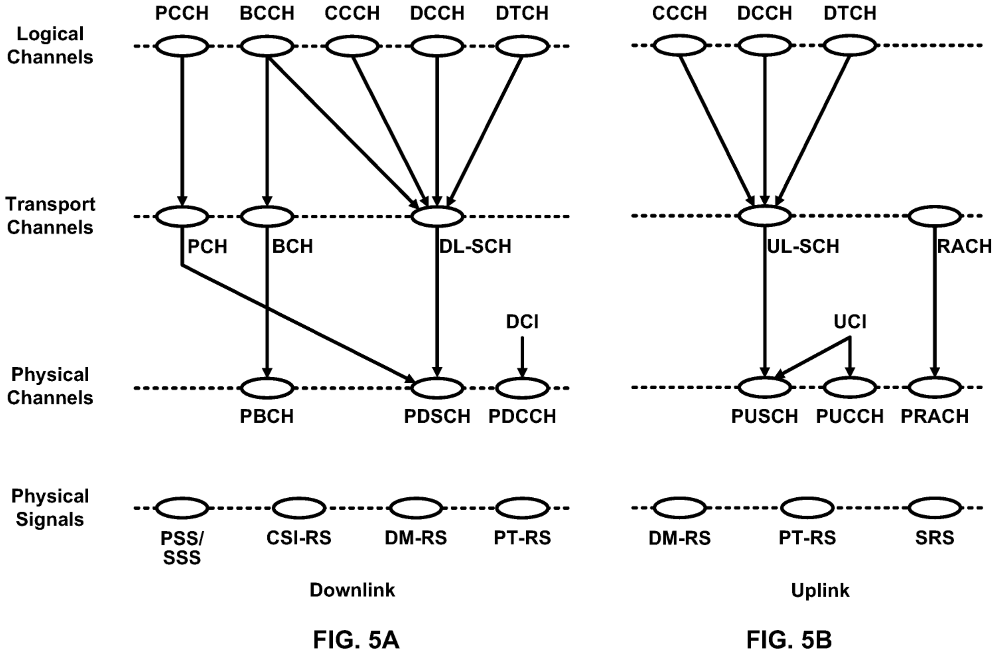

FIG. 5A shows an example mapping for downlink channels. The mapping for uplink channels may comprise mapping between channels (e.g., logical channels, transport channels, and physical channels) for downlink. FIG. 5B shows an example mapping for uplink channels. The mapping for uplink channels may comprise mapping between channels (e.g., logical channels, transport channels, and physical channels) for uplink. Information may be passed through/via channels between the RLC, the MAC, and the PHY layers of a protocol stack (e.g., the NR protocol stack). A logical channel may be used between the RLC and the MAC layers. The logical channel may be classified/indicated as a control channel that may carry control and/or configuration information (e.g., in the NR control plane), or as a traffic channel that may carry data (e.g., in the NR user plane). A logical channel may be classified/indicated as a dedicated logical channel that may be dedicated to a specific wireless device, and/or as a common logical channel that may be used by more than one wireless device (e.g., a group of wireless devices).

A logical channel may be defined by the type of information it carries. The set of logical channels (e.g., in an NR configuration) may comprise one or more channels described below. A paging control channel (PCCH) may comprise/carry one or more paging messages used to page a wireless device whose location is not known to the network on a cell level. A broadcast control channel (BCCH) may comprise/carry system information messages in the form of a master information block (MIB) and several system information blocks (SIBs). The system information messages may be used by wireless devices to obtain information about how a cell is configured and how to operate within the cell. A common control channel (CCCH) may comprise/carry control messages together with random access. A dedicated control channel (DCCH) may comprise/carry control messages to/from a specific wireless device to configure the wireless device with configuration information. A dedicated traffic channel (DTCH) may comprise/carry user data to/from a specific wireless device.

Transport channels may be used between the MAC and PHY layers. Transport channels may be defined by how the information they carry is sent/transmitted (e.g., via an over the air interface). The set of transport channels (e.g., that may be defined by an NR configuration or any other configuration) may comprise one or more of the following channels. A paging channel (PCH) may comprise/carry paging messages that originated from the PCCH. A broadcast channel (BCH) may comprise/carry the MIB from the BCCH. A downlink shared channel (DL-SCH) may comprise/carry downlink data and signaling messages, including the SIBs from the BCCH. An uplink shared channel (UL-SCH) may comprise/carry uplink data and signaling messages. A random access channel (RACH) may provide a wireless device with an access to the network without any prior scheduling.

The PHY layer may use physical channels to pass/transfer information between processing levels of the PHY layer. A physical channel may have an associated set of time-frequency resources for carrying the information of one or more transport channels. The PHY layer may generate control information to support the low-level operation of the PHY layer. The PHY layer may provide/transfer the control information to the lower levels of the PHY layer via physical control channels (e.g., referred to as L1/L2 control channels). The set of physical channels and physical control channels (e.g., that may be defined by an NR configuration or any other configuration) may comprise one or more of the following channels. A physical broadcast channel (PBCH) may comprise/carry the MIB from the BCH. A physical downlink shared channel (PDSCH) may comprise/carry downlink data and signaling messages from the DL-SCH, as well as paging messages from the PCH. A physical downlink control channel (PDCCH) may comprise/carry downlink control information (DCI), which may comprise downlink scheduling commands, uplink scheduling grants, and uplink power control commands. A physical uplink shared channel (PUSCH) may comprise/carry uplink data and signaling messages from the UL-SCH and in some instances uplink control information (UCI) as described below. A physical uplink control channel (PUCCH) may comprise/carry UCI, which may comprise HARQ acknowledgments, channel quality indicators (CQI), pre-coding matrix indicators (PMI), rank indicators (RI), and scheduling requests (SR). A physical random access channel (PRACH) may be used for random access.

The physical layer may generate physical signals to support the low-level operation of the physical layer, which may be similar to the physical control channels. As shown in FIG. 5A and FIG. 5B, the physical layer signals (e.g., that may be defined by an NR configuration or any other configuration) may comprise primary synchronization signals (PSS), secondary synchronization signals (SSS), channel state information reference signals (CSI-RS), demodulation reference signals (DM-RS), sounding reference signals (SRS), phase-tracking reference signals (PT-RS), and/or any other signals.

One or more of the channels (e.g., logical channels, transport channels, physical channels, etc.) may be used to carry out functions associated with the control plan protocol stack (e.g., NR control plane protocol stack). FIG. 2B shows an example control plane configuration (e.g., an NR control plane protocol stack). As shown in FIG. 2B, the control plane configuration (e.g., the NR control plane protocol stack) may use substantially the same/similar one or more protocol layers (e.g., PHY 211 and 221, MAC 212 and 222, RLC 213 and 223, and PDCP 214 and 224) as the example user plane configuration (e.g., the NR user plane protocol stack). Similar four protocol layers may comprise the PHYs 211 and 221, the MACs 212 and 222, the RLCs 213 and 223, and the PDCPs 214 and 224. The control plane configuration (e.g., the NR control plane stack) may have radio resource controls (RRCs) 216 and 226 and NAS protocols 217 and 237 at the top of the control plane configuration (e.g., the NR control plane protocol stack), for example, instead of having the SDAPs 215 and 225. The control plane configuration may comprise an AMF 230 comprising the NAS protocol 237.

The NAS protocols 217 and 237 may provide control plane functionality between the wireless device 210 and the AMF 230 (e.g., the AMF 158A or any other AMF) and/or, more generally, between the wireless device 210 and a CN (e.g., the CN 152 or any other CN). The NAS protocols 217 and 237 may provide control plane functionality between the wireless device 210 and the AMF 230 via signaling messages, referred to as NAS messages. There may be no direct path between the wireless device 210 and the AMF 230 via which the NAS messages may be transported. The NAS messages may be transported using the AS of the Uu and NG interfaces. The NAS protocols 217 and 237 may provide control plane functionality, such as authentication, security, a connection setup, mobility management, session management, and/or any other functionality.

The RRCs 216 and 226 may provide/configure control plane functionality between the wireless device 210 and the base station 220 and/or, more generally, between the wireless device 210 and the RAN (e.g., the base station 220). The RRC layers 216 and 226 may provide/configure control plane functionality between the wireless device 210 and the base station 220 via signaling messages, which may be referred to as RRC messages. The RRC messages may be sent/transmitted between the wireless device 210 and the RAN (e.g., the base station 220) using signaling radio bearers and the same/similar PDCP, RLC, MAC, and PHY protocol layers. The MAC layer may multiplex control-plane and user-plane data into the same TB. The RRC layers 216 and 226 may provide/configure control plane functionality, such as one or more of the following functionalities: broadcast of system information related to AS and NAS; paging initiated by the CN or the RAN; establishment, maintenance and release of an RRC connection between the wireless device 210 and the RAN (e.g., the base station 220); security functions including key management; establishment, configuration, maintenance and release of signaling radio bearers and data radio bearers; mobility functions; QoS management functions; wireless device measurement reporting (e.g., the wireless device measurement reporting) and control of the reporting; detection of and recovery from radio link failure (RLF); and/or NAS message transfer. As part of establishing an RRC connection, RRC layers 216 and 226 may establish an RRC context, which may involve configuring parameters for communication between the wireless device 210 and the RAN (e.g., the base station 220).

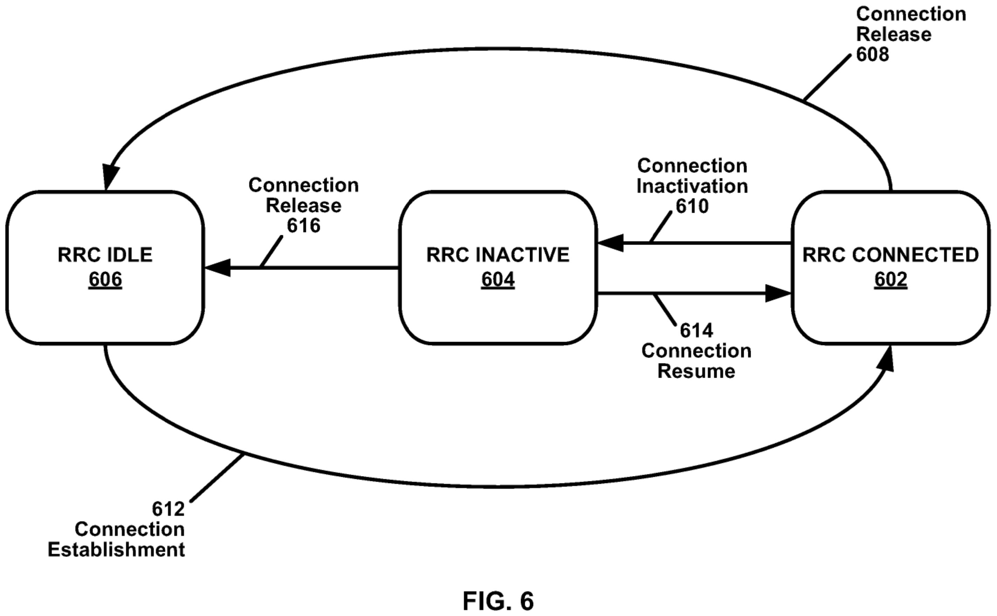

FIG. 6 shows example RRC states and RRC state transitions. An RRC state of a wireless device may be changed to another RRC state (e.g., RRC state transitions of a wireless device). The wireless device may be substantially the same or similar to the wireless device 106, 210, or any other wireless device. A wireless device may be in at least one of a plurality of states, such as three RRC states comprising RRC connected 602 (e.g., RRC_CONNECTED), RRC idle 606 (e.g., RRC_IDLE), and RRC inactive 604 (e.g., RRC_INACTIVE). The RRC inactive 604 may be RRC connected but inactive.

An RRC connection may be established for the wireless device. For example, this may be during an RRC connected state. During the RRC connected state (e.g., during the RRC connected 602), the wireless device may have an established RRC context and may have at least one RRC connection with a base station. The base station may be similar to one of the one or more base stations (e.g., one or more base stations of the RAN 104 shown in FIG. 1A, one of the gNBs 160 or ng-eNBs 162 shown in FIG. 1B, the base station 220 shown in FIG. 2A and FIG. 2B, or any other base stations). The base station with which the wireless device is connected (e.g., has established an RRC connection) may have the RRC context for the wireless device. The RRC context, which may be referred to as a wireless device context (e.g., the UE context), may comprise parameters for communication between the wireless device and the base station. These parameters may comprise, for example, one or more of: AS contexts; radio link configuration parameters; bearer configuration information (e.g., relating to a data radio bearer, a signaling radio bearer, a logical channel, a QoS flow, and/or a PDU session); security information; and/or layer configuration information (e.g., PHY, MAC, RLC, PDCP, and/or SDAP layer configuration information). During the RRC connected state (e.g., the RRC connected 602), mobility of the wireless device may be managed/controlled by an RAN (e.g., the RAN 104 or the NG RAN 154). The wireless device may measure received signal levels (e.g., reference signal levels, reference signal received power, reference signal received quality, received signal strength indicator, etc.) based on one or more signals sent from a serving cell and neighboring cells. The wireless device may report these measurements to a serving base station (e.g., the base station currently serving the wireless device). The serving base station of the wireless device may request a handover to a cell of one of the neighboring base stations, for example, based on the reported measurements. The RRC state may transition from the RRC connected state (e.g., RRC connected 602) to an RRC idle state (e.g., the RRC idle 606) via a connection release procedure 608. The RRC state may transition from the RRC connected state (e.g., RRC connected 602) to the RRC inactive state (e.g., RRC inactive 604) via a connection inactivation procedure 610.

An RRC context may not be established for the wireless device. For example, this may be during the RRC idle state. During the RRC idle state (e.g., the RRC idle 606), an RRC context may not be established for the wireless device. During the RRC idle state (e.g., the RRC idle 606), the wireless device may not have an RRC connection with the base station. During the RRC idle state (e.g., the RRC idle 606), the wireless device may be in a sleep state for the majority of the time (e.g., to conserve battery power). The wireless device may wake up periodically (e.g., once in every discontinuous reception (DRX) cycle) to monitor for paging messages (e.g., paging messages set from the RAN). Mobility of the wireless device may be managed by the wireless device via a procedure of a cell reselection. The RRC state may transition from the RRC idle state (e.g., the RRC idle 606) to the RRC connected state (e.g., the RRC connected 602) via a connection establishment procedure 612, which may involve a random access procedure.

A previously established RRC context may be maintained for the wireless device. For example, this may be during the RRC inactive state. During the RRC inactive state (e.g., the RRC inactive 604), the RRC context previously established may be maintained in the wireless device and the base station. The maintenance of the RRC context may enable/allow a fast transition to the RRC connected state (e.g., the RRC connected 602) with reduced signaling overhead as compared to the transition from the RRC idle state (e.g., the RRC idle 606) to the RRC connected state (e.g., the RRC connected 602). During the RRC inactive state (e.g., the RRC inactive 604), the wireless device may be in a sleep state and mobility of the wireless device may be managed/controlled by the wireless device via a cell reselection. The RRC state may transition from the RRC inactive state (e.g., the RRC inactive 604) to the RRC connected state (e.g., the RRC connected 602) via a connection resume procedure 614. The RRC state may transition from the RRC inactive state (e.g., the RRC inactive 604) to the RRC idle state (e.g., the RRC idle 606) via a connection release procedure 616 that may be the same as or similar to connection release procedure 608.

An RRC state may be associated with a mobility management mechanism. During the RRC idle state (e.g., RRC idle 606) and the RRC inactive state (e.g., the RRC inactive 604), mobility may be managed/controlled by the wireless device via a cell reselection. The purpose of mobility management during the RRC idle state (e.g., the RRC idle 606) or during the RRC inactive state (e.g., the RRC inactive 604) may be to enable/allow the network to be able to notify the wireless device of an event via a paging message without having to broadcast the paging message over the entire mobile communications network. The mobility management mechanism used during the RRC idle state (e.g., the RRC idle 606) or during the RRC idle state (e.g., the RRC inactive 604) may enable/allow the network to track the wireless device on a cell-group level, for example, so that the paging message may be broadcast over the cells of the cell group that the wireless device currently resides within (e.g. instead of sending the paging message over the entire mobile communication network). The mobility management mechanisms for the RRC idle state (e.g., the RRC idle 606) and the RRC inactive state (e.g., the RRC inactive 604) may track the wireless device on a cell-group level. The mobility management mechanisms may do the tracking, for example, using different granularities of grouping. There may be a plurality of levels of cell-grouping granularity (e.g., three levels of cell-grouping granularity: individual cells; cells within a RAN area identified by a RAN area identifier (RAI); and cells within a group of RAN areas, referred to as a tracking area and identified by a tracking area identifier (TAI)).

Tracking areas may be used to track the wireless device (e.g., tracking the location of the wireless device at the CN level). The CN (e.g., the CN 102, the 5G CN 152, or any other CN) may send to the wireless device a list of TAIs associated with a wireless device registration area (e.g., a UE registration area). A wireless device may perform a registration update with the CN to allow the CN to update the location of the wireless device and provide the wireless device with a new the UE registration area, for example, if the wireless device moves (e.g., via a cell reselection) to a cell associated with a TAI that may not be included in the list of TAIs associated with the UE registration area.

RAN areas may be used to track the wireless device (e.g., the location of the wireless device at the RAN level). For a wireless device in an RRC inactive state (e.g., the RRC inactive 604), the wireless device may be assigned/provided/configured with a RAN notification area. A RAN notification area may comprise one or more cell identities (e.g., a list of RAIs and/or a list of TAIs). A base station may belong to one or more RAN notification areas. A cell may belong to one or more RAN notification areas. A wireless device may perform a notification area update with the RAN to update the RAN notification area of the wireless device, for example, if the wireless device moves (e.g., via a cell reselection) to a cell not included in the RAN notification area assigned/provided/configured to the wireless device.

A base station storing an RRC context for a wireless device or a last serving base station of the wireless device may be referred to as an anchor base station. An anchor base station may maintain an RRC context for the wireless device at least during a period of time that the wireless device stays in a RAN notification area of the anchor base station and/or during a period of time that the wireless device stays in an RRC inactive state (e.g., RRC inactive 604).

A base station (e.g., gNBs 160 in FIG. 1B or any other base station) may be split into two parts: a central unit (e.g., a base station central unit, such as a gNB CU) and one or more distributed units (e.g., a base station distributed unit, such as a gNB DU). A base station central unit (CU) may be coupled to one or more base station distributed units (DUs) using an F1 interface (e.g., an F1 interface defined in an NR configuration). The base station CU may comprise the RRC, the PDCP, and the SDAP layers. A base station distributed unit (DU) may comprise the RLC, the MAC, and the PHY layers.

The physical signals and physical channels (e.g., described with respect to FIG. 5A and FIG. 5B) may be mapped onto one or more symbols (e.g., orthogonal frequency divisional multiplexing (OFDM) symbols in an NR configuration or any other symbols). OFDM is a multicarrier communication scheme that sends/transmits data over F orthogonal subcarriers (or tones). The data may be mapped to a series of complex symbols (e.g., M-quadrature amplitude modulation (M-QAM) symbols or M-phase shift keying (M PSK) symbols or any other modulated symbols), referred to as source symbols, and divided into F parallel symbol streams, for example, before transmission of the data. The F parallel symbol streams may be treated as if they are in the frequency domain. The F parallel symbols may be used as inputs to an Inverse Fast Fourier Transform (IFFT) block that transforms them into the time domain. The IFFT block may take in F source symbols at a time, one from each of the F parallel symbol streams. The IFFT block may use each source symbol to modulate the amplitude and phase of one of F sinusoidal basis functions that correspond to the F orthogonal subcarriers. The output of the IFFT block may be F time-domain samples that represent the summation of the F orthogonal subcarriers. The F time-domain samples may form a single OFDM symbol. An OFDM symbol provided/output by the IFFT block may be sent/transmitted over the air interface on a carrier frequency, for example, after one or more processes (e.g., addition of a cyclic prefix) and up-conversion. The F parallel symbol streams may be mixed, for example, using a Fast Fourier Transform (FFT) block before being processed by the IFFT block. This operation may produce Discrete Fourier Transform (DFT)-precoded OFDM symbols and may be used by one or more wireless devices in the uplink to reduce the peak to average power ratio (PAPR). Inverse processing may be performed on the OFDM symbol at a receiver using an FFT block to recover the data mapped to the source symbols.

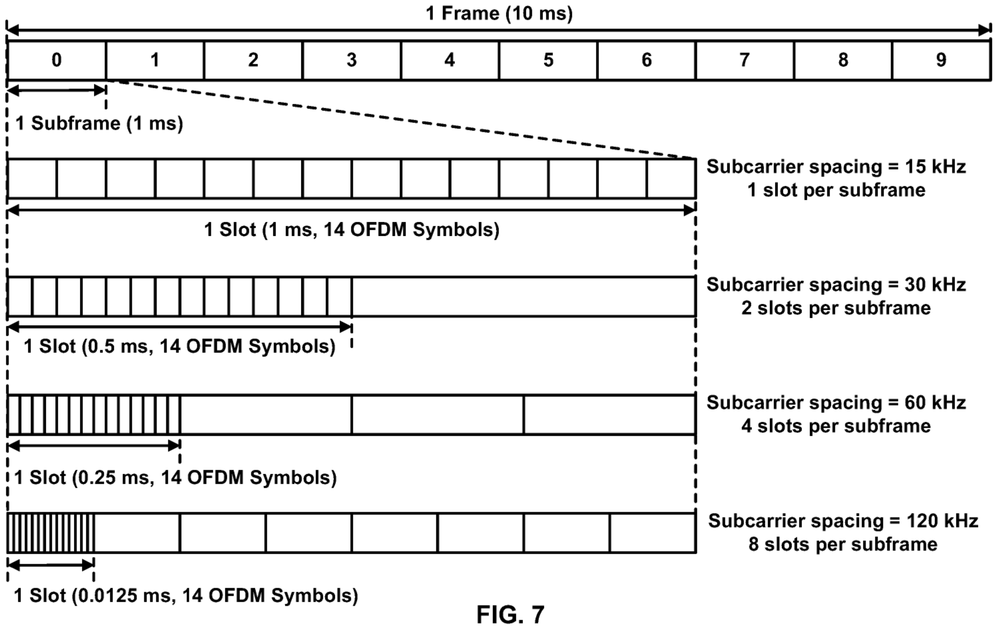

FIG. 7 shows an example configuration of a frame. The frame may comprise, for example, an NR radio frame into which OFDM symbols may be grouped. A frame (e.g., an NR radio frame) may be identified/indicated by a system frame quantity/number (SFN) or any other value. The SFN may repeat with a period of 1024 frames. One NR frame may be 10 milliseconds (ms) in duration and may comprise 10 subframes that are 1 ms in duration. A subframe may be divided into one or more slots (e.g., depending on numerologies and/or different subcarrier spacings). Each of the one or more slots may comprise, for example, 14 OFDM symbols per slot. Any quantity of symbols, slots, or duration may be used for any time interval.

The duration of a slot may depend on the numerology used for the OFDM symbols of the slot. A flexible numerology may be supported, for example, to accommodate different deployments (e.g., cells with carrier frequencies below 1 GHz up to cells with carrier frequencies in the mm-wave range). A flexible numerology may be supported, for example, in an NR configuration or any other radio configurations. A numerology may be defined in terms of subcarrier spacing and/or cyclic prefix duration. Subcarrier spacings may be scaled up by powers of two from a baseline subcarrier spacing of 15 kHz. Cyclic prefix durations may be scaled down by powers of two from a baseline cyclic prefix duration of 4.7

μs, for example, for a numerology in an NR configuration or any other radio configurations. Numerologies may be defined with the following subcarrier spacing/cyclic prefix duration combinations: 15 kHz/4.7 μs; 30 kHz/2.3 μs; 60 kHz/1.2 μs; 120 kHz/0.59 μs; 240 kHz/0.29 μs, and/or any other subcarrier spacing/cyclic prefix duration combinations.

A slot may have a fixed quantity/number of OFDM symbols (e.g., 14 OFDM symbols). A numerology with a higher subcarrier spacing may have a shorter slot duration and more slots per subframe. Examples of numerology-dependent slot duration and slots-per-subframe transmission structure are shown in FIG. 7 (the numerology with a subcarrier spacing of 240 kHz is not shown in FIG. 7). A subframe (e.g., in an NR configuration) may be used as a numerology-independent time reference. A slot may be used as the unit upon which uplink and downlink transmissions are scheduled. Scheduling (e.g., in an NR configuration) may be decoupled from the slot duration. Scheduling may start at any OFDM symbol. Scheduling may last for as many symbols as needed for a transmission, for example, to support low latency. These partial slot transmissions may be referred to as mini-slot or sub-slot transmissions.

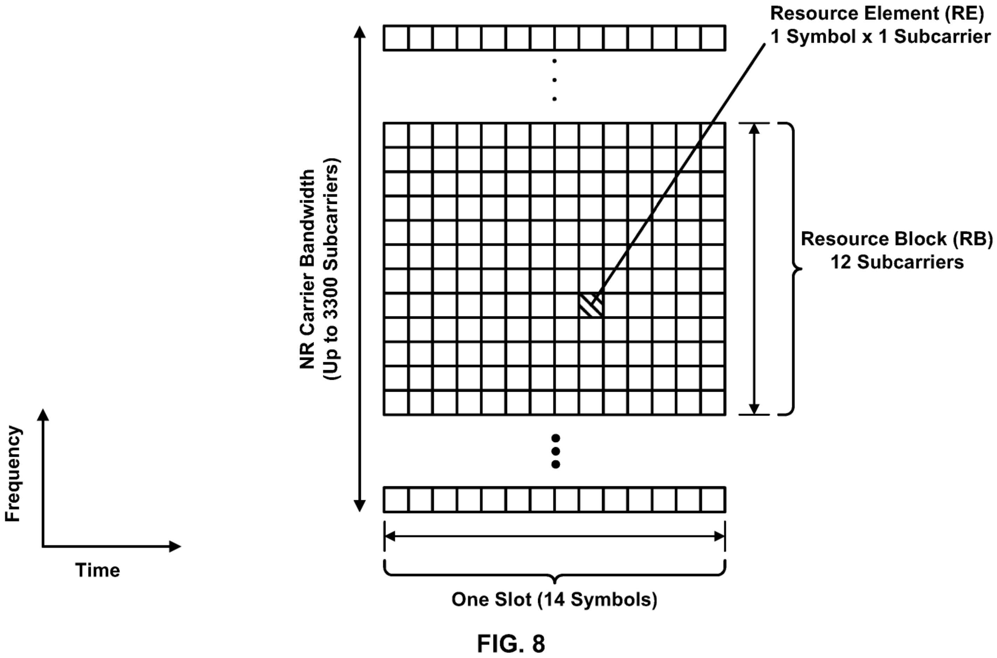

FIG. 8 shows an example resource configuration of one or more carriers. The resource configuration of may comprise a slot in the time and frequency domain for an NR carrier or any other carrier. The slot may comprise resource elements (REs) and resource blocks (RBs). A resource element (RE) may be the smallest physical resource (e.g., in an NR configuration). An RE may span one OFDM symbol in the time domain by one subcarrier in the frequency domain, such as shown in FIG. 8. An RB may span twelve consecutive REs in the frequency domain, such as shown in FIG. 8. A carrier (e.g., an NR carrier) may be limited to a width of a certain quantity of RBs and/or subcarriers (e.g., 275 RBs or $275 \times 12 = 3300$ subcarriers). Such limitation(s), if used, may limit the carrier (e.g., NR carrier) frequency based on subcarrier spacing (e.g., carrier frequency of 50, 100, 200, and 400 MHz for subcarrier spacings of 15, 30, 60, and 120 kHz, respectively). A 400 MHz bandwidth may be set based on a 400 MHz per carrier bandwidth limit. Any other bandwidth may be set based on a per carrier bandwidth limit.

A single numerology may be used across the entire bandwidth of a carrier (e.g., an NR such as shown in FIG. 8). In other example configurations, multiple numerologies may be supported on the same carrier. NR and/or other access technologies may support wide carrier bandwidths (e.g., up to 400 MHz for a subcarrier spacing of 120 kHz). Not all wireless devices may be able to receive the full carrier bandwidth (e.g., due to hardware limitations and/or different wireless device capabilities). Receiving and/or utilizing the full carrier bandwidth may be prohibitive, for example, in terms of wireless device power consumption. A wireless device may adapt the size of the receive bandwidth of the wireless device, for example, based on the amount of traffic the wireless device is scheduled to receive (e.g., to reduce power consumption and/or for other purposes). Such an adaptation may be referred to as bandwidth adaptation.

Configuration of one or more bandwidth parts (BWPs) may support one or more wireless devices not capable of receiving the full carrier bandwidth. BWPs may support bandwidth adaptation, for example, for such wireless devices not capable of receiving the full carrier bandwidth. A BWP (e.g., a BWP of an NR configuration) may be defined by a subset of contiguous RBs on a carrier. A wireless device may be configured (e.g., via an RRC layer) with one or more downlink BWPs per serving cell and one or more uplink BWPs per serving cell (e.g., up to four downlink BWPs per serving cell and up to four uplink BWPs per serving cell). One or more of the configured BWPs for a serving cell may be active, for example, at a given time. The one or more BWPs may be referred to as active BWPs of the serving cell. A serving cell may have one or more first active BWPs in the uplink carrier and one or more second active BWPs in the secondary uplink carrier, for example, if the serving cell is configured with a secondary uplink carrier.

A downlink BWP from a set of configured downlink BWPs may be linked with an uplink BWP from a set of configured uplink BWPs (e.g., for unpaired spectra). A downlink BWP and an uplink BWP may be linked, for example, if a downlink BWP index of the downlink BWP and an uplink BWP index of the uplink BWP are the same. A wireless device may expect that the center frequency for a downlink BWP is the same as the center frequency for an uplink BWP (e.g., for unpaired spectra).

A base station may configure a wireless device with one or more control resource sets (CORESETs) for at least one search space. The base station may configure the wireless device with one or more CORESETS, for example, for a downlink BWP in a set of configured downlink BWPs on a primary cell (PCell) or on a secondary cell (SCell). A search space may comprise a set of locations in the time and frequency domains where the wireless device may monitor/find/-detect/identify control information. The search space may be a wireless device-specific search space (e.g., a UE-specific search space) or a common search space (e.g., potentially usable by a plurality of wireless devices or a group of wireless user devices). A base station may configure a group of wireless devices with a common search space, on a PCell or on a primary secondary cell (PSCell), in an active downlink BWP.

A base station may configure a wireless device with one or more resource sets for one or more PUCCH transmissions, for example, for an uplink BWP in a set of configured uplink BWPs. A wireless device may receive downlink receptions (e.g., PDCCH or PDSCH) in a downlink BWP, for example, according to a configured numerology (e.g., a configured subcarrier spacing and/or a configured cyclic prefix duration) for the downlink BWP. The wireless device may send/transmit uplink transmissions (e.g., PUCCH or PUSCH) in an uplink BWP, for example, according to a configured numerology (e.g., a configured subcarrier spacing and/or a configured cyclic prefix length for the uplink BWP).

One or more BWP indicator fields may be provided/comprised in Downlink Control Information (DCI). A value of a BWP indicator field may indicate which BWP in a set of configured BWPs is an active downlink BWP for one or more downlink receptions. The value of the one or more BWP indicator fields may indicate an active uplink BWP for one or more uplink transmissions.

A base station may semi-statically configure a wireless device with a default downlink BWP within a set of configured downlink BWPs associated with a PCell. A default downlink BWP may be an initial active downlink BWP, for example, if the base station does not provide/configure a default downlink BWP to/for the wireless device. The wireless device may determine which BWP is the initial active downlink BWP, for example, based on a CORESET configuration obtained using the PBCH.

A base station may configure a wireless device with a BWP inactivity timer value for a PCell. The wireless device may start or restart a BWP inactivity timer at any appropriate time. The wireless device may start or restart the BWP inactivity timer, for example, if one or more conditions are satisfied. The one or more conditions may comprise at least one of: the wireless device detects DCI indicating an active downlink BWP other than a default downlink BWP for a paired spectra operation; the wireless device detects DCI indicating an active downlink BWP other than a default downlink BWP for an unpaired spectra operation; and/or the wireless device detects DCI indicating an active uplink BWP other than a default uplink BWP for an unpaired spectra operation. The wireless device may start/run the BWP inactivity timer toward expiration (e.g., increment from zero to the BWP inactivity timer value, or decrement from the BWP inactivity timer value to zero), for example, if the wireless device does not detect DCI during a time interval (e.g., 1 ms or 0.5 ms). The wireless device may switch from the active downlink BWP to the default downlink BWP, for example, if the BWP inactivity timer expires.

A base station may semi-statically configure a wireless device with one or more BWPs. A wireless device may switch an active BWP from a first BWP to a second BWP, for example, based on (e.g., after or in response to) receiving DCI indicating the second BWP as an active BWP. A wireless device may switch an active BWP from a first BWP to a second BWP, for example, based on (e.g., after or in response to) an expiry of the BWP inactivity timer (e.g., if the second BWP is the default BWP).

A downlink BWP switching may refer to switching an active downlink BWP from a first downlink BWP to a second downlink BWP (e.g., the second downlink BWP is activated and the first downlink BWP is deactivated). An uplink BWP switching may refer to switching an active uplink BWP from a first uplink BWP to a second uplink BWP (e.g., the second uplink BWP is activated and the first uplink BWP is deactivated). Downlink and uplink BWP switching may be performed independently (e.g., in paired spectrum/spectra). Downlink and uplink BWP switching may be performed simultaneously (e.g., in unpaired spectrum/spectra). Switching between configured BWPs may occur, for example, based on RRC signaling, DCI signaling, expiration of a BWP inactivity timer, and/or an initiation of random access.

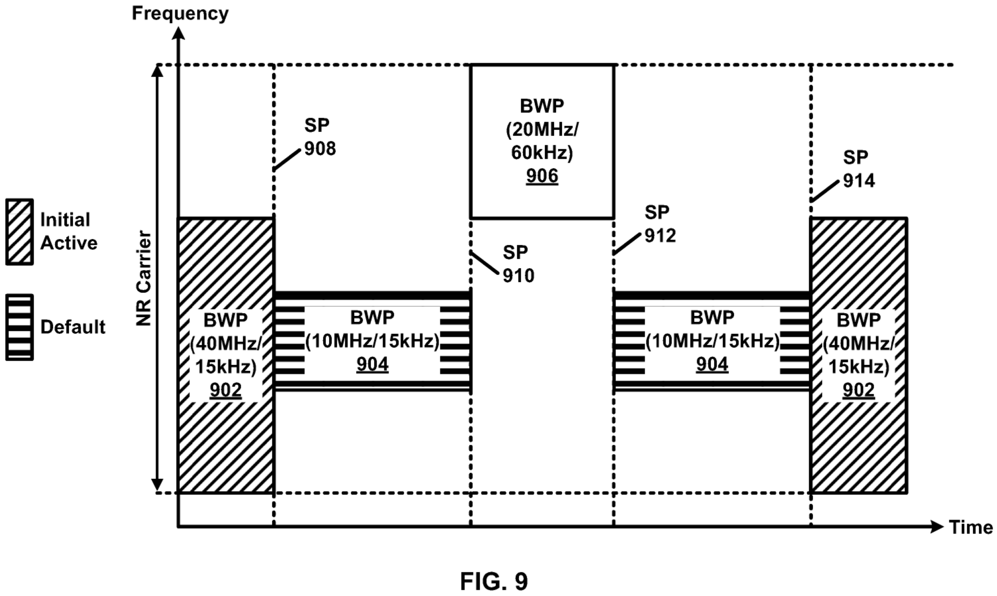

FIG. 9 shows an example of configured BWPs. Bandwidth adaptation using multiple BWPs (e.g., three configured BWPs for an NR carrier) may be available. A wireless device configured with multiple BWPs (e.g., the three BWPs) may switch from one BWP to another BWP at a switching point. The BWPs may comprise: a BWP 902 having a bandwidth of 40 MHz and a subcarrier spacing of 15 kHz; a BWP 904 having a bandwidth of 10 MHz and a subcarrier spacing of 15 kHz; and a BWP 906 having a bandwidth of 20 MHz and a subcarrier spacing of 60 kHz. The BWP 902 may be an initial active BWP, and the BWP 904 may be a default BWP. The wireless device may switch between BWPs at switching points. The wireless device may switch from the BWP 902 to the BWP 904 at a switching point 908. The switching at the switching point 908 may occur for any suitable reasons. The switching at a switching point 908 may occur, for example, based on (e.g., after or in response to) an expiry of a BWP inactivity timer (e.g., indicating switching to the default BWP). The switching at the switching point 908 may occur, for example, based on (e.g., after or in response to) receiving DCI indicating BWP 904 as the active BWP. The wireless device may switch at a switching point 910 from an active BWP 904 to the BWP 906, for example, after or in response to receiving DCI indicating BWP 906 as a new active BWP. The wireless device may switch at a switching point 912 from an active BWP 906 to the BWP 904, for example, a based on (e.g., after or in response to) an expiry of a BWP inactivity timer. The wireless device may switch at the switching point 912 from an active BWP 906 to the BWP 904, for example, after or in response to receiving DCI indicating BWP 904 as a new active BWP. The wireless device may switch at a switching point 914 from an active BWP 904 to the BWP 902, for example, after or in response to receiving DCI indicating the BWP 902 as a new active BWP.

Wireless device procedures for switching BWPs on a secondary cell may be the same/similar as those on a primary cell, for example, if the wireless device is configured for a secondary cell with a default downlink BWP in a set of configured downlink BWPs and a timer value. The wireless device may use the timer value and the default downlink BWP for the secondary cell in the same/similar manner as the wireless device uses the timer value and/or default BWPs for a primary cell. The timer value (e.g., the BWP inactivity timer) may be configured per cell (e.g., for one or more BWPs), for example, via RRC signaling or any other signaling. One or more active BWPs may switch to another BWP, for example, based on an expiration of the BWP inactivity timer.

Two or more carriers may be aggregated and data may be simultaneously sent/transmitted to/from the same wireless device using carrier aggregation (CA) (e.g., to increase data rates). The aggregated carriers in CA may be referred to as component carriers (CCs). There may be a quantity/number of serving cells for the wireless device (e.g., one

14

serving cell for a CC), for example, if CA is configured/used. The CCs may have multiple configurations in the frequency domain.

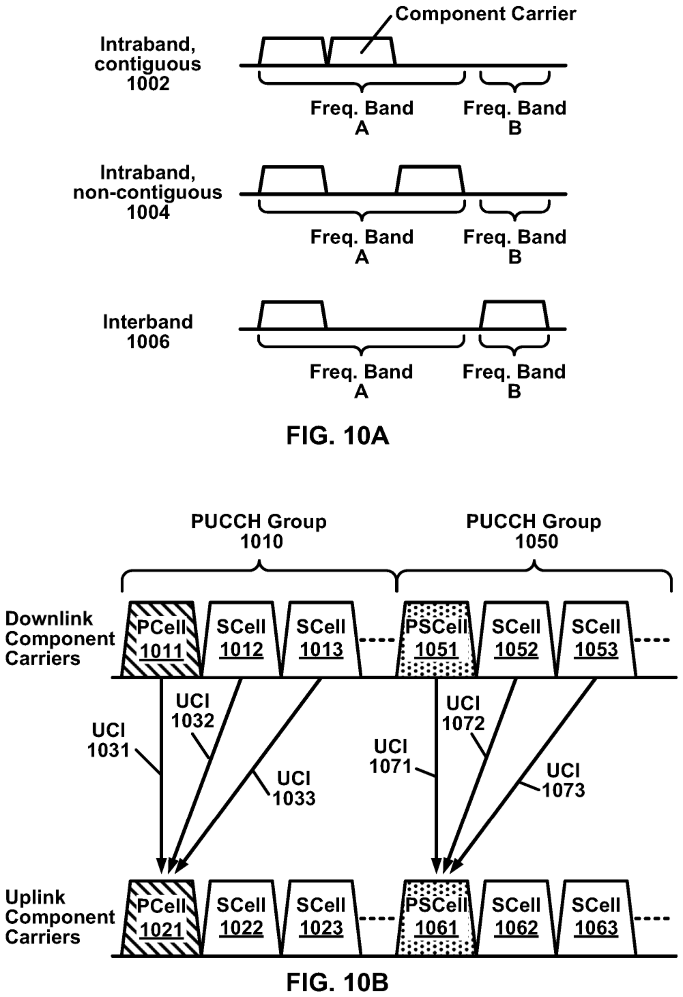

FIG. 10A shows example CA configurations based on CCs. As shown in FIG. 10A, three types of CA configurations may comprise an intraband (contiguous) configuration 1002, an intraband (non-contiguous) configuration 1004, and/or an interband configuration 1006. In the intraband (contiguous) configuration 1002, two CCs may be aggregated in the same frequency band (frequency band A) and may be located directly adjacent to each other within the frequency band. In the intraband (non-contiguous) configuration 1004, two CCs may be aggregated in the same frequency band (frequency band A) but may be separated from each other in the frequency band by a gap. In the interband configuration 1006, two CCs may be located in different frequency bands (e.g., frequency band A and frequency band B, respectively).

A network may set the maximum quantity of CCs that can be aggregated (e.g., up to 32 CCs may be aggregated in NR, or any other quantity may be aggregated in other systems). The aggregated CCs may have the same or different bandwidths, subcarrier spacing, and/or duplexing schemes (TDD, FDD, or any other duplexing schemes). A serving cell for a wireless device using CA may have a downlink CC. One or more uplink CCs may be optionally configured for a serving cell (e.g., for FDD). The ability to aggregate more downlink carriers than uplink carriers may be useful, for example, if the wireless device has more data traffic in the downlink than in the uplink.

One of the aggregated cells for a wireless device may be referred to as a primary cell (PCell), for example, if a CA is configured. The PCell may be the serving cell that the wireless initially connects to or access to, for example, during or at an RRC connection establishment, an RRC connection reestablishment, and/or a handover. The PCell may provide/-configure the wireless device with NAS mobility information and the security input. Wireless device may have different PCells. For the downlink, the carrier corresponding to the PCell may be referred to as the downlink primary CC (DL PCC). For the uplink, the carrier corresponding to the PCell may be referred to as the uplink primary CC (UL PCC). The other aggregated cells (e.g., associated with CCs other than the DL PCC and UL PCC) for the wireless device may be referred to as secondary cells (SCells). The SCells may be configured, for example, after the PCell is configured for the wireless device. An SCell may be configured via an RRC connection reconfiguration procedure. For the downlink, the carrier corresponding to an SCell may be referred to as a downlink secondary CC (DL SCC). For the uplink, the carrier corresponding to the SCell may be referred to as the uplink secondary CC (UL SCC).

Configured SCells for a wireless device may be activated or deactivated, for example, based on traffic and channel conditions. Deactivation of an SCell may cause the wireless device to stop PDCCH and PDSCH reception on the SCell and PUSCH, SRS, and CQI transmissions on the SCell. Configured SCells may be activated or deactivated, for example, using a MAC CE (e.g., the MAC CE described with respect to FIG. 4B). A MAC CE may use a bitmap (e.g., one bit per SCell) to indicate which SCells (e.g., in a subset of configured SCells) for the wireless device are activated or deactivated. Configured SCells may be deactivated, for example, based on (e.g., after or in response to) an expiration of an SCell deactivation timer (e.g., one SCell deactivation timer per SCell may be configured).

DCI may comprise control information, such as scheduling assignments and scheduling grants, for a cell. DCI may be sent/transmitted via the cell corresponding to the scheduling assignments and/or scheduling grants, which may be referred to as a self-scheduling. DCI comprising control information for a cell may be sent/transmitted via another cell, which may be referred to as a cross-carrier scheduling. Uplink control information (UCI) may comprise control information, such as HARQ acknowledgments and channel state feedback (e.g., CQI, PMI, and/or RI) for aggregated cells. UCI may be sent/transmitted via an uplink control channel (e.g., a PUCCH) of the PCell or a certain SCell (e.g., an SCell configured with PUCCH). For a larger quantity/number of aggregated downlink CCs, the PUCCH of the PCell may become overloaded. Cells may be divided into multiple PUCCH groups.

FIG. 10B shows example group of cells. Aggregated cells may be configured into one or more PUCCH groups (e.g., as shown in FIG. 10B). One or more cell groups or one or more uplink control channel groups (e.g., a PUCCH group 1010 and a PUCCH group 1050) may comprise one or more downlink CCs, respectively. The PUCCH group 1010 may comprise one or more downlink CCs, for example, three downlink CCs: a PCell 1011 (e.g., a DL PCC), an SCell 1012 (e.g., a DL SCC), and an SCell 1013 (e.g., a DL SCC). The PUCCH group 1050 may comprise one or more downlink CCs, for example, three downlink CCs: a PUCCH SCell (or PSCell) 1051 (e.g., a DL SCC), an SCell 1052 (e.g., a DL SCC), and an SCell 1053 (e.g., a DL SCC). One or more uplink CCs of the PUCCH group 1010 may be configured as a PCell 1021 (e.g., a UL PCC), an SCell 1022 (e.g., a UL SCC), and an SCell 1023 (e.g., a UL SCC). One or more uplink CCs of the PUCCH group 1050 may be configured as a PUCCH SCell (or PSCell) 1061 (e.g., a UL SCC), an SCell 1062 (e.g., a UL SCC), and an SCell 1063 (e.g., a UL SCC). UCI related to the downlink CCs of the PUCCH group 1010, shown as UCI 1031, UCI 1032, and UCI 1033, may be sent/transmitted via the uplink of the PCell 1021 (e.g., via the PUCCH of the PCell 1021). UCI related to the downlink CCs of the PUCCH group 1050, shown as UCI 1071, UCI 1072, and UCI 1073, may be sent/transmitted via the uplink of the PUCCH SCell (or PSCell) 1061 (e.g., via the PUCCH of the PUCCH SCell 1061). A single uplink PCell may be configured to send/transmit UCI relating to the six downlink CCs, for example, if the aggregated cells shown in FIG. 10B are not divided into the PUCCH group 1010 and the PUCCH group 1050. The PCell 1021 may become overloaded, for example, if the UCIs 1031, 1032, 1033, 1071, 1072, and 1073 are sent/transmitted via the PCell 1021. By dividing transmissions of UCI between the PCell 1021 and the PUCCH SCell (or PSCell) 1061, overloading may be prevented and/or reduced.

A PCell may comprise a downlink carrier (e.g., the PCell 1011) and an uplink carrier (e.g., the PCell 1021). An SCell may comprise only a downlink carrier. A cell, comprising a downlink carrier and optionally an uplink carrier, may be assigned with a physical cell ID and a cell index. The physical cell ID or the cell index may indicate/identify a downlink carrier and/or an uplink carrier of the cell, for example, depending on the context in which the physical cell ID is used. A physical cell ID may be determined, for example, using a synchronization signal (e.g., PSS and/or SSS) sent/transmitted via a downlink component carrier. A cell index may be determined, for example, using one or more RRC messages. A physical cell ID may be referred to as a carrier ID, and a cell index may be referred to as a carrier index. A first physical cell ID for a first downlink carrier may refer to the first physical cell ID for a cell comprising the first downlink carrier. Substantially the same/similar concept may apply to, for example, a carrier activation. Activation of a first carrier may refer to activation of a cell comprising the first carrier.

A multi-carrier nature of a PHY layer may be exposed/indicated to a MAC layer (e.g., in a CA configuration). A HARQ entity may operate on a serving cell. A transport block may be generated per assignment/grant per serving cell. A transport block and potential HARQ retransmissions of the transport block may be mapped to a serving cell.

For the downlink, a base station may send/transmit (e.g., unicast, multicast, and/or broadcast), to one or more wireless devices, one or more reference signals (RSs) (e.g., PSS, SSS, CSI-RS, DM-RS, and/or PT-RS). For the uplink, the one or more wireless devices may send/transmit one or more RSs to the base station (e.g., DM-RS, PT-RS, and/or SRS). The PSS and the SSS may be sent/transmitted by the base station and used by the one or more wireless devices to synchronize the one or more wireless devices with the base station. A synchronization signal (SS) / physical broadcast channel (PBCH) block may comprise the PSS, the SSS, and the PBCH. The base station may periodically send/transmit a burst of SS/PBCH blocks, which may be referred to as SSBs.

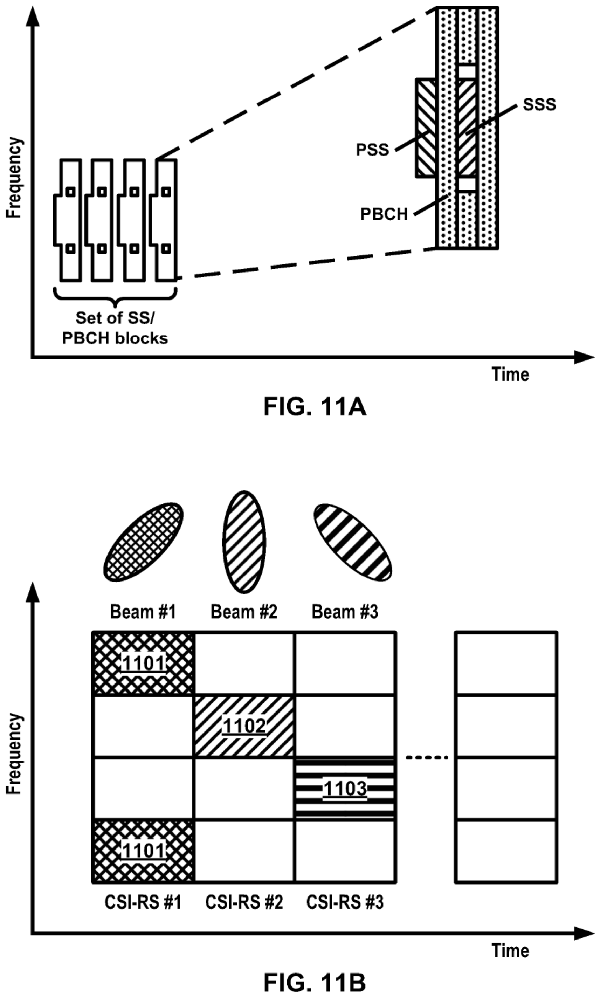

FIG. 11A shows an example mapping of one or more SS/PBCH blocks. A burst of SS/PBCH blocks may comprise one or more SS/PBCH blocks (e.g., 4 SS/PBCH blocks, as shown in FIG. 11A). Bursts may be sent/transmitted periodically (e.g., every 2 frames, 20 ms, or any other durations). A burst may be restricted to a half-frame (e.g., a first half-frame having a duration of 5 ms). Such parameters (e.g., the quantity/number of SS/PBCH blocks per burst, periodicity of bursts, position of the burst within the frame) may be configured, for example, based on at least one of: a carrier frequency of a cell in which the SS/PBCH block is sent/transmitted; a numerology or subcarrier spacing of the cell; a configuration by the network (e.g., using RRC signaling); and/or any other suitable factor(s). A wireless device may assume a subcarrier spacing for the SS/PBCH block based on the carrier frequency being monitored, for example, unless the radio network configured the wireless device to assume a different subcarrier spacing.

The SS/PBCH block may span one or more OFDM symbols in the time domain (e.g., 4 OFDM symbols, as shown in FIG. 11A or any other quantity/number of symbols) and may span one or more subcarriers in the frequency domain (e.g., 240 contiguous subcarriers or any other quantity/number of subcarriers). The PSS, the SSS, and the PBCH may have a common center frequency. The PSS may be sent/transmitted first and may span, for example, 1 OFDM symbol and 127 subcarriers. The SSS may be sent/transmitted after the PSS (e.g., two symbols later) and may span 1 OFDM symbol and 127 subcarriers. The PBCH may be sent/transmitted after the PSS (e.g., across the next 3 OFDM symbols) and may span 240 subcarriers (e.g., in the second and fourth OFDM symbols as shown in FIG. 11A) and/or may span fewer than 240 subcarriers (e.g., in the third OFDM symbols as shown in FIG. 11A).

The location of the SS/PBCH block in the time and frequency domains may not be known to the wireless device (e.g., if the wireless device is searching for the cell). The wireless device may monitor a carrier for the PSS, for example, to find and select the cell. The wireless device may monitor a frequency location within the carrier. The wireless device may search for the PSS at a different frequency location within the carrier, for example, if the PSS is not found after a certain duration (e.g., 20 ms). The wireless device may search for the PSS at a different frequency location within the carrier, for example, as indicated by a synchronization raster. The wireless device may determine the locations of the SSS and the PBCH, respectively, for example, based on a known structure of the SS/PBCH block if the PSS is found at a location in the time and frequency domains. The SS/PBCH block may be a cell-defining SS block (CD-SSB). A primary cell may be associated with a CD-SSB. The CD-SSB may be located on a synchronization raster. A cell selection/search and/or reselection may be based on the CD-SSB.

The SS/PBCH block may be used by the wireless device to determine one or more parameters of the cell. The wireless device may determine a physical cell identifier (PCI) of the cell, for example, based on the sequences of the PSS and the SSS, respectively. The wireless device may determine a location of a frame boundary of the cell, for example, based on the location of the SS/PBCH block. The SS/PBCH block may indicate that it has been sent/transmitted in accordance with a transmission pattern. An SS/PBCH block in the transmission pattern may be a known distance from the frame boundary (e.g., a predefined distance for a RAN configuration among one or more networks, one or more base stations, and one or more wireless devices).

The PBCH may use a QPSK modulation and/or forward error correction (FEC). The FEC may use polar coding. One or more symbols spanned by the PBCH may comprise/carry one or more DM-RSs for demodulation of the PBCH. The PBCH may comprise an indication of a current system frame quantity/number (SFN) of the cell and/or a SS/PBCH block timing index. These parameters may facilitate time synchronization of the wireless device to the base station. The PBCH may comprise a MIB used to send/transmit to the wireless device one or more parameters. The MIB may be used by the wireless device to locate remaining minimum system information (RMSI) associated with the cell. The RMSI may comprise a System Information Block Type 1 (SIB1). The SIB1 may comprise information for the wireless device to access the cell. The wireless device may use one or more parameters of the MIB to monitor a PDCCH, which may be used to schedule a PDSCH. The PDSCH may comprise the SIB1. The SIB1 may be decoded using parameters provided/comprised in the MIB. The PBCH may indicate an absence of SIBI.The wireless device may be pointed to a frequency, for example, based on the PBCH indicating the absence of SIB1. The wireless device may search for an SS/PBCH block at the frequency to which the wireless device is pointed.

The wireless device may assume that one or more SS/PBCH blocks sent/transmitted with a same SS/PBCH block index are quasi co-located (QCLed) (e.g., having substantially the same/similar Doppler spread, Doppler shift, average gain, average delay, and/or spatial Rx parameters). The wireless device may not assume QCL for SS/PBCH block transmissions having different SS/PBCH block indices. SS/PBCH blocks (e.g., those within a half-frame) may be sent/transmitted in spatial directions (e.g., using different beams that span a coverage area of the cell). A first SS/PBCH block may be sent/transmitted in a first spatial direction using a first beam, a second SS/PBCH block may be sent/transmitted in a second spatial direction using a second beam, a third SS/PBCH block may be sent/transmitted in a third spatial direction using a third beam, a fourth SS/PBCH block may be sent/transmitted in a fourth spatial direction using a fourth beam, etc.

A base station may send/transmit a plurality of SS/PBCH blocks, for example, within a frequency span of a carrier. A first PCI of a first SS/PBCH block of the plurality of SS/PBCH blocks may be different from a second PCI of a second SS/PBCH block of the plurality of SS/PBCH blocks. The PCIs of SS/PBCH blocks sent/transmitted in different frequency locations may be different or substantially the same.

The CSI-RS may be sent/transmitted by the base station and used by the wireless device to acquire/obtain/determine channel state information (CSI). The base station may configure the wireless device with one or more CSI-RSs for channel estimation or any other suitable purpose. The base station may configure a wireless device with one or more of the same/similar CSI-RSs. The wireless device may measure the one or more CSI-RSs. The wireless device may estimate a downlink channel state and/or generate a CSI report, for example, based on the measuring of the one or more downlink CSI-RSs. The wireless device may send/transmit the CSI report to the base station (e.g., based on periodic CSI reporting, semi-persistent CSI reporting, and/or aperiodic CSI reporting). The base station may use feedback provided by the wireless device (e.g., the estimated downlink channel state) to perform a link adaptation.

The base station may semi-statically configure the wireless device with one or more CSI-RS resource sets. A CSI-RS resource may be associated with a location in the time and frequency domains and a periodicity. The base station may selectively activate and/or deactivate a CSI-RS resource. The base station may indicate to the wireless device that a CSI-RS resource in the CSI-RS resource set is activated and/or deactivated.

The base station may configure the wireless device to report CSI measurements. The base station may configure the wireless device to provide CSI reports periodically, aperiodically, or semi-persistently. For periodic CSI reporting, the wireless device may be configured with a timing and/or periodicity of a plurality of CSI reports. For aperiodic CSI reporting, the base station may request a CSI report. The base station may command the wireless device to measure a configured CSI-RS resource and provide a CSI report relating to the measurement(s). For semi-persistent CSI reporting, the base station may configure the wireless device to send/transmit periodically, and selectively activate or deactivate the periodic reporting (e.g., via one or more activation/deactivation MAC CEs and/or one or more DCIs). The base station may configure the wireless device with a CSI-RS resource set and CSI reports, for example, using RRC signaling.

The CSI-RS configuration may comprise one or more parameters indicating, for example, up to 32 antenna ports (or any other quantity of antenna ports). The wireless device may be configured to use/employ the same OFDM symbols for a downlink CSI-RS and a CORESET, for example, if the downlink CSI-RS and CORESET are spatially QCLed and resource elements associated with the downlink CSI-RS are outside of the physical resource blocks (PRBs) configured for the CORESET. The wireless device may be configured to use/employ the same OFDM symbols for a downlink CSI-RS and SS/PBCH blocks, for example, if the downlink CSI-RS and SS/PBCH blocks are spatially QCLed and resource elements associated with the downlink CSI-RS are outside of PRBs configured for the SS/PBCH blocks.

Downlink DM-RSs may be sent/transmitted by a base station and received/used by a wireless device for a channel estimation. The downlink DM-RSs may be used for coherent demodulation of one or more downlink physical channels (e.g., PDSCH). A network (e.g., an NR network) may support one or more variable and/or configurable DM-RS patterns for data demodulation. At least one downlink DM-RS configuration may support a front-loaded DM-RS pattern. A front-loaded DM-RS may be mapped over one or more OFDM symbols (e.g., one or two adjacent OFDM symbols). A base station may semi-statically configure the wireless device with a quantity/number (e.g. a maximum quantity/number) of front-loaded DM-RS symbols for a PDSCH. A DM-RS configuration may support one or more DM-RS ports. A DM-RS configuration may support up to eight orthogonal downlink DM-RS ports per wireless device (e.g., for single user-MIMO).A DM-RS configuration may support up to 4 orthogonal downlink DM-RS ports per wireless device (e.g., for multiuser-MIMO). A radio network may support (e.g., at least for CP-OFDM) a common DM-RS structure for downlink and uplink. A DM-RS location, a DM-RS pattern, and/or a scrambling sequence may be the same or different. The base station may send/transmit a downlink DM-RS and a corresponding PDSCH, for example, using the same precoding matrix. The wireless device may use the one or more downlink DM-RSs for coherent demodulation/channel estimation of the PDSCH.

A transmitter (e.g., a transmitter of a base station) may use a precoder matrices for a part of a transmission bandwidth. The transmitter may use a first precoder matrix for a first bandwidth and a second precoder matrix for a second bandwidth. The first precoder matrix and the second precoder matrix may be different, for example, based on the first bandwidth being different from the second bandwidth. The wireless device may assume that a same precoding matrix is used across a set of PRBs. The set of PRBs may be determined/indicated/identified/denoted as a precoding resource block group (PRG).

A PDSCH may comprise one or more layers. The wireless device may assume that at least one symbol with DM-RS is present on a layer of the one or more layers of the PDSCH. A higher layer may configure one or more DM-RSs for a PDSCH (e.g., up to 3 DM-RSs for the PDSCH). Downlink PT-RS may be sent/transmitted by a base station and used by a wireless device, for example, for a phase-noise compensation. Whether a downlink PT-RS is present or not may depend on an RRC configuration. The presence and/or the pattern of the downlink PT-RS may be configured on a wireless device-specific basis, for example, using a combination of RRC signaling and/or an association with one or more parameters used/employed for other purposes (e.g., modulation and coding scheme (MCS)), which may be indicated by DCI. A dynamic presence of a downlink PT-RS, if configured, may be associated with one or more DCI parameters comprising at least MCS. A network (e.g., an NR network) may support a plurality of PT-RS densities defined in the time and/or frequency domains. A frequency domain density (if configured/present) may be associated with at least one configuration of a scheduled bandwidth. The wireless device may assume a same precoding for a DM-RS port and a PT-RS port. The quantity/number of PT-RS ports may be fewer than the quantity/number of DM-RS ports in a scheduled resource. Downlink PT-RS may be configured/allocated/confined in the scheduled time/frequency duration for the wireless device. Downlink PT-RS may be sent/transmitted via symbols, for example, to facilitate a phase tracking at the receiver.

The wireless device may send/transmit an uplink DM-RS to a base station, for example, for a channel estimation. The base station may use the uplink DM-RS for coherent demodulation of one or more uplink physical channels. The wireless device may send/transmit an uplink DM-RS with a PUSCH and/or a PUCCH. The uplink DM-RS may span a range of frequencies that is similar to a range of frequencies associated with the corresponding physical channel. The base station may configure the wireless device with one or more uplink DM-RS configurations. At least one DM-RS configuration may support a front-loaded DM-RS pattern. The front-loaded DM-RS may be mapped over one or more OFDM symbols (e.g., one or two adjacent OFDM symbols). One or more uplink DM-RSs may be configured to send/transmit at one or more symbols of a PUSCH and/or a PUCCH. The base station may semi-statically configure the wireless device with a quantity/number (e.g., the maximum quantity/number) of front-loaded DM-RS symbols for the PUSCH and/or the PUCCH, which the wireless device may use to schedule a single-symbol DM-RS and/or a double-symbol DM-RS. A network (e.g., an NR network) may support (e.g., for cyclic prefix orthogonal frequency division multiplexing (CP-OFDM)) a common DM-RS structure for downlink and uplink. A DM-RS location, a DM-RS pattern, and/or a scrambling sequence for the DM-RS may be substantially the same or different.

A PUSCH may comprise one or more layers. A wireless device may send/transmit at least one symbol with DM-RS present on a layer of the one or more layers of the PUSCH. A higher layer may configure one or more DM-RSs (e.g., up to three DM-RSs) for the PUSCH. Uplink PT-RS (which may be used by a base station for a phase tracking and/or a phase-noise compensation) may or may not be present, for example, depending on an RRC configuration of the wireless device. The presence and/or the pattern of an uplink PT-RS may be configured on a wireless device-specific basis (e.g., a UE-specific basis), for example, by a combination of RRC signaling and/or one or more parameters configured/employed for other purposes (e.g., MCS), which may be indicated by DCI. A dynamic presence of an uplink PT-RS, if configured, may be associated with one or more DCI parameters comprising at least MCS. A radio network may support a plurality of uplink PT-RS densities defined in time/frequency domain. A frequency domain density (if configured/present) may be associated with at least one configuration of a scheduled bandwidth. The wireless device may assume a same precoding for a DM-RS port and a PT-RS port. A quantity/number of PT-RS ports may be less than a quantity/number of DM-RS ports in a scheduled resource. An uplink PT-RS may be configured/allocated/confined in the scheduled time/frequency duration for the wireless device.

One or more SRSs may be sent/transmitted by a wireless device to a base station, for example, for a channel state estimation to support uplink channel dependent scheduling and/or a link adaptation. SRS sent/transmitted by the wireless device may enable/allow a base station to estimate an uplink channel state at one or more frequencies. A scheduler at the base station may use/employ the estimated uplink channel state to assign one or more resource blocks for an uplink PUSCH transmission for the wireless device. The base station may semi-statically configure the wireless device with one or more SRS resource sets. For an SRS resource set, the base station may configure the wireless device with one or more SRS resources. An SRS resource set applicability may be configured, for example, by a higher layer (e.g., RRC) parameter. An SRS resource in an SRS resource set of the one or more SRS resource sets (e.g., with the same/similar time domain behavior, periodic, aperiodic, and/or the like) may be sent/transmitted at a time instant (e.g., simultaneously), for example, if a higher layer parameter indicates beam management. The wireless device may send/transmit one or more SRS resources in SRS resource sets. A network (e.g., an NR network) may support aperiodic, periodic, and/or semi-persistent SRS transmissions. The wireless device may send/transmit SRS resources, for example, based on one or more trigger types. The one or more trigger types may comprise higher layer signaling (e.g., RRC) and/or one or more DCI formats. At least one DCI format may be used/employed for the wireless device to select at least one of one or more configured SRS resource sets. An SRS trigger type 0 may refer to an SRS triggered based on higher layer signaling. An SRS trigger type 1 may refer to an SRS triggered based on one or more DCI formats. The wireless device may be configured to send/transmit an SRS, for example, after a transmission of a PUSCH and a corresponding uplink DM-RS if a PUSCH and an SRS are sent/transmitted in a same slot. A base station may semi-statically configure a wireless device with one or more SRS configuration parameters indicating at least one of following: an SRS resource configuration identifier; a quantity/number of SRS ports; time domain behavior of an SRS resource configuration (e.g., an indication of periodic, semi-persistent, or aperiodic SRS); slot, mini-slot, and/or subframe level periodicity; an offset for a periodic and/or an aperiodic SRS resource; a quantity/number of OFDM symbols in an SRS resource; a starting OFDM symbol of an SRS resource; an SRS bandwidth; a frequency hopping bandwidth; a cyclic shift; and/or an SRS sequence ID.

An antenna port may be determined/defined such that the channel over which a symbol on the antenna port is conveyed can be inferred from the channel over which another symbol on the same antenna port is conveyed. The receiver may infer/determine the channel (e.g., fading gain, multipath delay, and/or the like) for conveying a second symbol on an antenna port, from the channel for conveying a first symbol on the antenna port, for example, if the first symbol and the second symbol are sent/transmitted on the same antenna port. A first antenna port and a second antenna port may be referred to as quasi co-located (QCLed), for example, if one or more large-scale properties of the channel over which a first symbol on the first antenna port is conveyed may be inferred from the channel over which a second symbol on a second antenna port is conveyed. The one or more large-scale properties may comprise at least one of: a delay spread; a Doppler spread; a Doppler shift; an average gain; an average delay; and/or spatial Receiving (Rx) parameters.

Channels that use beamforming may require beam management. Beam management may comprise a beam measurement, a beam selection, and/or a beam indication. A beam may be associated with one or more reference signals. A beam may be identified by one or more beamformed reference signals. The wireless device may perform a downlink beam measurement, for example, based on one or more downlink reference signals (e.g., a CSI-RS) and generate a beam measurement report. The wireless device may perform the downlink beam measurement procedure, for example, after an RRC connection is set up with a base station.

FIG. 11B shows an example mapping of one or more CSI-RSs. The CSI-RSs may be mapped in the time and frequency domains. Each rectangular block shown in FIG. 11B may correspond to a resource block (RB) within a bandwidth of a cell. A base station may send/transmit one or more RRC messages comprising CSI-RS resource configuration parameters indicating one or more CSI-RSs. One or more of parameters may be configured by higher layer signaling (e.g., RRC and/or MAC signaling) for a CSI-RS resource configuration. The one or more of the parameters may comprise at least one of : a CSI-RS resource configuration identity, a quantity/number of CSI-RS ports, a CSI-RS configuration (e.g., symbol and resource element (RE) locations in a subframe), a CSI-RS subframe configuration (e.g., a subframe location, an offset, and periodicity in a radio frame), a CSI-RS power parameter, a CSI-RS sequence parameter, a code division multiplexing (CDM) type parameter, a frequency density, a transmission comb, quasi co-location (QCL) parameters (e.g., *QCL-scramblingidentity*, *crs-portscount*, *mbsfn-subframeconfiglist*, *csi-rs-configZPid*, *qcl-csi-rs-configNZPid*), and/or other radio resource parameters.

One or more beams may be configured for a wireless device in a wireless device-specific configuration. Three beams are shown in FIG. 11B (beam #1, beam #2, and beam #3), but more or fewer beams may be configured. Beam #1 may be allocated with CSI-RS 1101 that may be sent/transmitted in one or more subcarriers in an RB of a first symbol. Beam #2 may be allocated with CSI-RS 1102 that may be sent/transmitted in one or more subcarriers in an RB of a second symbol. Beam #3 may be allocated with CSI-RS 1103 that may be sent/transmitted in one or more subcarriers in an RB of a third symbol. A base station may use other subcarriers in the same RB (e.g., those that are not used to send/transmit CSI-RS 1101) to transmit another CSI-RS associated with a beam for another wireless device, for example, by using frequency division multiplexing (FDM). Beams used for a wireless device may be configured such that beams for the wireless device use symbols different from symbols used by beams of other wireless devices, for example, by using time domain multiplexing (TDM). A wireless device may be served with beams in orthogonal symbols (e.g., no overlapping symbols), for example, by using the TDM.

CSI-RSs (e.g., CSI-RSs 1101, 1102, 1103) may be sent/transmitted by the base station and used by the wireless device for one or more measurements. The wireless device may measure an RSRP of configured CSI-RS resources. The base station may configure the wireless device with a reporting configuration, and the wireless device may report the RSRP measurements to a network (e.g., via one or more base stations) based on the reporting configuration. The base station may determine, based on the reported measurement results, one or more transmission configuration indication/indicator (TCI) states comprising a quantity/number of reference signals. The base station may indicate one or more TCI states to the wireless device (e.g., via RRC signaling, a MAC CE, and/or DCI). The wireless device may receive a downlink transmission with an Rx beam determined based on the one or more TCI states. The wireless device may or may not have a capability of beam correspondence. The wireless device may determine a spatial domain filter of a transmit (Tx) beam, for example, based on a spatial domain filter of the corresponding Rx beam, if the wireless device has the capability of beam correspondence. The wireless device may perform an uplink beam selection procedure to determine the spatial domain filter of the Tx beam, for example, if the wireless device does not have the capability of beam correspondence. The wireless device may perform the uplink beam selection procedure, for example, based on one or more sounding reference signal (SRS) resources configured to the wireless device by the base station. The base station may select and indicate uplink beams for the wireless device, for example, based on measurements of the one or more SRS resources sent/transmitted by the wireless device.

A wireless device may determine/assess (e.g., measure) a channel quality of one or more beam pair links, for example, in a beam management procedure. A beam pair link may comprise a Tx beam of a base station and an Rx beam of the wireless device. The Tx beam of the base station may send/transmit a downlink signal, and the Rx beam of the wireless device may receive the downlink signal. The wireless device may send/transmit a beam measurement report, for example, based on the assessment/determination. The beam measurement report may indicate one or more beam pair quality parameters comprising at least one of: one or more beam identifications (e.g., a beam index, a reference signal index, or the like), an RSRP, a precoding matrix indicator (PMI), a channel quality indicator (CQI), and/or a rank indicator (RI).

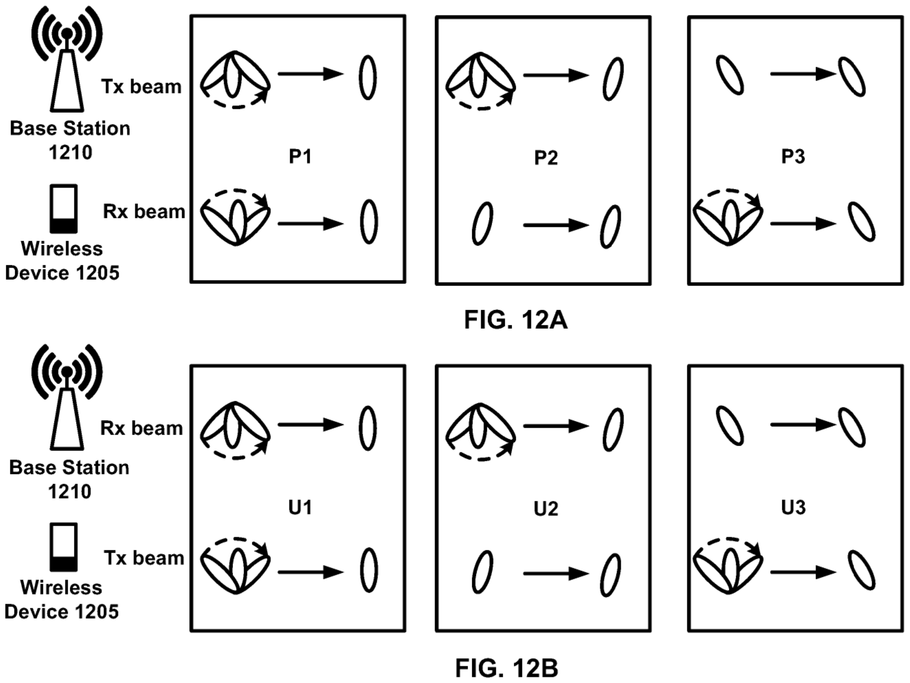

FIG. 12A shows examples of downlink beam management procedures. One or more downlink beam management procedures (e.g., downlink beam management procedures P1, P2, and P3) may be performed. Procedure P1 may enable a measurement (e.g., a wireless device measurement) on Tx beams of a TRP (or multiple TRPs) (e.g., to support a selection of one or more base station Tx beams and/or wireless device Rx beams). The Tx beams of a base station (e.g., base station 1210) and the Rx beams of a wireless device (e.g., wireless device 1205) are shown as ovals in the top row of P1 and bottom row of P1, respectively. Beamforming (e.g., at a TRP) may comprise a Tx beam sweep for a set of beams (e.g., the beam sweeps shown, in the top rows of P1 and P2, as ovals rotated in a counter-clockwise direction indicated by the dashed arrows). Beamforming (e.g., at a wireless device) may comprise an Rx beam sweep for a set of beams (e.g., the beam sweeps shown, in the bottom rows of P1 and P3, as ovals rotated in a clockwise direction indicated by the dashed arrows). Procedure P2 may be used to enable a measurement (e.g., a wireless device measurement) on Tx beams of a TRP (shown, in the top row of P2, as ovals rotated in a counter-clockwise direction indicated by the dashed arrow). The wireless device and/or the base station may perform procedure P2, for example, using a smaller set of beams than the set of beams used in procedure P1, or using narrower beams than the beams used in procedure P1. Procedure P2 may be referred to as a beam refinement. The wireless device may perform procedure P3 for an Rx beam determination, for example, by using the same Tx beam(s) of the base station and sweeping Rx beam(s) of the wireless device.

FIG. 12B shows examples of uplink beam management procedures. One or more uplink beam management procedures (e.g., uplink beam management procedures U1, U2, and U3) may be performed. Procedure U1 may be used to enable a base station (e.g., base station 1210) to perform a measurement on Tx beams of a wireless device (e.g., wireless device 1205) (e.g., to support a selection of one or more Tx beams of the wireless device and/or Rx beams of the base station). The Tx beams of the wireless device and the Rx beams of the base station are shown as ovals in the top row of U1 and bottom row of U1, respectively). Beamforming (e.g., at the wireless device) may comprise one or more beam sweeps, for example, a Tx beam sweep from a set of beams (shown, in the bottom rows of U1 and U3, as ovals rotated in a clockwise direction indicated by the dashed arrows). Beamforming (e.g., at the base station) may comprise one or more beam sweeps, for example, an Rx beam sweep from a set of beams (shown, in the top rows of U1 and U2, as ovals rotated in a counter-clockwise direction indicated by the dashed arrows). Procedure U2 may be used to enable the base station to adjust its Rx beam, for example, if the wireless device (e.g., UE) uses a fixed Tx beam. The wireless device and/or the base station may perform procedure U2, for example, using a smaller set of beams than the set of beams used in procedure P1, or using narrower beams than the beams used in procedure P1. Procedure U2 may be referred to as a beam refinement. The wireless device may perform procedure U3 to adjust its Tx beam, for example, if the base station uses a fixed Rx beam.

A wireless device may initiate/start/perform a beam failure recovery (BFR) procedure, for example, based on detecting a beam failure. The wireless device may send/transmit a BFR request (e.g., a preamble, UCI, an SR, a MAC CE, and/or the like), for example, based on the initiating the BFR procedure. The wireless device may detect the beam failure, for example, based on a determination that a quality of beam pair link(s) of an associated control channel is unsatisfactory (e.g., having an error rate higher than an error rate threshold, a received signal power lower than a received signal power threshold, an expiration of a timer, and/or the like).

The wireless device may measure a quality of a beam pair link, for example, using one or more reference signals (RSs) comprising one or more SS/PBCH blocks, one or more CSI-RS resources, and/or one or more DM-RSs. A quality of the beam pair link may be based on one or more of a block error rate (BLER), an RSRP value, a signal to interference plus noise ratio (SINR) value, an RSRQ value, and/or a CSI value measured on RS resources. The base station may indicate that an RS resource is QCLed with one or more DM-RSs of a channel (e.g., a control channel, a shared data channel, and/or the like). The RS resource and the one or more DM-RSs of the channel may be QCLed, for example, if the channel characteristics (e.g., Doppler shift, Doppler spread, an average delay, delay spread, a spatial Rx parameter, fading, and/or the like) from a transmission via the RS resource to the wireless device are similar or the same as the channel characteristics from a transmission via the channel to the wireless device.

A network (e.g., an NR network comprising a gNB and/or an ng-eNB) and/or the wireless device may initiate/start/perform a random access procedure. A wireless device in an RRC idle (e.g., an RRC_IDLE) state and/or an RRC inactive (e.g., an RRC _INACTIVE) state may initiate/perform the random access procedure to request a connection setup to a network. The wireless device may initiate/start/perform the random access procedure from an RRC connected (e.g., an RRC_CONNECTED) state. The wireless device may initiate/start/perform the random access procedure to request uplink resources (e.g., for uplink transmission of an SR if there is no PUCCH resource available) and/or acquire/obtain/determine an uplink timing (e.g., if an uplink synchronization status is non-synchronized). The wireless device may initiate/start/perform the random access procedure to request one or more system information blocks (SIBs) (e.g., other system information blocks, such as SIB2, SIB3, and/or the like). The wireless device may initiate/start/perform the random access procedure for a beam failure recovery request. A network may initiate/start/perform a random access procedure, for example, for a handover and/or for establishing time alignment for an SCell addition.

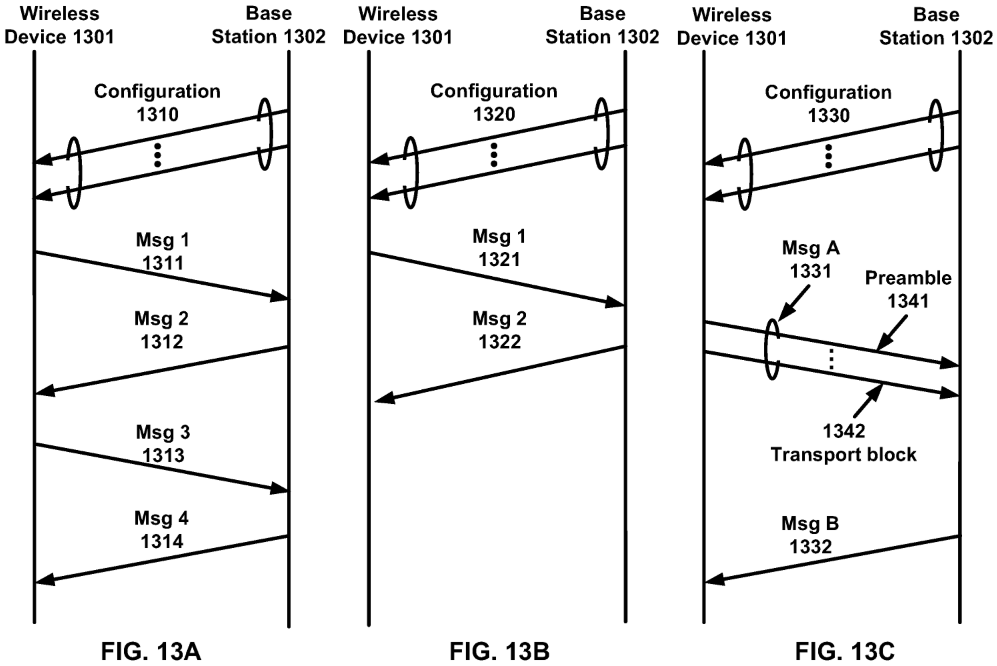

FIG. 13A shows an example four-step random access procedure. The four-step random access procedure may comprise a four-step contention-based random access procedure. A base station (e.g., base station 1302) may send/transmit a configuration message 1310 to a wireless device (e.g., wireless device 1301), for example, before initiating the random access procedure. The four-step random access procedure may comprise transmissions of four messages comprising: a first message (e.g., Msg 1 1311), a second message (e.g., Msg 2 1312), a third message (e.g., Msg 3 1313), and a fourth message (e.g., Msg 4 1314). The first message (e.g., Msg 1 1311) may comprise a preamble (or a random access preamble). The first message (e.g., Msg 1 1311) may be referred to as a preamble. The second message (e.g., Msg 2 1312) may comprise as a random access response (RAR). The second message (e.g., Msg 2 1312) may be referred to as an RAR.

The configuration message 1310 may be sent/transmitted, for example, using one or more RRC messages. The one or more RRC messages may indicate one or more random access channel (RACH) parameters to the wireless device. The one or more RACH parameters may comprise at least one of: general parameters for one or more random access procedures (e.g., RACH-*configGeneral*); cell-specific parameters (e.g., *RACH-ConfigCommon*); and/or dedicated parameters (e.g., *RACH-configDedicated*). The base station may send/transmit (e.g., broadcast or multicast) the one or more RRC messages to one or more wireless devices. The one or more RRC messages may be wireless device-specific. The one or more RRC messages that are wireless device-specific may be, for example, dedicated RRC messages sent/transmitted to a wireless device in an RRC connected (e.g., an RRC_CONNECTED) state and/or in an RRC inactive (e.g., an RRC_INACTIVE) state. The wireless devices may determine, based on the one or more RACH parameters, a time-frequency resource and/or an uplink transmit power for transmission of the first message (e.g., Msg 1 1311) and/or the third message (e.g., Msg 3 1313). The wireless device may determine a reception timing and a downlink channel for receiving the second message (e.g., Msg 2 1312) and the fourth message (e.g., Msg 4 1314), for example, based on the one or more RACH parameters.

The one or more RACH parameters provided/configured/comprised in the configuration message 1310 may indicate one or more Physical RACH (PRACH) occasions available for transmission of the first message (e.g., Msg 1 1311). The one or more PRACH occasions may be predefined (e.g., by a network comprising one or more base stations). The one or more RACH parameters may indicate one or more available sets of one or more PRACH occasions (e.g., *prach-ConfigIndex*). The one or more RACH parameters may indicate an association between (a) one or more PRACH occasions and (b) one or more reference signals. The one or more RACH parameters may indicate an association between (a) one or more preambles and (b) one or more reference signals. The one or more reference signals may be SS/PBCH blocks and/or CSI-RSs. The one or more RACH parameters may indicate a quantity/number of SS/PBCH blocks mapped to a PRACH occasion and/or a quantity/number of preambles mapped to a SS/PBCH blocks.

The one or more RACH parameters provided/configured/comprised in the configuration message 1310 may be used to determine an uplink transmit power of first message (e.g., Msg 1 1311) and/or third message (e.g., Msg 3 1313). The one or more RACH parameters may indicate a reference power for a preamble transmission (e.g., a received target power and/or an initial power of the preamble transmission). There may be one or more power offsets indicated by the one or more RACH parameters. The one or more RACH parameters may indicate: a power ramping step; a power offset between SSB and CSI-RS; a power offset between transmissions of the first message (e.g., Msg 1 1311) and the third message (e.g., Msg 3 1313); and/or a power offset value between preamble groups. The one or more RACH parameters may indicate one or more thresholds, for example, based on which the wireless device may determine at least one reference signal (e.g., an SSB and/or CSI-RS) and/or an uplink carrier (e.g., a normal uplink (NUL) carrier and/or a supplemental uplink (SUL) carrier).

The first message (e.g., Msg 1 1311) may comprise one or more preamble transmissions (e.g., a preamble transmission and one or more preamble retransmissions). An RRC message may be used to configure one or more preamble groups (e.g., group A and/or group B). A preamble group may comprise one or more preambles. The wireless device may determine the preamble group, for example, based on a pathloss measurement and/or a size of the third message (e.g., Msg 3 1313). The wireless device may measure an RSRP of one or more reference signals (e.g., SSBs and/or CSI-RSs) and determine at least one reference signal having an RSRP above an RSRP threshold (e.g., *rsrp-ThresholdSSB* and/or *rsrp-ThresholdCSI-RS*). The wireless device may select at least one preamble associated with the one or more reference signals and/or a selected preamble group, for example, if the association between the one or more preambles and the at least one reference signal is configured by an RRC message.

The wireless device may determine the preamble, for example, based on the one or more RACH parameters provided/configured/comprised in the configuration message 1310. The wireless device may determine the preamble, for example, based on a pathloss measurement, an RSRP measurement, and/or a size of the third message (e.g., Msg 3 1313). The one or more RACH parameters may indicate: a preamble format; a maximum quantity/number of preamble transmissions; and/or one or more thresholds for determining one or more preamble groups (e.g., group A and group B). A base station may use the one or more RACH parameters to configure the wireless device with an association between one or more preambles and one or more reference signals (e.g., SSBs and/or CSI-RSs).The wireless device may determine the preamble to be comprised in first message (e.g., Msg 1 1311), for example, based on the association if the association is configured. The first message (e.g., Msg 1 1311) may be sent/transmitted to the base station via one or more PRACH occasions. The wireless device may use one or more reference signals (e.g., SSBs and/or CSI-RSs) for selection of the preamble and for determining of the PRACH occasion. One or more RACH parameters (e.g., *ra-ssb-OccasionMskIndex* and/or *ra-OccasionList*) may indicate an association between the PRACH occasions and the one or more reference signals.

The wireless device may perform a preamble retransmission, for example, if no response is received based on (e.g., after or in response to) a preamble transmission (e.g., for a period of time, such as a monitoring window for monitoring an RAR). The wireless device may increase an uplink transmit power for the preamble retransmission. The wireless device may select an initial preamble transmit power, for example, based on a pathloss measurement and/or a target received preamble power configured by the network. The wireless device may determine to resend/retransmit a preamble and may ramp up the uplink transmit power. The wireless device may receive one or more RACH parameters (e.g., *PREAMBLE_POWER_RAMPING_STEP*) indicating a ramping step for the preamble retransmission. The ramping step may be an amount of incremental increase in uplink transmit power for a retransmission. The wireless device may ramp up the uplink transmit power, for example, if the wireless device determines a reference signal (e.g., SSB and/or CSI-RS) that is the same as a previous preamble transmission. The wireless device may count the quantity/number of preamble transmissions and/or retransmissions, for example, using a counter parameter (e.g., *PREAMBLE_TRANSMISSION_COUNTER*). The wireless device may determine that a random access procedure has been completed unsuccessfully, for example, if the quantity/number of preamble transmissions exceeds a threshold configured by the one or more RACH parameters (e.g., *preambleTransMax*) without receiving a successful response (e.g., an RAR).

The second message (e.g., Msg 2 1312) (e.g., received by the wireless device) may comprise an RAR. The second message (e.g., Msg 2 1312) may comprise multiple RARs corresponding to multiple wireless devices. The second message (e.g., Msg 2 1312) may be received, for example, based on (e.g., after or in response to) the sending/transmitting of the first message (e.g., Msg 1 1311). The second message (e.g., Msg 2 1312) may be scheduled on the DL-SCH and may be indicated by a PDCCH, for example, using a random access radio network temporary identifier (RA RNTI). The second message (e.g., Msg 2 1312) may indicate that the first message (e.g., Msg 1 1311) was received by the base station. The second message (e.g., Msg 2 1312) may comprise a time-alignment command that may be used by the wireless device to adjust the transmission timing of the wireless device, a scheduling grant for transmission of the third message (e.g., Msg 3 1313), and/or a Temporary Cell RNTI (TC-RNTI). The wireless device may determine/start a time window (e.g., *ra-ResponseWindow*) to monitor a PDCCH for the second message (e.g., Msg 2 1312), for example, after sending/transmitting the first message (e.g., Msg 1 1311) (e.g., a preamble). The wireless device may determine the start time of the time window, for example, based on a PRACH occasion that the wireless device uses to send/transmit the first message (e.g., Msg 1 1311) (e.g., the preamble). The wireless device may start the time window one or more symbols after the last symbol of the first message (e.g., Msg 1 1311) comprising the preamble (e.g., the symbol in which the first message (e.g., Msg 1 1311) comprising the preamble transmission was completed or at a first PDCCH occasion from an end of a preamble transmission). The one or more symbols may be determined based on a numerology. The PDCCH may be mapped in a common search space (e.g., a Type1-PDCCH common search space) configured by an RRC message. The wireless device may identify/determine the RAR, for example, based on an RNTI. Radio network temporary identifiers (RNTIs) may be used depending on one or more events initiating/starting the random access procedure. The wireless device may use a RA-RNTI, for example, for one or more communications associated with random access or any other purpose. The RA-RNTI may be associated with PRACH occasions in which the wireless device sends/transmits a preamble. The wireless device may determine the RA-RNTI, for example, based on at least one of: an OFDM symbol index; a slot index; a frequency domain index; and/or a UL carrier indicator of the PRACH occasions. An example RA-RNTI may be determined as follows:

$$RA\text{-}RNTI = 1 + s\_id + 14 \times t\_id + 14 \times 80 \times f\_id + 14 \times 80 \times 8 \times ul\_carrier\_id$$

where s_id may be an index of a first OFDM symbol of the PRACH occasion (e.g., $0 \le s\_id < 14$), t_id may be an index of a first slot of the PRACH occasion in a system frame (e.g., $0 \le t\_id < 80$), f_id may be an index of the PRACH occasion in the frequency domain (e.g., $0 \le f\_id < 8$), and ul_carrier_id may be a UL carrier used for a preamble transmission (e.g., 0 for an NUL carrier, and 1 for an SUL carrier).

The wireless device may send/transmit the third message (e.g., Msg 3 1313), for example, based on (e.g., after or in response to) a successful reception of the second message (e.g., Msg 2 1312) (e.g., using resources identified in the Msg 2 1312). The third message (e.g., Msg 3 1313) may be used, for example, for contention resolution in the contention-based random access procedure. A plurality of wireless devices may send/transmit the same preamble to a base station, and the base station may send/transmit an RAR that corresponds to a wireless device. Collisions may occur, for example, if the plurality of wireless device interpret the RAR as corresponding to themselves. Contention resolution (e.g., using the third message (e.g., Msg 3 1313) and the fourth message (e.g., Msg 4 1314)) may be used to increase the likelihood that the wireless device does not incorrectly use an identity of another the wireless device. The wireless device may comprise a device identifier in the third message (e.g., Msg 3 1313) (e.g., a C-RNTI if assigned, a TC RNTI comprised in the second message (e.g., Msg 2 1312), and/or any other suitable identifier), for example, to perform contention resolution.

The fourth message (e.g., Msg 4 1314) may be received, for example, based on (e.g., after or in response to) the sending/transmitting of the third message (e.g., Msg 3 1313). The base station may address the wireless on the PDCCH (e.g., the base station may send the PDCCH to the wireless device) using a C-RNTI, for example, If the C-RNTI was included in the third message (e.g., Msg 3 1313). The random access procedure may be determined to be successfully completed, for example, if the unique C RNTI of the wireless device is detected on the PDCCH (e.g., the PDCCH is scrambled by the C-RNTI). fourth message (e.g., Msg 4 1314) may be received using a DL-SCH associated with a TC RNTI, for example, if the TC RNTI is comprised in the third message (e.g., Msg 3 1313) (e.g., if the wireless device is in an RRC idle (e.g., an RRC_IDLE) state or not otherwise connected to the base station). The wireless device may determine that the contention resolution is successful and/or the wireless device may determine that the random access procedure is successfully completed, for example, if a MAC PDU is successfully decoded and a MAC PDU comprises the wireless device contention resolution identity MAC CE that matches or otherwise corresponds with the CCCH SDU sent/transmitted in third message (e.g., Msg 3 1313).

The wireless device may be configured with an SUL carrier and/or an NUL carrier. An initial access (e.g., random access) may be supported via an uplink carrier. A base station may configure the wireless device with multiple RACH configurations (e.g., two separate RACH configurations comprising: one for an SUL carrier and the other for an NUL carrier). For random access in a cell configured with an SUL carrier, the network may indicate which carrier to use (NUL or SUL). The wireless device may determine to use the SUL carrier, for example, if a measured quality of one or more reference signals (e.g., one or more reference signals associated with the NUL carrier) is lower than a broadcast threshold. Uplink transmissions of the random access procedure (e.g., the first message (e.g., Msg 1 1311) and/or the third message (e.g., Msg 3 1313)) may remain on, or may be performed via, the selected carrier. The wireless device may switch an uplink carrier during the random access procedure (e.g., between the Msg 1 1311 and the Msg 3 1313). The wireless device may determine and/or switch an uplink carrier for the first message (e.g., Msg 1 1311) and/or the third message (e.g., Msg 3 1313), for example, based on a channel clear assessment (e.g., a listen-before-talk).

FIG. 13B shows a two-step random access procedure. The two-step random access procedure may comprise a two-step contention-free random access procedure. Similar to the four-step contention-based random access procedure, a base station (e.g., base station 1302) may, prior to initiation of the procedure, send/transmit a configuration message 1320 to the wireless device (e.g., wireless device 1301). The configuration message 1320 may be analogous in some respects to the configuration message 1310. The procedure shown in FIG. 13B may comprise transmissions of two messages: a first message (e.g., Msg 1 1321) and a second message (e.g., Msg 2 1322). The first message (e.g., Msg 1 1321) and the second message (e.g., Msg 2 1322) may be analogous in some respects to the first message (e.g., Msg 1 1311) and a second message (e.g., Msg 2 1312), respectively. The two-step contention-free random access procedure may not comprise messages analogous to the third message (e.g., Msg 3 1313) and/or the fourth message (e.g., Msg 4 1314).

The two-step (e.g., contention-free) random access procedure may be configured/initiated for a beam failure recovery, other SI request, an SCell addition, and/or a handover. A base station may indicate, or assign to, the wireless device a preamble to be used for the first message (e.g., Msg 1 1321). The wireless device may receive, from the base station via a PDCCH and/or an RRC, an indication of the preamble (e.g., *ra-PreambleIndex*).

The wireless device may start a time window (e.g., *ra-ResponseWindow*) to monitor a PDCCH for the RAR, for example, based on (e.g., after or in response to) sending/transmitting the preamble. The base station may configure the wireless device with one or more beam failure recovery parameters, such as a separate time window and/or a separate PDCCH in a search space indicated by an RRC message (e.g., *recoverySearchSpaceId*). The base station may configure the one or more beam failure recovery parameters, for example, in association with a beam failure recovery request. The separate time window for monitoring the PDCCH and/or an RAR may be configured to start after sending/transmitting a beam failure recovery request (e.g., the window may start any quantity of symbols and/or slots after sending/transmitting the beam failure recovery request). The wireless device may monitor for a PDCCH transmission addressed to a Cell RNTI (C-RNTI) on the search space. During the two-step (e.g., contention-free) random access procedure, the wireless device may determine that a random access procedure is successful, for example, based on (e.g., after or in response to) sending/transmitting first message (e.g., Msg 1 1321) and receiving a corresponding second message (e.g., Msg 2 1322). The wireless device may determine that a random access procedure has successfully been completed, for example, if a PDCCH transmission is addressed to a corresponding C-RNTI. The wireless device may determine that a random access procedure has successfully been completed, for example, if the wireless device receives an RAR comprising a preamble identifier corresponding to a preamble sent/transmitted by the wireless device and/or the RAR comprises a MAC sub-PDU with the preamble identifier. The wireless device may determine the response as an indication of an acknowledgement for an SI request.

FIG. 13C shows an example two-step random access procedure. Similar to the random access procedures shown in FIGS. 13A and 13B, a base station (e.g., base station 1302) may, prior to initiation of the procedure, send/transmit a configuration message 1330 to the wireless device (e.g., wireless device 1301). The configuration message 1330 may be analogous in some respects to the configuration message 1310 and/or the configuration message 1320. The procedure shown in FIG. 13C may comprise transmissions of multiple messages (e.g., two messages comprising: a first message (e.g., Msg A 1331) and a second message (e.g., Msg B 1332)).

Msg A 1320 may be sent/transmitted in an uplink transmission by the wireless device. Msg A 1320 may comprise one or more transmissions of a preamble 1341 and/or one or more transmissions of a transport block 1342. The transport block 1342 may comprise contents that are similar and/or equivalent to the contents of the third message (e.g., Msg 3 1313) (e.g., shown in FIG. 13A). The transport block 1342 may comprise UCI (e.g., an SR, a HARQ ACK/NACK, and/or the like). The wireless device may receive the second message (e.g., Msg B 1332), for example, based on (e.g., after or in response to) sending/transmitting the first message (e.g., Msg A 1331). The second message (e.g., Msg B 1332) may comprise contents that are similar and/or equivalent to the contents of the second message (e.g., Msg 2 1312) (e.g., an RAR shown in FIGS. 13A), the contents of the second message (e.g., Msg 2 1322) (e.g., an RAR shown in FIG. 13B) and/or the fourth message (e.g., Msg 4 1314) (e.g., shown in FIG. 13A).

The wireless device may start/initiate the two-step random access procedure (e.g., the two-step random access procedure shown in FIG. 13C) for a licensed spectrum and/or an unlicensed spectrum. The wireless device may determine, based on one or more factors, whether to start/initiate the two-step random access procedure. The one or more factors may comprise at least one of: a radio access technology in use (e.g., LTE, NR, and/or the like); whether the wireless device has a valid TA or not; a cell size; the RRC state of the wireless device; a type of spectrum (e.g., licensed vs. unlicensed); and/or any other suitable factors.

The wireless device may determine, based on two-step RACH parameters comprised in the configuration message 1330, a radio resource and/or an uplink transmit power for the preamble 1341 and/or the transport block 1342 (e.g., comprised in the first message (e.g., Msg A 1331)). The RACH parameters may indicate an MCS, a time-frequency resource, and/or a power control for the preamble 1341 and/or the transport block 1342. A time-frequency resource for transmission of the preamble 1341 (e.g., a PRACH) and a time-frequency resource for transmission of the transport block 1342 (e.g., a PUSCH) may be multiplexed using FDM, TDM, and/or CDM. The RACH parameters may enable the wireless device to determine a reception timing and a downlink channel for monitoring for and/or receiving second message (e.g., Msg B 1332).

The transport block 1342 may comprise data (e.g., delay-sensitive data), an identifier of the wireless device, security information, and/or device information (e.g., an International Mobile Subscriber Identity (IMSI)). The base station may send/transmit the second message (e.g., Msg B 1332) as a response to the first message (e.g., Msg A 1331). The second message (e.g., Msg B 1332) may comprise at least one of: a preamble identifier; a timing advance command; a power control command; an uplink grant (e.g., a radio resource assignment and/or an MCS); a wireless device identifier (e.g., a UE identifier for contention resolution); and/or an RNTI (e.g., a C-RNTI or a TC-RNTI). The wireless device may determine that the two-step random access procedure is successfully completed, for example, if a preamble identifier in the second message (e.g., Msg B 1332) corresponds to, or is matched to, a preamble sent/transmitted by the wireless device and/or the identifier of the wireless device in second message (e.g., Msg B 1332) corresponds to, or is matched to, the identifier of the wireless device in the first message (e.g., Msg A 1331) (e.g., the transport block 1342).

A wireless device and a base station may exchange control signaling (e.g., control information). The control signaling may be referred to as L1/L2 control signaling and may originate from the PHY layer (e.g., layer 1) and/or the MAC layer (e.g., layer 2) of the wireless device or the base station. The control signaling may comprise downlink control signaling sent/transmitted from the base station to the wireless device and/or uplink control signaling sent/transmitted from the wireless device to the base station.

The downlink control signaling may comprise at least one of: a downlink scheduling assignment; an uplink scheduling grant indicating uplink radio resources and/or a transport format; slot format information; a preemption indication; a power control command; and/or any other suitable signaling. The wireless device may receive the downlink control signaling in a payload sent/transmitted by the base station via a PDCCH. The payload sent/transmitted via the PDCCH may be referred to as downlink control information (DCI). The PDCCH may be a group common PDCCH (GC-PDCCH) that is common to a group of wireless devices. The GC-PDCCH may be scrambled by a group common RNTI.

A base station may attach one or more cyclic redundancy check (CRC) parity bits to DCI, for example, in order to facilitate detection of transmission errors. The base station may scramble the CRC parity bits with an identifier of a wireless device (or an identifier of a group of wireless devices), for example, if the DCI is intended for the wireless device (or the group of the wireless devices). Scrambling the CRC parity bits with the identifier may comprise Modulo-2 addition (or an exclusive-OR operation) of the identifier value and the CRC parity bits. The identifier may comprise a 16-bit value of an RNTI.

DCIs may be used for different purposes. A purpose may be indicated by the type of an RNTI used to scramble the CRC parity bits. DCI having CRC parity bits scrambled with a paging RNTI (P-RNTI) may indicate paging information and/or a system information change notification. The P-RNTI may be predefined as "FFFE" in hexadecimal. DCI having CRC parity bits scrambled with a system information RNTI (SI-RNTI) may indicate a broadcast transmission of the system information. The SI-RNTI may be predefined as "FFFF" in hexadecimal. DCI having CRC parity bits scrambled with a random access RNTI (RA-RNTI) may indicate a random access response (RAR). DCI having CRC parity bits scrambled with a cell RNTI (C-RNTI) may indicate a dynamically scheduled unicast transmission and/or a triggering of PDCCH-ordered random access. DCI having CRC parity bits scrambled with a temporary cell RNTI (TC-RNTI) may indicate a contention resolution (e.g., a Msg 3 analogous to the Msg 3 1313 shown in FIG. 13A). Other RNTIs configured for a wireless device by a base station may comprise a Configured Scheduling RNTI (CS RNTI), a Transmit Power Control-PUCCH RNTI (TPC PUCCH-RNTI), a Transmit Power Control-PUSCH RNTI (TPC-PUSCH-RNTI), a Transmit Power Control-SRS RNTI (TPC-SRS-RNTI), an Interruption RNTI (INT-RNTI), a Slot Format Indication RNTI (SFI-RNTI), a Semi-Persistent CSI RNTI (SP-CSI-RNTI), a Modulation and Coding Scheme Cell RNTI (MCS-C RNTI), and/or the like.

A base station may send/transmit DCIs with one or more DCI formats, for example, depending on the purpose and/or content of the DCIs. DCI format 0_0 may be used for scheduling of a PUSCH in a cell. DCI format 0_0 may be a fallback DCI format (e.g., with compact DCI payloads). DCI format 0_1 may be used for scheduling of a PUSCH in a cell (e.g., with more DCI payloads than DCI format 0_0). DCI format 1_0 may be used for scheduling of a PDSCH in a cell. DCI format 1_0 may be a fallback DCI format (e.g., with compact DCI payloads). DCI format 1_1 may be used for scheduling of a PDSCH in a cell (e.g., with more DCI payloads than DCI format 1_0). DCI format 2_0 may be used for providing a slot format indication to a group of wireless devices. DCI format 2_1 may be used for informing/notifying a group of wireless devices of a physical resource block and/or an OFDM symbol where the group of wireless devices may assume no transmission is intended to the group of wireless devices. DCI format 2_2 may be used for transmission of a transmit power control (TPC) command for PUCCH or PUSCH. DCI format 2_3 may be used for transmission of a group of TPC commands for SRS transmissions by one or more wireless devices. DCI format(s) for new functions may be defined in future releases. DCI formats may have different DCI sizes, or may share the same DCI size.

The base station may process the DCI with channel coding (e.g., polar coding), rate matching, scrambling and/or QPSK modulation, for example, after scrambling the DCI with an RNTI. A base station may map the coded and modulated DCI on resource elements used and/or configured for a PDCCH. The base station may send/transmit the DCI via a PDCCH occupying a quantity/number of contiguous control channel elements (CCEs), for example, based on a payload size of the DCI and/or a coverage of the base station. The quantity/number of the contiguous CCEs (referred to as aggregation level) may be 1, 2, 4, 8, 16, and/or any other suitable quantity/number. A CCE may comprise a number (e.g., 6) of resource-element groups (REGs). A REG may comprise a resource block in an OFDM symbol. The mapping of the coded and modulated DCI on the resource elements may be based on mapping of CCEs and REGs (e.g., CCE-to-REG mapping).

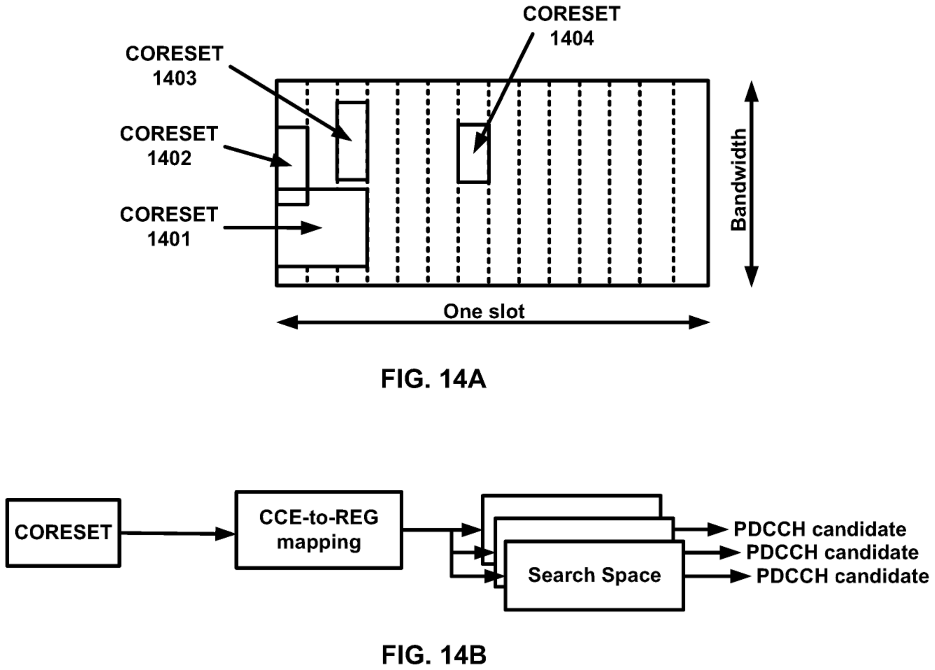

FIG. 14A shows an example of CORESET configurations. The CORESET configurations may be for a bandwidth part or any other frequency bands. The base station may send/transmit DCI via a PDCCH on one or more control resource sets (CORESETs). A CORESET may comprise a time-frequency resource in which the wireless device attempts/tries to decode DCI using one or more search spaces. The base station may configure a size and a location of the CORESET in the time-frequency domain. A first CORESET 1401 and a second CORESET 1402 may occur or may be set/configured at the first symbol in a slot. The first CORESET 1401 may overlap with the second CORESET 1402 in the frequency domain. A third CORESET 1403 may occur or may be set/configured at a third symbol in the slot. A fourth CORESET 1404 may occur or may be set/configured at the seventh symbol in the slot. CORESETs may have a different quantity/number of resource blocks in frequency domain.

FIG. 14B shows an example of a CCE-to-REG mapping. The CCE-to-REG mapping may be performed for DCI transmission via a CORESET and PDCCH processing. The CCE-to-REG mapping may be an interleaved mapping (e.g., for the purpose of providing frequency diversity) or a non-interleaved mapping (e.g., for the purposes of facilitating interference coordination and/or frequency-selective transmission of control channels). The base station may perform different or same CCE-to-REG mapping on different CORESETs. A CORESET may be associated with a CCE-to-REG mapping (e.g., by an RRC configuration). A CORESET may be configured with an antenna port QCL parameter. The antenna port QCL parameter may indicate QCL information of a DM-RS for a PDCCH reception via the CORESET.

The base station may send/transmit, to the wireless device, one or more RRC messages comprising configuration parameters of one or more CORESETs and one or more search space sets. The configuration parameters may indicate an association between a search space set and a CORESET. A search space set may comprise a set of PDCCH candidates formed by CCEs (e.g., at a given aggregation level). The configuration parameters may indicate at least one of: a quantity/number of PDCCH candidates to be monitored per aggregation level; a PDCCH monitoring periodicity and a PDCCH monitoring pattern; one or more DCI formats to be monitored by the wireless device; and/or whether a search space set is a common search space set or a wireless device-specific search space set (e.g., a UE-specific search space set). A set of CCEs in the common search space set may be predefined and known to the wireless device. A set of CCEs in the wireless device-specific search space set (e.g., the UE-specific search space set) may be configured, for example, based on the identity of the wireless device (e.g., C-RNTI).

As shown in FIG. 14B, the wireless device may determine a time-frequency resource for a CORESET based on one or more RRC messages. The wireless device may determine a CCE-to-REG mapping (e.g., interleaved or non-interleaved, and/or mapping parameters) for the CORESET, for example, based on configuration parameters of the CORESET. The wireless device may determine a quantity/number (e.g., at most 10) of search space sets configured on/for the CORESET, for example, based on the one or more RRC messages. The wireless device may monitor a set of PDCCH candidates according to configuration parameters of a search space set. The wireless device may monitor a set of PDCCH candidates in one or more CORESETs for detecting one or more DCIs. Monitoring may comprise decoding one or more PDCCH candidates of the set of the PDCCH candidates according to the monitored DCI formats. Monitoring may comprise decoding DCI content of one or more PDCCH candidates with possible (or configured) PDCCH locations, possible (or configured) PDCCH formats (e.g., the quantity/number of CCEs, the quantity/number of PDCCH candidates in common search spaces, and/or the quantity/number of PDCCH candidates in the wireless device-specific search spaces) and possible (or configured) DCI formats. The decoding may be referred to as blind decoding. The wireless device may determine DCI as valid for the wireless device, for example, based on (e.g., after or in response to) CRC checking (e.g., scrambled bits for CRC parity bits of the DCI matching an RNTI value). The wireless device may process information comprised in the DCI (e.g., a scheduling assignment, an uplink grant, power control, a slot format indication, a downlink preemption, and/or the like).

The may send/transmit uplink control signaling (e.g., UCI) to a base station. The uplink control signaling may comprise HARQ acknowledgements for received DL-SCH transport blocks. The wireless device may send/transmit the HARQ acknowledgements, for example, based on (e.g., after or in response to) receiving a DL-SCH transport block. Uplink control signaling may comprise CSI indicating a channel quality of a physical downlink channel. The wireless device may send/transmit the CSI to the base station. The base station, based on the received CSI, may determine transmission format parameters (e.g., comprising multi-antenna and beamforming schemes) for downlink transmission(s). Uplink control signaling may comprise scheduling requests (SR). The wireless device may send/transmit an SR indicating that uplink data is available for transmission to the base station. The wireless device may send/transmit UCI (e.g., HARQ acknowledgements (HARQ-ACK), CSI report, SR, and the like) via a PUCCH or a PUSCH. The wireless device may send/transmit the uplink control signaling via a PUCCH using one of several PUCCH formats.

There may be multiple PUCCH formats (e.g., five PUCCH formats). A wireless device may determine a PUCCH format, for example, based on a size of UCI (e.g., a quantity/number of uplink symbols of UCI transmission and a quantity/number of UCI bits). PUCCH format 0 may have a length of one or two OFDM symbols and may comprise two or fewer bits. The wireless device may send/transmit UCI via a PUCCH resource, for example, using PUCCH format 0 if the transmission is over/via one or two symbols and the quantity/number of HARQ-ACK information bits with positive or negative SR (HARQ-ACK/SR bits) is one or two. PUCCH format 1 may occupy a quantity/number of OFDM symbols (e.g., between four and fourteen OFDM symbols) and may comprise two or fewer bits. The wireless device may use PUCCH format 1, for example, if the transmission is over/via four or more symbols and the quantity/number of HARQ-ACK/SR bits is one or two. PUCCH format 2 may occupy one or two OFDM symbols and may comprise more than two bits. The wireless device may use PUCCH format 2, for example, if the transmission is over/via one or two symbols and the quantity/number of UCI bits is two or more. PUCCH format 3 may occupy a quantity/number of OFDM symbols (e.g., between four and fourteen OFDM symbols) and may comprise more than two bits. The wireless device may use PUCCH format 3, for example, if the transmission is four or more symbols, the quantity/number of UCI bits is two or more, and the PUCCH resource does not comprise an orthogonal cover code (OCC). PUCCH format 4 may occupy a quantity/number of OFDM symbols (e.g., between four and fourteen OFDM symbols) and may comprise more than two bits. The wireless device may use PUCCH format 4, for example, if the transmission is four or more symbols, the quantity/number of UCI bits is two or more, and the PUCCH resource comprises an OCC.

The base station may send/transmit configuration parameters to the wireless device for a plurality of PUCCH resource sets, for example, using an RRC message. The plurality of PUCCH resource sets (e.g., up to four sets in NR, or up to any other quantity of sets in other systems) may be configured on an uplink BWP of a cell. A PUCCH resource set may be configured with a PUCCH resource set index, a plurality of PUCCH resources with a PUCCH resource being identified by a PUCCH resource identifier (e.g., *pucch-Resourceid*), and/or a quantity/number (e.g. a maximum quantity/number) of UCI information bits the wireless device may send/transmit using one of the plurality of PUCCH resources in the PUCCH resource set. The wireless device may select one of the plurality of PUCCH resource sets, for example, based on a total bit length of the UCI information bits (e.g., HARQ-ACK, SR, and/or CSI) if configured with a plurality of PUCCH resource sets. The wireless device may select a first PUCCH resource set having a PUCCH resource set index equal to "0," for example, if the total bit length of UCI information bits is two or fewer. The wireless device may select a second PUCCH resource set having a PUCCH resource set index equal to "1," for example, if the total bit length of UCI information bits is greater than two and less than or equal to a first configured value. The wireless device may select a third PUCCH resource set having a PUCCH resource set index equal to "2," for example, if the total bit length of UCI information bits is greater than the first configured value and less than or equal to a second configured value. The wireless device may select a fourth PUCCH resource set having a PUCCH resource set index equal to "3," for example, if the total bit length of UCI information bits is greater than the second configured value and less than or equal to a third value (e.g., 1406, 1706, or any other quantity of bits).

The wireless device may determine a PUCCH resource from the PUCCH resource set for UCI (HARQ-ACK, CSI, and/or SR) transmission, for example, after determining a PUCCH resource set from a plurality of PUCCH resource sets. The wireless device may determine the PUCCH resource, for example, based on a PUCCH resource indicator in DCI (e.g., with DCI format 1_0 or DCI for 1_1) received on/via a PDCCH. An n-bit (e.g., a three-bit) PUCCH resource indicator in the DCI may indicate one of multiple (e.g., eight) PUCCH resources in the PUCCH resource set. The wireless device may send/transmit the UCI (HARQ-ACK, CSI and/or SR) using a PUCCH resource indicated by the PUCCH resource indicator in the DCI, for example, based on the PUCCH resource indicator.

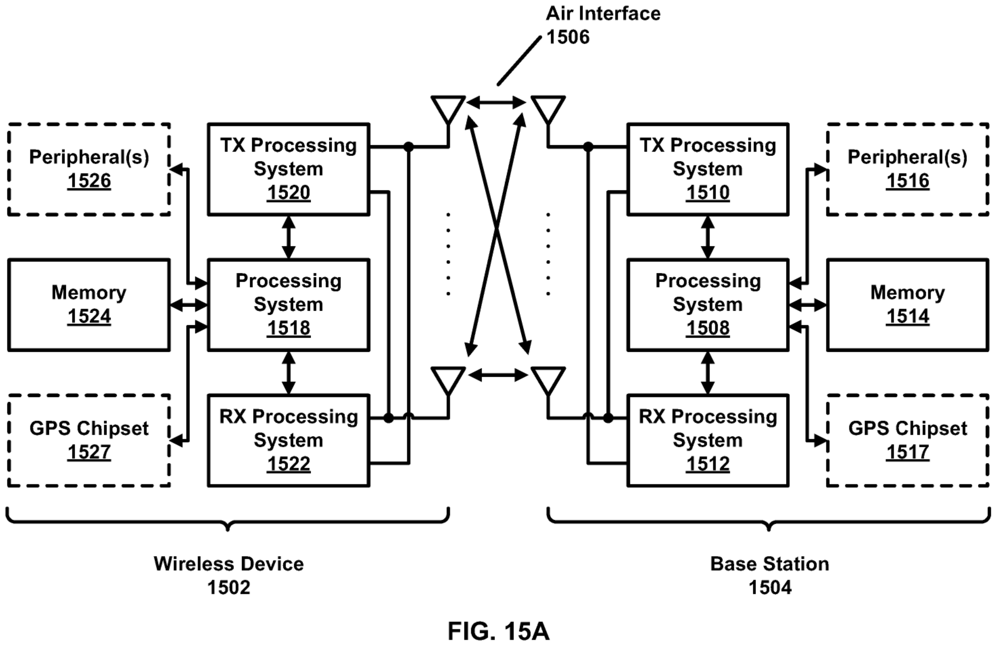

FIG. 15A shows example communications between a wireless device and a base station. A wireless device 1502 and a base station 1504 may be part of a communication network, such as the communication network 100 shown in FIG. 1A, the communication network 150 shown in FIG. 1B, or any other communication network. A communication network may comprise more than one wireless device and/or more than one base station, with substantially the same or similar configurations as those shown in FIG. 15A.

The base station 1504 may connect the wireless device 1502 to a core network (not shown) via radio communications over the air interface (or radio interface) 1506. The communication direction from the base station 1504 to the wireless device 1502 over the air interface 1506 may be referred to as the downlink. The communication direction from the wireless device 1502 to the base station 1504 over the air interface may be referred to as the uplink. Downlink transmissions may be separated from uplink transmissions, for example, using various duplex schemes (e.g., FDD, TDD, and/or some combination of the duplexing techniques).

For the downlink, data to be sent to the wireless device 1502 from the base station 1504 may be provided/-transferred/sent to the processing system 1508 of the base station 1504. The data may be provided/transferred/sent to the processing system 1508 by, for example, a core network. For the uplink, data to be sent to the base station 1504 from the wireless device 1502 may be provided/transferred/sent to the processing system 1518 of the wireless device 1502. The processing system 1508 and the processing system 1518 may implement layer 3 and layer 2 OSI functionality to process the data for transmission. Layer 2 may comprise an SDAP layer, a PDCP layer, an RLC layer, and a MAC layer, for example, described with respect to FIG. 2A, FIG. 2B, FIG. 3, and FIG. 4A. Layer 3 may comprise an RRC layer, for example, described with respect to FIG. 2B.

The data to be sent to the wireless device 1502 may be provided/transferred/sent to a transmission processing system 1510 of base station 1504, for example, after being processed by the processing system 1508. The data to be sent to base station 1504 may be provided/transferred/sent to a transmission processing system 1520 of the wireless device 1502, for example, after being processed by the processing system 1518. The transmission processing system 1510 and the transmission processing system 1520 may implement layer 1 OSI functionality. Layer 1 may comprise a PHY layer, for example, described with respect to FIG. 2A, FIG. 2B, FIG. 3, and FIG. 4A. For transmit processing, the PHY layer may perform, for example, forward error correction coding of transport channels, interleaving, rate matching, mapping of transport channels to physical channels, modulation of physical channel, multiple-input multiple-output (MIMO) or multi-antenna processing, and/or the like.

A reception processing system 1512 of the base station 1504 may receive the uplink transmission from the wireless device 1502. The reception processing system 1512 of the base station 1504 may comprise one or more TRPs. A reception processing system 1522 of the wireless device 1502 may receive the downlink transmission from the base station 1504. The reception processing system 1522 of the wireless device 1502 may comprise one or more antenna panels. The reception processing system 1512 and the reception processing system 1522 may implement layer 1 OSI functionality. Layer 1 may include a PHY layer, for example, described with respect to FIG. 2A, FIG. 2B, FIG. 3, and FIG. 4A. For receive processing, the PHY layer may perform, for example, error detection, forward error correction decoding, deinterleaving, demapping of transport channels to physical channels, demodulation of physical channels, MIMO or multi-antenna processing, and/or the like.

The base station 1504 may comprise multiple antennas (e.g., multiple antenna panels, multiple TRPs, etc.). The wireless device 1502 may comprise multiple antennas (e.g., multiple antenna panels, etc.). The multiple antennas may be used to perform one or more MIMO or multi-antenna techniques, such as spatial multiplexing (e.g., single-user MIMO or multi-user MIMO), transmit/receive diversity, and/or beamforming. The wireless device 1502 and/or the base station 1504 may have a single antenna.

The processing system 1508 and the processing system 1518 may be associated with a memory 1514 and a memory 1524, respectively. Memory 1514 and memory 1524 (e.g., one or more non-transitory computer readable mediums) may store computer program instructions or code that may be executed by the processing system 1508 and/or the processing system 1518, respectively, to carry out one or more of the functionalities (e.g., one or more functionalities described herein and other functionalities of general computers, processors, memories, and/or other peripherals). The transmission processing system 1510 and/or the reception processing system 1512 may be coupled to the memory 1514 and/or another memory (e.g., one or more non-transitory computer readable mediums) storing computer program instructions or code that may be executed to carry out one or more of their respective functionalities. The transmission processing system 1520 and/or the reception processing system 1522 may be coupled to the memory 1524 and/or another memory (e.g., one or more non-transitory computer readable mediums) storing computer program instructions or code that may be executed to carry out one or more of their respective functionalities.

The processing system 1508 and/or the processing system 1518 may comprise one or more controllers and/or one or more processors. The one or more controllers and/or one or more processors may comprise, for example, a general-purpose processor, a digital signal processor (DSP), a microcontroller, an application specific integrated circuit (ASIC), a field programmable gate array (FPGA) and/or other programmable logic device, discrete gate and/or transistor logic, discrete hardware components, an on-board unit, or any combination thereof. The processing system 1508 and/or the processing system 1518 may perform at least one of signal coding/processing, data processing, power control, input/output processing, and/or any other functionality that may enable the wireless device 1502 and/or the base station 1504 to operate in a wireless environment.

The processing system 1508 may be connected to one or more peripherals 1516. The processing system 1518 may be connected to one or more peripherals 1526. The one or more peripherals 1516 and the one or more peripherals 1526 may comprise software and/or hardware that provide features and/or functionalities, for example, a speaker, a microphone, a keypad, a display, a touchpad, a power source, a satellite transceiver, a universal serial bus (USB) port, a hands-free headset, a frequency modulated (FM) radio unit, a media player, an Internet browser, an electronic control unit (e.g., for a motor vehicle), and/or one or more sensors (e.g., an accelerometer, a gyroscope, a temperature sensor, a radar sensor, a lidar sensor, an ultrasonic sensor, a light sensor, a camera, and/or the like). The processing system 1508 and/or the processing system 1518 may receive input data (e.g., user input data) from, and/or provide output data (e.g., user output data) to, the one or more peripherals 1516 and/or the one or more peripherals 1526. The processing system 1518 in the wireless device 1502 may receive power from a power source and/or may be configured to distribute the power to the other components in the wireless device 1502. The power source may comprise one or more sources of power, for example, a battery, a solar cell, a fuel cell, or any combination thereof. The processing system 1508 may be connected to a Global Positioning System (GPS) chipset 1517. The processing system 1518 may be connected to a Global Positioning System (GPS) chipset 1527. The GPS chipset 1517 and the GPS chipset 1527 may be configured to determine and provide geographic location information of the wireless device 1502 and the base station 1504, respectively.

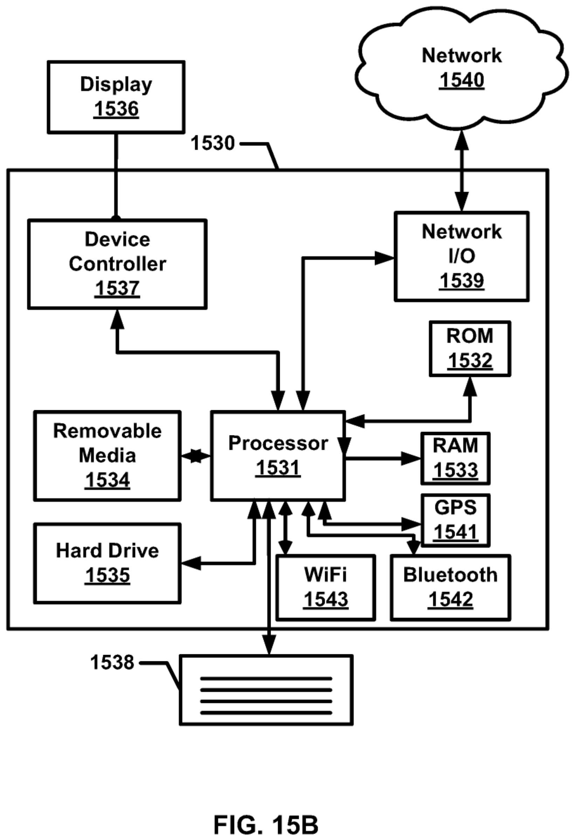

FIG. 15B shows example elements of a computing device that may be used to implement any of the various devices described herein, including, for example, the base station 160A, 160B, 162A, 162B, 220, 1210, 1302, 1720, 1760, 1810, 1830, 1850, 1910, 1930, and/or, 1950, the wireless device 106, 156A, 156B, 210, 1205, 1301, 1700, 1740, 1800, 1820, 1840, 1900, 1920, and/or 1940, or any other base station, wireless device, AMF, UPF, network device, or computing device described herein. The computing device 1530 may include one or more processors 1531, which may execute instructions stored in the random-access memory (RAM) 1533, the removable media 1534 (such as a Universal Serial Bus (USB) drive, compact disk (CD) or digital versatile disk (DVD), or floppy disk drive), or any other desired storage medium. Instructions may also be stored in an attached (or internal) hard drive 1535. The computing device 1530 may also include a security processor (not shown), which may execute instructions of one or more computer programs to monitor the processes executing on the processor 1531 and any process that requests access to any hardware and/or software components of the computing device 1530 (e.g., ROM 1532, RAM 1533, the removable media 1534, the hard drive 1535, the device controller 1537, a network interface 1539, a GPS 1541, a Bluetooth interface 1542, a WiFi interface 1543, etc.). The computing device 1530 may include one or more output devices, such as the display 1536 (e.g., a screen, a display device, a monitor, a television, etc.), and may include one or more output device controllers 1537, such as a video processor. There may also be one or more user input devices 1538, such as a remote control, keyboard, mouse, touch screen, microphone, etc. The computing device 1530 may also include one or more network interfaces, such as a network interface 1539, which may be a wired interface, a wireless interface, or a combination of the two. The network interface 1539 may provide an interface for the computing device 1530 to communicate with a network 1540 (e.g., a RAN, or any other network). The network interface 1539 may include a modem (e.g., a cable modem), and the external network 1540 may include communication links, an external network, an in-home network, a provider's wireless, coaxial, fiber, or hybrid fiber/coaxial distribution system (e.g., a DOCSIS network), or any other desired network. Additionally, the computing device 1530 may include a location-detecting device, such as a global positioning system (GPS) microprocessor 1541, which may be configured to receive and process global positioning signals and determine, with possible assistance from an external server and antenna, a geographic position of the computing device 1530.

The example in FIG. 15B may be a hardware configuration, although the components shown may be implemented as software as well. Modifications may be made to add, remove, combine, divide, etc. components of the computing device 1530 as desired. Additionally, the components may be implemented using basic computing devices and components, and the same components (e.g., processor 1531, ROM storage 1532, display 1536, etc.) may be used to implement any of the other computing devices and components described herein. For example, the various components described herein may be implemented using computing devices having components such as a processor executing computer-executable instructions stored on a computer-readable medium, as shown in FIG. 15B. Some or all of the entities described herein may be software based, and may co-exist in a common physical platform (e.g., a requesting entity may be a separate software process and program from a dependent entity, both of which may be executed as software on a common computing device).

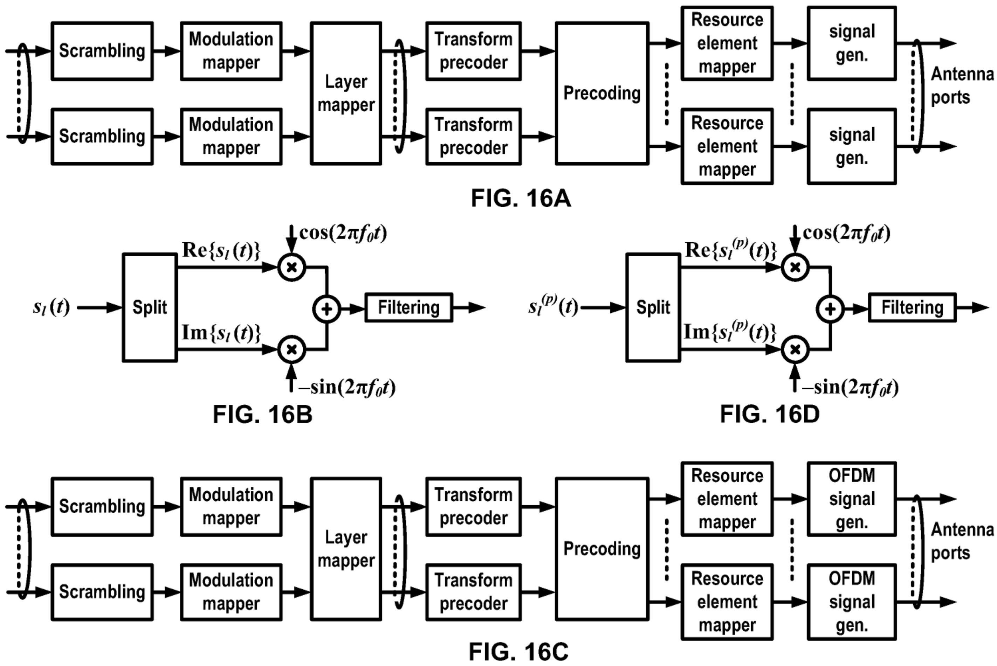

FIG. 16A shows an example structure for uplink transmission. Processing of a baseband signal representing a physical uplink shared channel may comprise/perform one or more functions. The one or more functions may comprise at least one of: scrambling; modulation of scrambled bits to generate complex-valued symbols; mapping of the complex-valued modulation symbols onto one or several transmission layers; transform precoding to generate complex-valued symbols; precoding of the complex-valued symbols; mapping of precoded complex-valued symbols to resource elements; generation of complex-valued time-domain Single Carrier-Frequency Division Multiple Access (SC-FDMA), CP-OFDM signal for an antenna port, or any other signals; and/or the like. An SC-FDMA signal for uplink transmission may be generated, for example, if transform precoding is enabled. A CP-OFDM signal for uplink transmission may be generated, for example, if transform precoding is not enabled (e.g., as shown in FIG. 16A). These functions are examples and other mechanisms for uplink transmission may be implemented.

FIG. 16B shows an example structure for modulation and up-conversion of a baseband signal to a carrier frequency. The baseband signal may be a complex-valued SC-FDMA, CP-OFDM baseband signal (or any other baseband signals) for an antenna port and/or a complex-valued Physical Random Access Channel (PRACH) baseband signal. Filtering may be performed/employed, for example, prior to transmission.

FIG. 16C shows an example structure for downlink transmissions. Processing of a baseband signal representing a physical downlink channel may comprise/perform one or more functions. The one or more functions may comprise: scrambling of coded bits in a codeword to be sent/transmitted on/via a physical channel; modulation of scrambled bits to generate complex-valued modulation symbols; mapping of the complex-valued modulation symbols onto one or several transmission layers; precoding of the complex-valued modulation symbols on a layer for transmission on the antenna ports; mapping of complex-valued modulation symbols for an antenna port to resource elements; generation of complex-valued time-domain OFDM signal for an antenna port; and/or the like. These functions are examples and other mechanisms for downlink transmission may be implemented.

FIG. 16D shows an example structure for modulation and up-conversion of a baseband signal to a carrier frequency. The baseband signal may be a complex-valued OFDM baseband signal for an antenna port or any other signal. Filtering may be performed/employed, for example, prior to transmission.

A wireless device may receive, from a base station, one or more messages (e.g. RRC messages) comprising configuration parameters of a plurality of cells (e.g., a primary cell, one or more secondary cells). The wireless device may communicate with at least one base station (e.g., two or more base stations in dual-connectivity) via the plurality of cells. The one or more messages (e.g. as a part of the configuration parameters) may comprise parameters of PHY, MAC, RLC, PCDP, SDAP, RRC layers for configuring the wireless device. The configuration parameters may comprise parameters for configuring PHY and MAC layer channels, bearers, etc. The configuration parameters may comprise parameters indicating values of timers for PHY, MAC, RLC, PCDP, SDAP, RRC layers, and/or communication channels.

A timer may begin running, for example, after (e.g., as soon as) it is started and continue running until it is stopped or until it expires. A timer may be started, for example, if it is not running or restarted if it is running. A timer may be associated with a value (e.g., the timer may be started or restarted from a value or may be started from zero and expire after (e.g., as soon as) it reaches the value). The duration of a timer may not be updated, for example, until the timer is stopped or expires (e.g., due to BWP switching). A timer may be used to measure a time period/window for a process. With respect to an implementation and/or procedure related to one or more timers or other parameters, it will be understood that there may be multiple ways to implement the one or more timers or other parameters. One or more of the multiple ways to implement a timer may be used to measure a time period/window for the procedure. A random access response window timer may be used for measuring a window of time for receiving a random access response. The time difference between two time stamps may be used, for example, instead of starting a random access response window timer and determine the expiration of the timer. A process for measuring a time window may be restarted, for example, if a timer is restarted. Other example implementations may be configured/provided to restart a measurement of a time window.

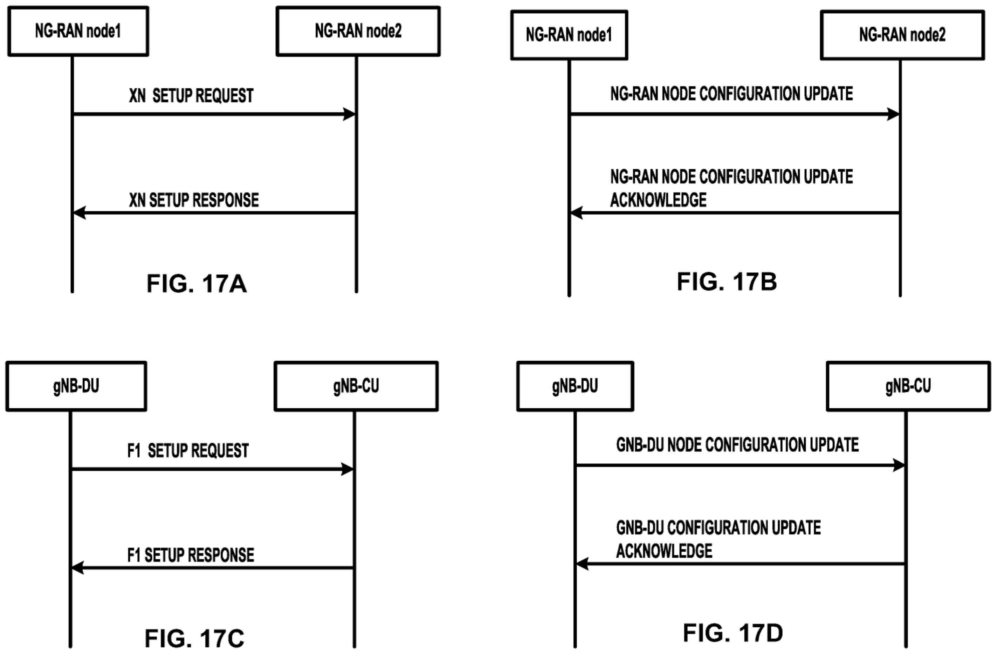

FIG. 17A - FIG. 17B show one or more Xn interface management procedures taking place between any two NG-RAN nodes (e.g., NG-RAN node 1 and NG-RAN node 2). FIG. 17A shows an Xn setup procedure and the purpose of the Xn setup procedure may be to exchange application level configuration data needed for two next generation radio access network (NG-RAN) nodes to interoperate correctly over the control plane Xn interface (i.e., Xn-C). An NG-RAN nodel may initiate the Xn setup procedure by sending an XN SETUP REQUEST message to a candidate NG-RAN node 2. The candidate NG-RAN node 2 may reply with an XN SETUP RESPONSE message.

The NG-RAN node 1 may exchange one or more configuration parameters of one or more serving cells supporting NR and E-UTRA of the NG-RAN node 1 with the NG-RAN node 2, for example, with the XN SETUP REQUEST message. The NG-RAN node 1 may include an information element (IE) group called served cell information NR pertaining to each of the one or more serving cells of the NG-RAN node 1 in the XN SETUP REQUEST message.

For example, the one or more configuration parameters of each of the one or more serving cells (as contained in the IE group called *Served Cell Information NR*) may comprise at least one of: physical cell identity (PCI) of an NR cell; cell global identity (CGI) of the NR cell; tracking area code (TAC) supported by the NR cell; RAN area code (RANAC) supported by the NR cell; list of PLMN identities supported and broadcast by the NR cell; frequency division duplexing information (*FDD info*) of the NR cell; time division duplexing information (*TDD info*) of the NR cell; measuring timing configuration of the NR cell; time domain positions of the sent (e.g., transmitted) synchronization signal blocks (SS-blocks) in a half frame with synchronization signal/physical broadcast channel (SS/PBCH) blocks of the NR cell; physical random access channel (PRACH) configuration of the NR cell; channel state information reference signal (CSI-RS) transmission status indication/notification of the NR cell; system frame number (SFN) offset indicating/notifying a time offset between an absolute time reference and the SFN0 start; or an additional measurement timing configuration list.

The *FDD info* may comprise at least one of: uplink (UL) and/or downlink (DL) NR frequency information defining one or more carrier frequencies and bands used in the NR cell for a given direction (UL or DL) in FDD or for both UL and DL directions in TDD or for supplementary uplink (SUL) carrier; UL/DL transmission bandwidth; UL/DL carrier list indicating/notifying subcarrier spacing (SCS) specific carriers per TDD, per DL, per UL or per SUL of the NR cell; base station distributed unit (DU) cell resource configuration in UL (e.g., *gNB-DU Cell Resource Configuration-FDD-UL*); or base station distributed unit (DU) cell resource configuration in DL (e.g., *gNB-DU Cell Resource Configuration-FDD-DL*).

The *TDD info* may comprise at least one of: NR frequency information defining one or more carrier frequencies and bands used in the NR cell for a given direction (UL or DL) in TDD; transmission bandwidth; subcarrier spacing, cyclic prefix and TDD DL-UL slot configuration of the NR cell that a neighbor NG-RAN node needs to take into account for cross-link interference mitigation (e.g., *Intended TDD DL-UL configuration NR*); TDD UL-DL configuration information that the NR cell includes in a SIB1 (e.g., *TDD UL-DL configuration common NR*); carrier list indicating/notifying subcarrier spacing (SCS) specific carriers of the NR cell; asymmetric UL and DL transmission bandwidth (e.g., *Transmission Bandwidth asymmetric*) indicating/notifying DL/UL transmission bandwidth separately;

Synchronization signal block (SSB) positions in burst may represent the time domain positions of the sent (e.g., transmitted) synchronization signal blocks (SS-blocks) in a half frame with synchronization signal/physical broadcast channel (SS/PBCH) blocks. The NG-RAN node 1 may include one or more configuration parameters of one or more serving cells supporting NR and E-UTRA of one or more neighbor NG-RAN nodes in the XN SETUP REQUEST message. For this purpose, The NG-RAN node 1 may include an information element group (e.g., *Neighbor Information NR*) to include the one or more configuration parameters supported by each of the one or more serving cells of the one or more neighbor NG-RAN nodes. The one or more configuration parameters may comprise at least one of: physical cell identity (PCI) of a serving cell of a neighbor NG-RAN node; cell global identity (CGI) of the serving cell of the neighbor NG-RAN node; tracking area code (TAC) supported by the serving cell of the neighbor NG-RAN node; RAN area code (RANAC) supported by the serving cell of the neighbor NG-RAN node; frequency division duplexing information (*FDD info*) of the serving cell of the neighbor NG-RAN node; time division duplexing information (*TDD info*) of the serving cell of the neighbor NG-RAN node; or measurement timing configuration.

The one or more configuration parameters of each of the one or more serving cells supporting NR and E-UTRA of one or more neighbor NG-RAN nodes (as contained in the IE group called *Neighbor Information NR*) may be similar to the one or more configuration parameters of each of the one or more serving cells (as contained in the IE group called *Served Cell Information NR*). The XN SETUP RESPONSE message may comprise similar information elements as those of the XN SETUP REQUEST message - but contents of XN SETUP RESPONSE may relate to one or more serving cells of the NG-RAN node 2 and neighbor NG-RAN nodes of the NG-RAN node 2.

An XN SETUP REQUEST message may comprise one or more configuration parameter of one or more NR serving cells (with an inclusion of an exemplary IE group called *List of Served Cells NR* IE) and/or one or more E-UTRA serving cells (with an inclusion of an exemplary IE group called *List of Served Cells E-UTRA* IE) belonging to an NG-RAN node (e.g., NG-RAN node 1). An XN SETUP RESPONSE message may comprise one or more configuration parameter of one or more NR serving cells (with an inclusion of the exemplary IE group called *List of Served Cells NR* IE) and/or one or more E-UTRA serving cells (with an inclusion of the exemplary IE group called *List of Served Cells E-UTRA* IE) belonging to a peer NG-RAN node (e.g., NG-RAN node 2)

A receiving peer NG-RAN node may take this information into account for cross-link interference management and/or power coordination with a sending NG-RAN node, for example, if either the XN SETUP REQUEST or XN SETUP RESPONSE message may comprise subcarrier spacing, cyclic prefix and TDD DL-UL slot configuration (e.g., *Intended TDD DL-UL Configuration NR* IE). A sending NG-RAN node (e.g., NG-RAN node 1) of an XN SETUP REQUEST message may request assistance information about NR cells of a peer NG-RAN node (e.g., NG-RAN node 2). The sending NG-RAN node may include a list of requested NR cells for which one or more configuration parameters are sought. The sending NG-RAN node may use an exemplary IE called *Cell and Capacity Assistance Information NR* for this purpose. A receiving peer NG-RAN node may, if supported, use it when generating the list of NG-RAN served cell information to include in an XN SETUP RESPONSE message, for example, if an XN SETUP REQUEST message contains a request for assistance information (e.g., *Cell and Capacity Assistance Information NR* IE or the *Cell and Capacity Assistance Information E-UTRA* IE).

In case an XN SETUP REQUEST message includes channel state information reference signal (CSI-RS) transmission status indication/notification of the NR cell (e.g., *CSI-RS Transmission Indication/notification* IE), a receiving peer NG-RAN node (e.g., NG-RAN node 2) may, if supported, take this IE into account for neighbor cell's CSI-RS measurement. An XN SETUP REQUEST message or an Xn SETUP RESPONSE message may include physical random access channel (PRACH) configuration (e.g., *NR Cell PRACH Configuration* IE) for served NR cells or for served NB-IoT cells (e.g., *NPRACH Configuration* IE). An NG-RAN node receiving this PRACH configuration information may use for RACH optimization.

FIG. 17B shows an NG-RAN node configuration update procedure and the purpose of the NG-RAN node configuration update procedure is to update application level configuration data needed for two NG-RAN nodes to interoperate correctly over the Xn-C interface. An NG-RAN NODE CONFIGURATION UPDATE message may comprise at least one of: updated configuration information of one or more served NR cells exchanged between two peer NG-RAN nodes (e.g., NG-RAN node 1 and NG-RAN node 2); a cell coverage modification list containing information regarding (in)active state of each of the one or more served NR cells exchanged between two peer NG-RAN nodes (e.g., NG-RAN node 1 and NG-RAN node 2); an SSB coverage modification list containing information (in)active state of one or more beams where each beam is identified by an SSB index; or a neighbor NG-RAN node list.

An NG-RAN NODE CONFIGURATION UPDATE AKNOWLEDGE message may comprise at least one of: updated configuration information of one or more served NR cells exchanged between two peer NG-RAN nodes (e.g., NG-RAN node 1 and NG-RAN node 2); or a neighbor NG-RAN node list. For example, one or more configuration parameters of one or more NR serving cells exchanged between any two NG-RAN nodes (e.g., NG-RAN node 1 and NG-RAN node 2) using one or more Xn interface management procedures as shown in FIG. 17A - FIG. 17B may be useful for at least one of: enabling mobility management of one or more wireless devices at least by configuring each of the one or more wireless devices with neighbor cell measurements; load balancing and traffic management among neighbor cells; maintaining network resilience by exchanging network status, fault or load information of neighbor cells.

For simplicity, a generic terminology such as a base station may refer to an NG-RAN node or simply an NG-RAN. Terminologies like base station, NG-RAN node and NG-RAN may be used interchangeably throughout this disclosure. A base station or an NG-RAN node may refer to one of: node B; eNB; ng-eNB; or base station.

FIG. 17C shows an F1 setup procedure and the purpose of the F1 setup procedure is to exchange application level data needed for a gNB-DU and a gNB-CU to correctly interoperate on an F1 interface. A gNB-DU may initiate the F1 setup procedure by sending an F1 SETUP REQUEST message including one or more configuration parameters data to a gNB-CU. The gNB-CU may respond with an F1 SETUP RESPONSE message including one or more configuration parameters.

An F1 SETUP REQUEST message may comprise at least one of: a list of one or more serving cells configured in the gNB-DU (e.g., *Served Cell Information IE*); or gNB-DU system information containing details of one or more system information block (SIB) generated by the gNB-DU. If an F1 SETUP REQUEST message may comprise subcarrier spacing, cyclic prefix and TDD DL-UL slot configuration of an NR cell (e.g., an *Intended TDD DL-UL Configuration IE*), a receiving gNB-CU may use this received information for cross link interference management and/or power coordination. The gNB-CU may merge information contained in one or more *Intended TDD DL-UL Configuration* IEs received from two or more gNB-DUs.

A gNB-CU may store related information, and forward it to other RAN nodes for RACH optimization, for example, if an F1 SETUP REQUEST message includes PRACH resources used or reserved (e.g., *NR PRACH Configuration List* IE) in the UL carrier(s) or SUL carrier(s) of per serving NR cell (e.g., the *Served Cell Information* IE). The one or more configuration parameters of each of the one or more serving cells (as contained in the IE group called *Served Cell Information NR*) of an F1 SETUP RESPONSE message may comprise similar information to that of XN SETUP REQUEST message.

An F1 SETUP RESPONSE message may comprise at least one of: a list of cells to be activated; or a list of NR CGIs to be updated. The list of cells to be activated (e.g., *Cells to be Activated List* IE) may comprise at least one of: NR PCI (e.g., *NR PCI* IE); NR CGI; list of supported PLMNs; a list of SSBs within a gNB-DU cell to be activated.

A gNB-CU may include the list of cells to be activated (e.g., *Cells to be Activated List* IE) in the F1 SETUP RESPONSE message. The *Cells to be Activated List* IE may include a list of cells that the gNB-CU requests a gNB-DU to activate. The gNB-DU may need to activate the cells included in the *Cells to be Activated List* IE and reconfigure the physical cell identity for cells for which the *NR PCI* IE is included.

FIG. 17D shows a gNB-DU configuration update procedure and the purpose of the gNB-DU configuration update procedure is to update application level configuration data needed for the gNB-DU and a gNB-CU to interoperate correctly on an F1 interface. The gNB-DU may initiate the gNB-DU configuration update procedure by sending a GNB-DU CONFIGURATION UPDATE message to the gNB-CU including one or more updated configuration parameters that the gNB-CU may take into operational use. The gNB-CU may respond with a GNB-DU CONFIGURATION UPDATE ACKNOWLEDGE message to acknowledge that the gNB-CU successfully updated the one or more updated configuration parameters.

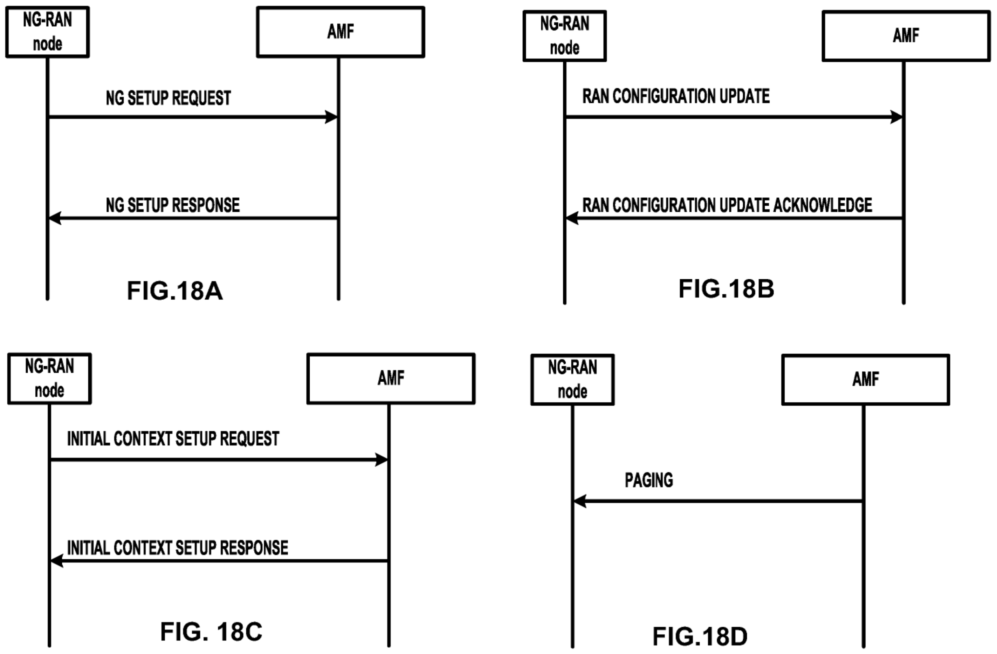

FIG. 18A shows an NG setup procedure and the purpose of the next generation (NG) setup procedure is to exchange application level data needed for an NG-RAN node (e.g., base station) and an access and mobility management function (AMF) to correctly interoperate on a next generation control plane (NG-C) interface. The NG-RAN node (base station) may initiate an NG setup procedure by sending an NG SETUP REQUEST message to the AMF including one or more parameters. Subsequently, the AMF may send (e.g., transmit) an NG SETUP RESPONSE message including one or more parameters. The NG-RAN node may include a default paging discontinuous reception (DRX) parameter in the NG SETUP REQUEST message.

The NG-C interface may be defined between the NG-RAN node and the AMF. The NG-C may provide one or more of the following: NG interface maintenance; wireless device context management belonging to one or more wireless devices; mobility management of the one or more wireless devices; transport of one or more non-access stratum (NAS) messages; paging; management of one or more packet data unit (PDU) sessions; configuration transfer; or warning message transfer. An N2 interface and NG Application Protocol (NGAP) are both components of the 5G core network that connect the gNodeB (gNB) to the AMF. The N2 interface may be a reference point between the base station and the AMF. The N2 may also transports NAS signaling between a wireless device (e.g., UE) and the AMF. NGAP may manage everything from user authentication to mobility and service activation through a series of procedures and messages.

FIG. 18B shows a RAN configuration update procedure and the purpose of this procedure is to update one or more application level configuration data needed for the NG-RAN node and the AMF to interoperate correctly on the NG-C interface. The NG-RAN node may initiate this procedure by sending a RAN CONFIGURATION UPDATE message to the AMF for updating one or more application layer information or configuration data that are currently in use. The one or more application layer information or configuration data may comprise at least one of: global RAN node ID; RAN node name; supported tracking area (TS) list; or default paging DRX.

FIG. 18C shows an initial context setup procedure and the purpose of this procedure is to is to establish an initial wireless device context at a NG-RAN node and the initial wireless device context may comprise at least one of: a PDU session context, a security key, mobility restriction list, wireless device radio capability; core network assistance information for use when a wireless device is in the *RRC_INACTIVE* state containing wireless device specific DRX parameter; or wireless device security capabilities.

FIG. 18D shows a paging procedure and the purpose of this procedure is to enable an AMF to page a wireless device which is currently located in a coverage area or a service area of a given NG-RAN node. The AMF may initiate the paging procedure by sending a PAGING message to the given NG-RAN node, which may, in turn, perform paging of the wireless device in one or more cells.

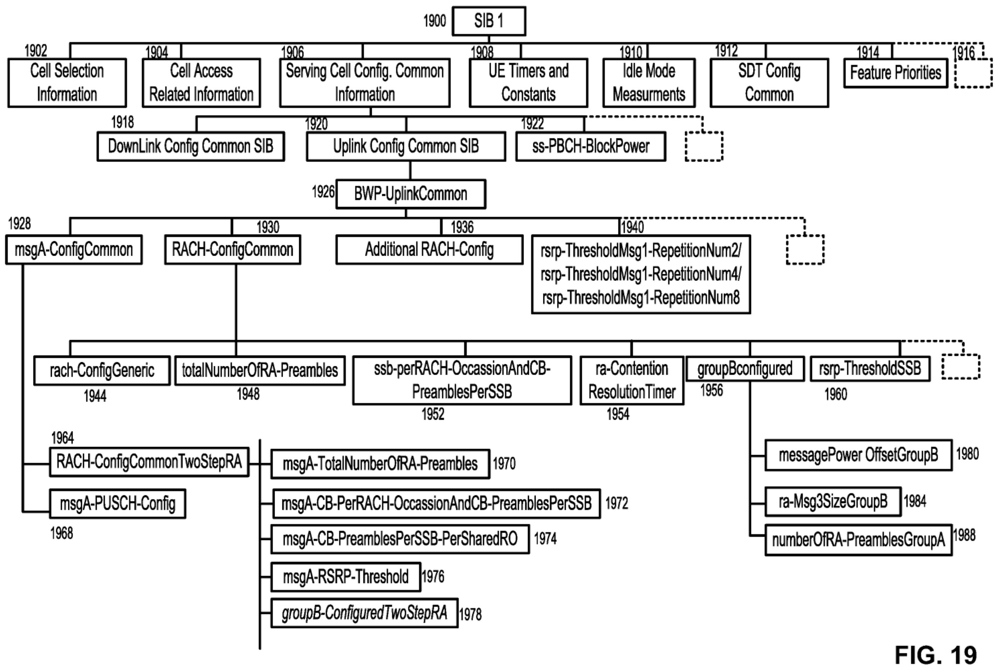

FIG. 19 shows one or more configuration parameters making up a system information block 1 (*SIB1*). The master information block (MIB) on PBCH may provide the wireless device with parameters (e.g. CORESET#0 configuration) for monitoring of PDCCH for scheduling PDSCH that carries the *SIB1*. The *SIB1* may define the scheduling of other system information blocks and contains information required for initial access.

For example, *SIB1* may provide key network configuration parameters that allow a device (UE) to establish a connection with the network. It also may contain radio resource configuration information that is common for one or more wireless devices and barring information applied to the unified access control. As shown by FIG. 19, the *SIB1* may comprise at least one of: cell selection information (e.g., *cellSelectionInfo* 1902); cell access related information (e.g., *cellAccessRelatedInfo* 1904); serving cell common configuration information (e.g., *servingCell ConfigCommon* 1906); wireless device timers and constants (e.g., *ue-TimersAndConstants* 1908); idle mode measurement configurations (e.g., e.g., *idleModeMeasurementsNR* 1910); SDT common configuration information (e.g., *sdt-ConfigCommon* 1912); common configuration information for mobile terminated SDT (e.g., *MT-SDT-ConfigCommonSIB*); feature priorities (e.g., *feature Priorities* 1914); or other parameters.

The serving cell common configuration information (e.g., *servingCell ConfigCommon* 1906) is of type, *Serving-CellConfigCommonSIB,* which may comprise cell specific parameters of a serving cell of one or more wireless devices (e.g., UEs). The *ServingCellConfigCommonSIB* may comprise at least one of: downlink common configuration parameters (e.g., *downlinkConfigCommon* 1918); uplink common configuration parameters (*uplinkConfigCommon* 1920); average energy per resource element (EPRE) of the resources elements that carry secondary synchronization signals in dBm that a network used for SSB transmission (e.g., *ss-PBCH-BlockPower* 1922); or other parameters.

The uplink common configuration parameters (e.g., *uplinkConfigCommon* 1920) may be of type, *UplinkConfigCommonSIB*, which may provide common uplink parameters of a cell. The *UplinkConfigCommonSIB* may comprise at least one of: uplink common configuration of an uplink bandwidth part (e.g., *BWP-UplinkCommon* 1926); time alignment timer; frequency information for UL; or other parameters. The uplink common configuration of an uplink bandwidth part (e.g., *BWP-UplinkCommon* 1926) may comprise at least one of: RACH common configurations (e.g., *RACH-ConfigCommon* 1930); configuration of the cell specific PRACH and PUSCH resource parameters for transmission of MsgA in 2-step random access type procedure (e.g., *msgA-ConfigCommon* 1928); a threshold used by the wireless device for determining whether to select resources indicating/notifying Msg3 repetition in this BWP (*rsrp-ThresholdMsg3* ); a threshold used by the wireless device for determining whether to select resources indicating/notifying Msg1 repetition number 2, 4 or 8 in this BWP (e.g., *rsrp-ThresholdMsg1-RepetitionNum2, rsrp-ThresholdMsg1-RepetitionNum4, rsrp-ThresholdMsg1-RepetitionNum8* 1940); or other parameters.

The RACH common configurations (e.g., *RACH-ConfigCommon* 1930) may comprise at least one of: generic RACH configuration parameters (e.g., *rachConfigGeneric* 1944); number of SSBs per RACH occasion (e.g., *ssb-perRACH-OccasionAndCB-Preambles PerSSB* 1952) ; a minimum RSRP level for an SSB to be considered for initiating the RACH (e.g., *rsrp-ThresholdSSB* 1960); number of contention-based (CB) preambles per SSB in group A (e.g., *numberOfRA-PreamblesGroupA*); the initial value for the contention resolution timer (*ra-Contention ResolutionTimer* 1954); transport blocks size threshold in bits below which the wireless device needs to use a contention-based RA preamble of group A (*ra-Msg3SizeGroupA*); total number of preambles used for contention based and contention free 4-step or 2-step random access (e.g., *totalNumberOfRA-Preambles* 1948); configuration parameters of group B (*groupBconfigured* 1956); or other parameters. The configuration of the cell specific PRACH and PUSCH resource parameters for transmission of MsgA in 2-step random access type procedure (e.g., *msgA-ConfigCommon* 1928) may comprise at least one of: configuration of cell specific random access parameters which the wireless device uses for contention based and contention free 2-step random access type procedure as well as for 2-step RA type contention based beam failure recovery in this BWP (*rach-ConfigCommonTwoStepRA*); or other parameters.

The configuration of cell specific random access parameters which the wireless device uses for contention based and contention free 2-step random access type procedure as well as for 2-step RA type contention based beam failure recovery in this BWP (*rach-ConfigCommonTwoStepRA*) may comprise at least one of: a total number of preambles used for contention-based and contention-free 2-step random access type when ROs for 2-step are not shared with 4-step (e.g., *msgA-TotalNumberOfRA-Preambles* 1970); a number/quantity of SSBs per RACH occasion and a number/quantity of contention based preambles per SSB (e.g., *msgA-SSB-PerRACH-OccasionAndCB-PreamblesPerSSB* 1972); a number/quantity of contention-based preambles used for 2-step RA type from the non-CBRA 4-step type preambles associated with each SSB for RO shared with 4-step type RA (e.g., *msgA-CB-PreamblesPerSSB-PerSharedRO* 1974); a threshold for a 2-step RACH type (e.g., *msgA-RSRP-Threshold* 1976); preamble grouping for 2-step random access type (e.g., *groupB-ConfiguredTwoStepRA* 1978); or other parameters.

The configuration parameters of group B (*groupBconfigured* 1956) may comprise at least one of: a transport blocks size threshold in bits below which the wireless device may use a contention-based RA preamble of group A (e.g., *ra-Msg3SizeGroupA* 1984); threshold for preamble selection (e.g., *messagePowerOffsetGroupB* 1980); or number of CB preambles per SSB available in group B (e.g., *numberOfRA-PreamblesGroupA* 1988). The SDT common configuration information (e.g., *sdt-ConfigCommon* 1912) may comprise at least one of: an RSRP threshold used to determine whether SDT procedure can be initiated (e.g., *sdt-RSRP-Threshold*); a timer for delaying scheduling request for logical channels (e.g., *sdt-LogicalChannelSR-DelayTimer*); a data volume threshold used to determine whether SDT can be initiated (e.g., *sdt-Data Volume Threshold*); an initial value of the timer T319a used for detection of SDT failure (e.g., *t319a*); or other parameters.

For example, common configuration information for mobile terminated SDT (e.g., *MT-SDT-ConfigCommonSIB*) may comprise at least one of: an RSRP threshold used to determine whether mobile terminated small data transmission (MT-SDT) procedure can be initiated, (e.g., *mt-SDT-RSRP-Threshold*); a data volume threshold used to determine whether SDT can be initiated (e.g., *sdt-LogicalChannelSR-DelayTimer*); an initial value of the timer T319a used for detection of SDT failure (e.g., *t319a*); or other parameters. An SDT procedure may be used for transmission of data and/or signaling over allowed radio bearers in RRC_INACTIVE state (i.e. without the wireless device transitioning to RRC_CONNECTED state. The MAC entity may be configured by RRC with SDT and the SDT procedure may be initiated by RRC layer for MO SDT or MT-SDT. The SDT procedure initiated for MO-SDT can be performed either by random access procedure with 2-step RA type or 4-step RA type (i.e., RA-SDT) or by configured grant Type 1 (i.e., CG-SDT). The SDT procedure initiated for MT-SDT may not be performed by RA-SDT (i.e., RA-SDT is not applicable as specified in clause 5.1.1b), but may be performed either by random access procedure (i.e., with 2-step RA type or 4-step RA type) or by configured grant Type 1 (i.e., CG-SDT).

If an SDT procedure is initiated for MO-SDT, a MAC entity (e.g., running in a wireless device) may set a maximum allowed duration until the next configured grant (CG) occasion during small data transmission (e.g., *MAX_DURATION_TO_NEXT_CG_CG_OCCASION*) to the shortest value of *cg-SDTMaxDurationToNextCG-Occasion*, if configured, among one or more the logical channels configured with this parameter by upper layer and having data for transmission. The MAC entity may further set the *RSRP_THRESHOLD* to the value of *sdt-RSRP-Threshold,* if configured. The *sdt-RSRP-Threshold* value may determine a minimum RSRP level that needs to be met for a wireless device to initiate or continue small data transmissions.

The DL RSRP may need to be above a configured threshold (e.g. *sdt-RSRP-Threshold, cg-SDT-RSRP-ThresholdSSB*), for example, if the *RSRP* of the downlink pathloss reference is higher than *RSRP_THRESHOLD* or *if RSRP_THRESHOLD* is not set and at least one SSB configured for CG-SDT with SS-RSRP above *cg-SDT-RSRP-ThresholdSSB* is available and if either the time gap between the initiation of the SDT procedure and first available CG occasion for initial *CG-SDT* transmission with CCCH message is less than *MAX_DURATION_TO_NEXT_ CG_OCCASION,* or if the *MAX_DURATION_TO_NEXT_CG_OCCASION* is not set, the MAC entity (e.g., running in a wireless device) may indicate to the upper layers that the conditions for initiating SDT procedure are fulfilled. To initiate MO-SDT or MT-SDT,. The SDT procedure may be initiated with either a transmission over RACH (configured via system information) or over Type 1 CG resources (configured via dedicated signaling in *RRCRelease*).

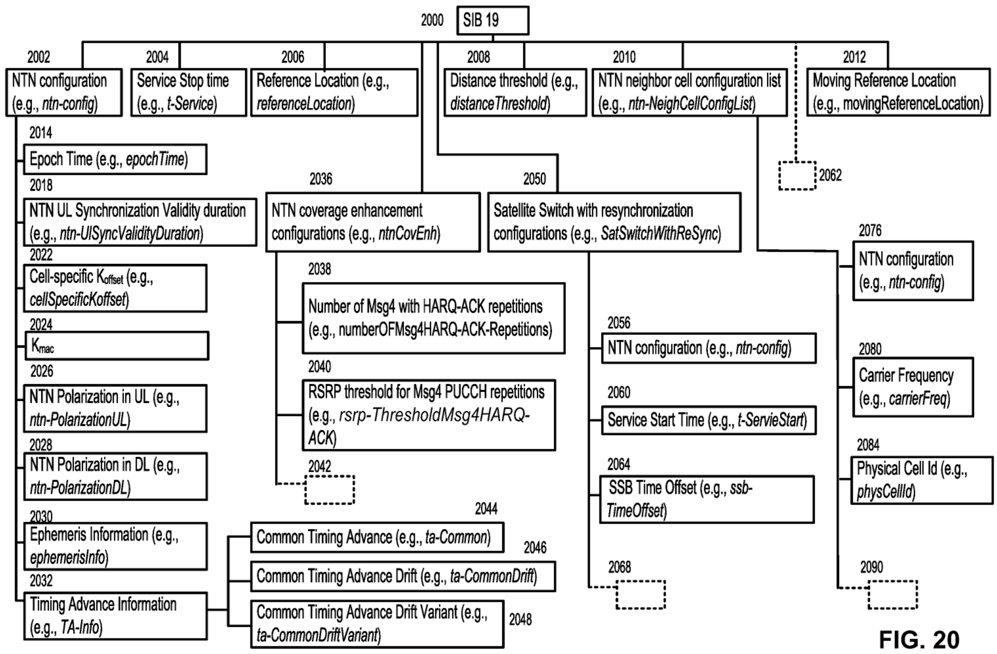

FIG. 20 shows one or more configuration parameters making up a system information block 19 (*SIB19*). The *SIB19* may contain satellite assistance information for NTN access. The *SIB19* as broadcast by a terrestrial network cell may contain NTN-specific parameters for NTN neighbor cells. The *SIB19* may contain NTN-specific parameters for serving cell and optionally NTN-specific parameters for neighbor cells. The *SIB19* may also contain NTN ephemeris. In an NTN cell, the *SIB19* may include serving cell's NTN payload ephemeris and optionally neighboring cell's NTN payload ephemeris.

As shown in FIG. 20, the *SIB19* 2000 may comprise at least one of: NTN specific parameters required for one or more wireless devices (e.g., UE) to access an NR network via NTN access (e.g., *ntn-Config* 2002); time information of when an NTN cell provided via NTN is going to stop serving an area the NTN cell is currently covering (e.g., *t-Service* 2004); reference location of the NTN serving cell provided via NTN (quasi)-Earth fixed cell and is used in location-based measurement initiation by a wireless device which is the *RRC_IDLE* or *RRC_INACTIVE* state (e.g., *referenceLocation* 2006); distance from the NTN serving cell reference location that may be used in location-based measurement initiation by a wireless device which is in the *RRC_IDLE* or *RRC_INACTIVE* state (e.g., *distanceThreshold* 2008); NTN specific parameters of one or more NTN neighbor cells (e.g., *ntn-NeighCellConfigList* 2010); reference location of the serving cell of an NTN Earth-moving cell at a time reference (e.g., *movingReferenceLocation* 2012); NTN-specific coverage enhancement-related configuration parameters (e.g., *ntnCovEnh* 2036); parameters required for satellite switch with resynchronization (e.g., *SatSwitchWithReSync* 2050); or other parameters 2062.

NTN configuration parameters (*ntn-Config* 2002) may further comprise at least one of: end of system information (SI) window where the *SIB19* may be scheduled (e.g., *epochTime* 2014); NTN uplink synchronization validity duration (e.g., *ntn-UlSyncValidityDuration* 2018); a scheduling offset used for the timing relationships that are modified for NTN (e.g., *cellSpecificKoffset 2022*); a scheduling offset provided by network if downlink and uplink frame timing are not aligned at base station (e.g., $K_{mac}$ *2024*); polarization information for uplink transmission on service link (e.g., *ntn-PolarizationUL* 2026); polarization information for downlink transmission on service link (e.g., *ntn-PolarizationDL* 2028); satellite ephemeris either in terms of position and velocity state vector or in format of orbital parameters (e.g., *ephemerisInfo* 2030); timing advance information (e.g., *ta-Info* 2032); timing advance report (e.g., *ta-Report*); or other parameters.

In NTN DL and UL may be frame aligned at the uplink time synchronization reference point (RP). To accommodate a propagation delay in NTNs, several timing relationships may be enhanced by a common timing advance (e.g., *ta-Common* 2044) and two offsets - a $K_{offset}$ 2022 and a $K_{mac}$ 2024. Common TA is a configured timing offset that may be equal to the roundtrip time (RTT) between the RP and an NTN base station. The $K_{offset}$ is a configured scheduling offset that may need to be larger or equal to the sum of the service link RTT and the Common TA. The scheduling $K_{offset}$ may be used to allow the wireless device sufficient processing time between a downlink reception and an offset uplink transmission. The $K_{mac}$ is a configured offset that may be approximately equal to an RTT between the RP and the NTN base station. The $K_{mac}$ may be used to delay the application of a downlink configuration indicated by a MAC CE command on PDSCH. It may be provided by the network (in the *SIB19*) when downlink and uplink frame timing are not aligned at base station. The $K_{mac}$ may be also used in the random access procedure, to determine a start time of a random access response (RAR) window/MsgB window after a Msg1/MsgA transmission.

For convenience, terminologies like NTN base station, satellite base station, NTN base station, satellite base station may be used interchangeably. Using SIB19, an NTN serving cell may transmit/broadcast valid ephemeris information and common TA parameters to one or more wireless devices (e.g., UEs). A wireless device (e.g., UE) may need a valid global navigation satellite system (GNSS) position, satellite ephemeris and common TA information before connecting to an NTN cell. To achieve synchronization, before and during connection to an NTN cell, the wireless device may compute an RTT between the wireless device and the RP based on GNSS position information, the satellite ephemeris, and the Common TA parameters. The wireless device may compute the frequency Doppler shift of the service link, and autonomously pre-compensate for it in uplink transmissions, by considering wireless device position and the ephemeris. In connected mode, the wireless device may continuously update the timing advance (TA) and frequency pre-compensation. The wireless device may be configured to report TA during RACH procedures or in connected mode. The timing advance information (e.g., *ta-Info* 2032) may comprise at least one of: a network-controlled common timing advance (TA) value (e.g., *ta-Common* 2044); a drift rate of the common TA (e.g., *ta-CommonDriftVariant* 2046); or a drift rate variation of the common TA (e.g., *ta-CommonDriftVariant* 2048). NTN-specific coverage enhancement-related configuration parameters (e.g., *ntnCovEnh* 2036) may comprise at least one of: a number/quantity of repetition slots for PUCCH transmission with HARQ-ACK information for Msg4 (e.g., *numberOfMsg4HARQ-ACK-Repetitions* 2038); a threshold for a wireless device to determine one or more MAC entity configurations related to PUCCH repetition of Msg4 HARQ-ACK (e.g., *rsrp-ThresholdMsg4HARQ-ACK* 2040); or other parameters 2042. Parameters required for satellite switch with resynchronization (e.g., *SatSwitchWithReSync* 2050) may comprise at least one of: one or more NTN configuration parameters of a target satellite (as indicated by *ntn-Config* 2056); time information on when the target satellite is going to start serving an area currently covered by the source satellite (e.g., *t-ServiceStart* 2060); a time offset of an SSB from a target satellite at its uplink time synchronization reference point with respect to an SSB from a source satellite at its uplink time synchronization reference point (e.g., *ssb-TimeOffset* 2064); or other parameters 2068. The *ssb-TimeOffset* 2060 is given in terms of a number/quantity of subframes.

NTN specific parameters of one or more NTN neighbor cells (e.g., *ntn-NeighCellConfigList* 2010) may comprise at least NTN configuration parameters (e.g., *ntn-Config 2076); carrier frequency (e.g., *carrierFreq* 2080); or physical cell id (e.g., *PhysCellId*) of one or more neighbor NTN cells. A system frame number (SFN) and sub-frame number indicated in the *epochTime* may refer to the SFN and sub-frame of the serving cell. The NTN uplink synchronization validity duration (e.g., *ntn-UlSyncValidityDuration* 2018) may be configured by the network for assistance information which indicates the maximum time duration (from *epochTime* 2014) during which a wireless device can use assistance information without having to acquire new assistance information.

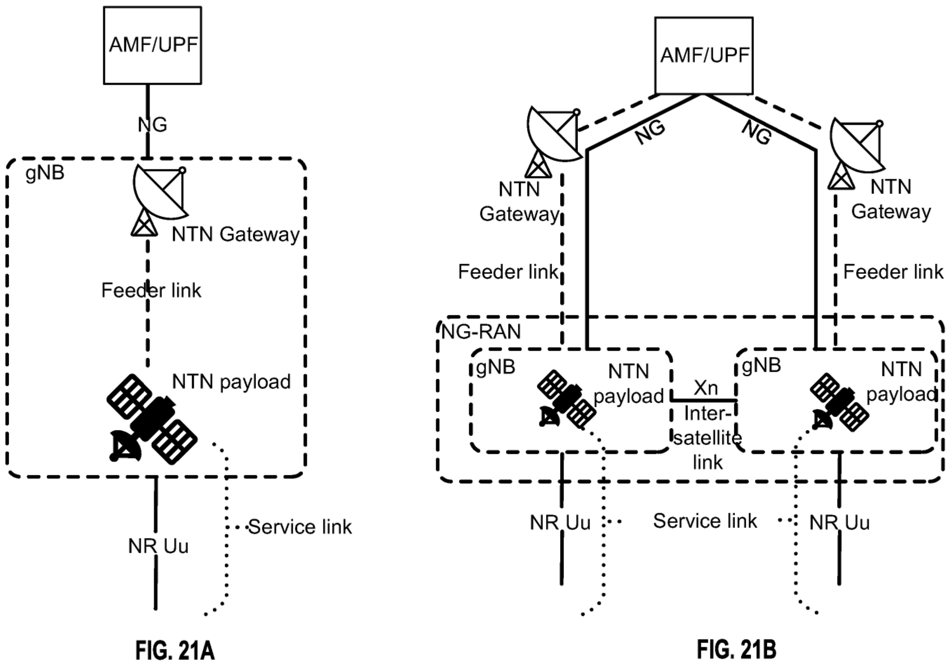

FIG. 21A and FIG. 21B show examples of a non-terrestrial network (NTN) providing non-terrestrial NR access to one or more wireless devices using an NTN payload and an NTN gateway, depicting a service link between the NTN payload and a wireless device, and a feeder link between the NTN gateway and the NTN payload. The feeder link may comprise, for example, a radio link from an earth station (e.g., NTN gateway) at a given location to a space station (e.g., satellite), or vice versa, conveying information for a space radiocommunication service. In FIG. 21A the payload may be transparent; in FIG. 21B the payload may be regenerative and hosts at least a base station such as an eNB or a base station.

The term satellite may refer to a space-borne vehicle orbiting the Earth embarking the NTN payload. A satellite may be a space-borne vehicle embarking a bent pipe payload or a regenerative payload telecommunication transmitter, placed into low-earth orbit (LEO) typically at an altitude, for example, between 500 km to 2000 km, medium-earth orbit (MEO) typically at an altitude, for example, between 8000 to 20000 km, or geostationary-satellite earth orbit (GEO), for example, at 35 786 km altitude.

The term NTN payload may refer to a network node, embarked on board a satellite or high altitude platform station, providing connectivity functions, between the service link and the feeder link. Non-terrestrial networks comprise at least one of networks, or segments of networks, using an airborne or space-borne vehicle to embark a transmission equipment relay node or base station. The airborne vehicle may comprise at least one of: unmanned aircraft systems (UAS) encompassing tethered UAS (TUA), lighter than air UAS (LTA), heavier than air UAS (HTA), operating in altitudes typically between 8 and 50 km including high altitude platforms (HAPs). The space-borne vehicle may comprise at least satellites including LEO satellites, MEO satellites, GEO satellites as well as highly elliptical orbiting (HEO) satellites. An NTN gateway (GW) may comprise at least an earth station or gateway that is located at the surface of Earth and provides sufficient RF power and RF sensitivity for accessing to the satellite and/or HAPs. NTN gateway is a transport network layer (TNL) node.

A geosynchronous orbit may be an earth-centered orbit at approximately 35786 kilometers above Earth's surface and synchronized with Earth's rotation. A geostationary orbit is a non-inclined geosynchronous orbit, i.e. in the Earth's equator plane. Geostationary earth orbit may be a circular orbit at 35,786 km above the Earth's equator and following the direction of the Earth's rotation. An object in such an orbit has an orbital period equal to the Earth's rotational period and thus appears motionless, at a fixed position in the sky, to ground observers. Non-geostationary satellites are mainly satellites (LEO and MEO) orbiting around the Earth with a period that varies approximately between 1.5 hour and 10 hours. It may be essential to have a constellation of several non-geostationary satellites associated with handover mechanisms to ensure service continuity.

A non-geosynchronous orbit (NGSO) may be an earth-centered orbit with an orbital period that does not match Earth's rotation on its axis. This may include LEO and MEO.

The NTN transparent payload may transparently forward the radio protocol received from the one or more wireless devices (via the service link) to the NTN Gateway (via the feeder link) and vice-versa. The regenerative payload terminates a Uu interface between one of the one or more wireless devices (via the service link), and the NG interface toward the 5GC (via the feeder link).

For the NTN, one or more of the following may apply:

- A Tracking Area may correspond to a fixed geographical area. Any respective mapping is configured in the RAN;

- A *Mapped Cell ID* which may correspond to a fixed geographical area in the NTN.

The cell identity used in the following cases may correspond to a *Mapped Cell ID* irrespective of the orbit of the NTN payload or the types of service links supported:

- The Cell Identity indicated by the base station to the Core Network as part of the user location information;

- The Cell Identity used for Paging Optimization in NG interface;

- The Cell Identity used for Area of Interest;

- The Cell Identity used for PWS.

The mapping between *Mapped Cell IDs* and geographical areas may be configured in the RAN and Core Network. NTN may be deployed to provide coverage with earth-moving cell, quasi-earth-fixed cell and earth-fixed cell which are supported respectively by the following three types of service link:

- Earth-fixed: provisioned by beam(s) continuously covering a given geographical area constantly (e.g., the case of GSO satellites);

- Quasi-Earth-fixed: provisioned by beam(s) covering one geographic area for a limited period and a different geographic area during another period (e.g., the case of NGSO satellites generating steerable beams);

- Earth-moving: provisioned by beam(s) whose coverage area slides over the Earth surface (e.g., the case of NGSO satellites generating fixed or non-steerable beams).

NTN may support the following additional trigger conditions upon which wireless device may execute conditional handover (CHO) to a candidate cell:

- The RRM measurement-based;

- A time-based trigger condition; and

- A location-based trigger condition.

Time-based or location-based trigger conditions may be configured independently from radio resource management (RRM) measurement-based trigger conditions for CHO in NTN in some exampless, e.g., when the service discontinuity gap time length is zero or negligible. When a time-based trigger condition is used, a source base station may signal corresponding parameters to a target base station via the *Source NG-RAN Node to Target NG-RAN Node Transparent Container* in an NG-C based handover or Xn based handover. The source base station may signal one or more CHO configurations to a wireless device in an RRC reconfiguration message during a handover. The source base station may consider the time indicated to the wireless device to decide when to start early data forwarding to the target base station, if a time-based trigger condition is used. Time-based CHO may be performed via RACH-less.

According to a technique called satellite switch with resynchronization, a wireless device capable of hard satellite switch with resynchronization in RRC_CONNECTED may initiate the procedure when *SatSwitchWithReSync* and *t-Service* are included in *SIB19.* wireless device may start acquiring downlink (DL) synchronization with the SpCell served by the satellite indicated by *ntn-Config* in *SatSwitchWithReSync* between the time indicated by *t-ServiceStart* and the time indicated by *t-Service* for the serving cell, if *t-ServiceStart* is included in *SIB19* and the wireless device supports soft satellite switch with resynchronization, for example, upon initiating the procedure. The NTN control function may determine the point in time when the feeder link switches over between two base stations is performed. The transfer of the affected wireless device(s)' context between the two base stations at feeder link switch over may be performed using either NG based or Xn based handover, and it may depend on the base stations' implementation and configuration information provided to the base stations by the NTN Control function.

Upon both hard and soft satellite switch over in the quasi-Earth fixed example with a given SSB frequency and a given base station, the satellite switch with re-synchronization procedure may be supported. The satellite switch with re-sync may circumvent a L3 mobility for wireless devices in the cell by maintaining a given PCI on the geographical area covered by quasi-Earth fixed beam. Conditional handover (CHO) may be configured simultaneously with the satellite switch with re-sync procedure. The wireless device may start synchronizing with a target satellite before a source satellite ends serving the cell, for example, for soft satellite switch over. It may not be required for the wireless device to be connected to the source satellite when the wireless device switches to the target satellite. The wireless device may start synchronizing with the target satellite after the switch to the target satellite is initiated, for example, for hard satellite switch over.

Satellites, especially those of the NGSO type are subject to severe energy constraints because the NGSO type satellites may spend nearly half a day on the other side of the Sun. This may make solar-based energy harvesting a challenge and hence, energy saving by a base station hosted on a satellite payload may become necessary. In order to save energy, a base station or NG-RAN node owning a capacity booster cell may autonomously make a decision to switch-off the capacity booster cell. The decision may be based on cell load information. Another similar mechanism is called cell discontinuous transmission (DTX) and discontinuous reception (cell DTX/DRX). This feature may be applicable to wireless devices in RRC_CONNECTED state and it may not impact the random access procedure, SSB transmission, paging, and system information broadcasting.

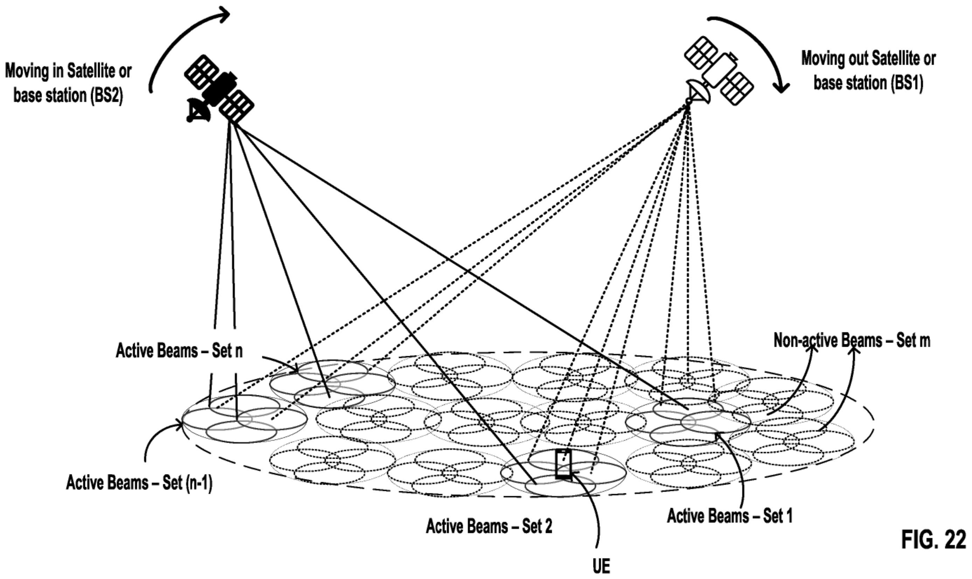

FIG. 22 shows an example where a base station operates one or more beams under severe energy constraints. In an example terrestrial network (TN) or non-terrestrial network (NTN) a base station may operate one or more beams. Limited availability of energy may pose a huge challenge to have many of the one or more beams active simultaneously with the nominal equivalent isotropic radiated power (EIRP) density per beam, for example, in case the base station is powered by one or more batteries. Activating, illuminating or projecting many of the one or more beams at the same time may be a challenge given a hard energy constraint. Under such circumstances, an objective may be to explore how to increase the number of beams that can be activated simultaneously, and to ensure that as many wireless devices (e.g., one or more UEs) as possible can be served across as many footprints of the one or more beams as possible while maximizing an overall throughput of the base station and ensuring that many of the one or more beams are kept alive even without traffic but allowing new users to join - thus, preventing impact on end-user quality of service (QoS) of users.

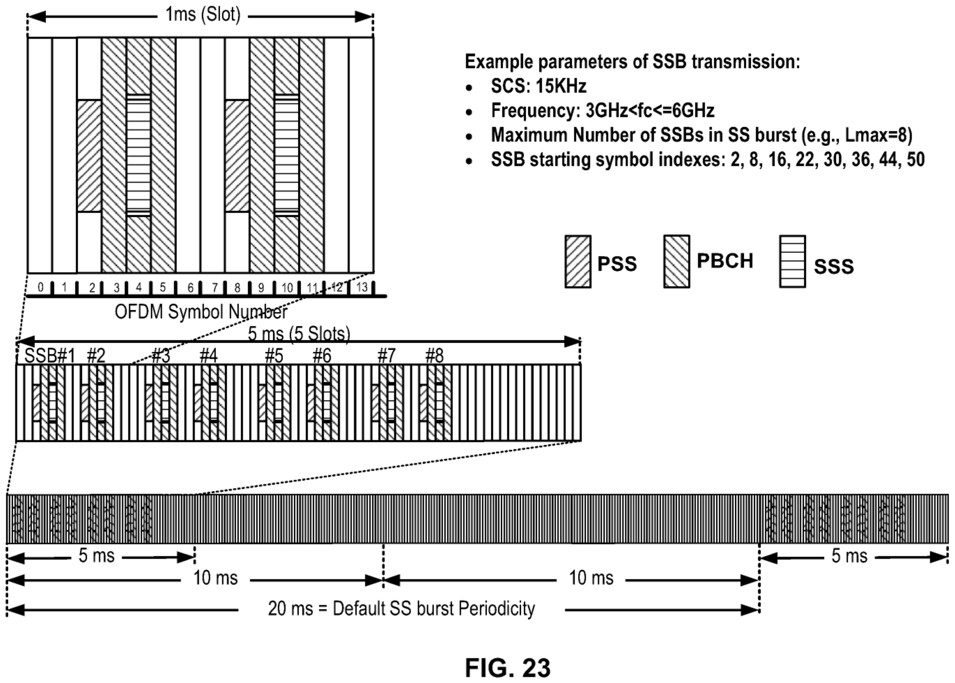

FIG. 23 shows an SSB transmission by a base station in a cell. SSBs may be sent (e.g., transmitted) in a batch by forming a synchronization signal (SS) burst (e.g., one SSB per beam). A collection of SS bursts may be referred to as an SS burst set. The maximum number of SSBs in an SS burst may be frequency-dependent and it may be 4 for carrier frequency (fc) below 3 GHz, 8 for carrier frequency which lies between 3 GHz and 6 GHz), or 64 for FR2. Each SSB may be identified by a unique number called SSB index.

FIG. 23 considered a case where a base station uses an SCS of 15 kHz, a carrier frequency in the region between 3GHz and 6GHz. For this carrier frequency range, the maximum number of SSBs may be 8. As depicted in FIG. 23, SSB#1 starts at symbol#2, SSB#2 starts at symbol#8, SSB#3 starts at symbol#16, SSB#4 starts at symbol#22, SSB#5 starts at symbol#30, SSB#6 starts at symbol#36, SSB#7 starts at symbol#44, and SSB#8 starts at symbol 50. The SSB burst may be sent (e.g., transmitted) in the first half of a radio frame with 10 ms. A cell may comprise one or more beams where each beam is identified by an SSB index.

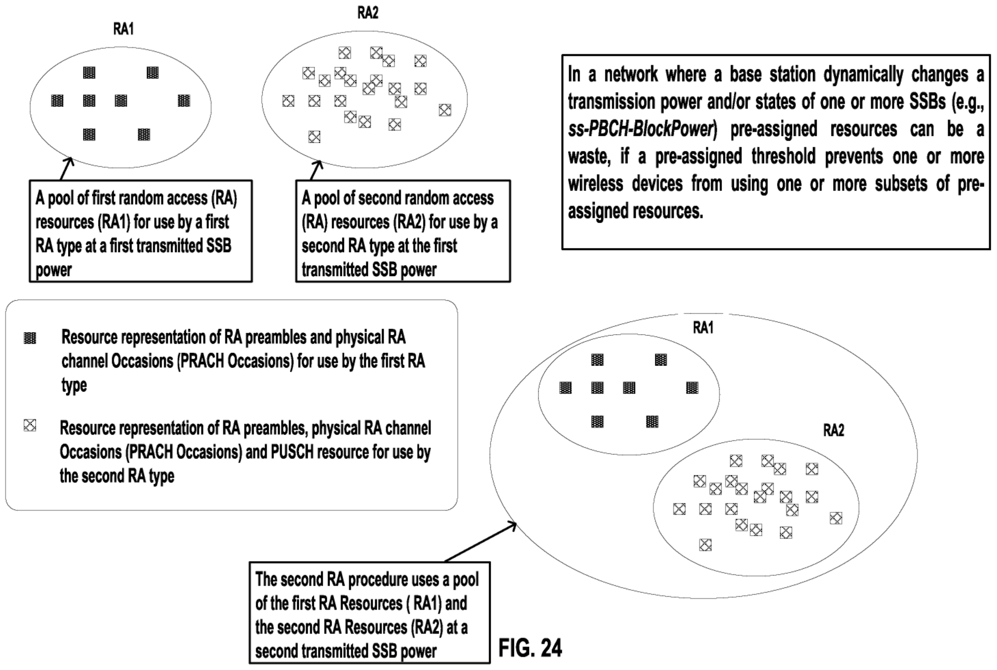

FIG. 24 shows an example where energy savings are limited when a base station does not dynamically change SSB transmission power. In some networks base station may not dynamically change a transmission power of one or more synchronization signal blocks (SSBs) to save energy, for example, in case there are no hard energy constraints. The base station may allocate resources (e.g., random access resources) for one or more wireless devices (e.g., UEs) to use when one or more preset received power threshold is satisfied or met by the one or more wireless devices, for example, if/when the base station sends (e.g., transmits) one or more SSBs at a constant power. However, in a network where a base station dynamically changes the transmission power of one or more SSBs (e.g., *ss-PBCH-BlockPower*), pre-assigned resources may be a waste, for example, if one or more pre-set thresholds prevent the one or more wireless devices from using one or more subsets of pre-assigned resources. This may cause artificial resource shortage that may adversely impact quality of experience as perceived by end users. This is because although there may be enough allocated resources, one or wireless devices may not be able to use the allocated resources. One or more wireless devices may not be able to meet or satisfy the one or more pre-set thresholds, and may be prevented from using the allocated resources, for example, if/when a transmission power of one or more SSBs is reduced.

As shown in FIG. 24, a base station may allocate/configure a pool of first random access resources (e.g., RA1) meant for use of a first RA type by one or more wireless devices at a first received SSB power. The base station may also configure a pool of second random access resources (e.g., RA2) meant for use of a second RA type by one or more wireless devices at a first received SSB power. The first RA (RA1) resources may comprise at least one of a first set of RA preambles or a first set of physical random access channel (PRACH) occasions. The second RA (RA2) resources may comprise at least one of: a second set of RA preambles, a second set of physical random access channel (PRACH) occasions or a second set of PUSCH resources. The base station may send (e.g., transmit) a first threshold for the one or more wireless devices to select the first RA type. The base station may allocate/configure the first RA resources and the second RA resources per SSB. The base station may allocate/configure the first RA resources and the second RA resources per SS/PBCH block.

The first RA type may be one of a contention-based random access (CBRA) 2-step RA type, or a contention-free 2-step RA type. The second RA type may be one of a CBRA 4-step RA type, a prioritized CBRA 4-step RA type or a contention-free 4-step RA type.

A received power of the one or more SSBs by a wireless device may be too low such that the wireless device may not meet the first threshold, for example, if/when a base station reduces the transmission power of one or more SSBs. The one or more devices may not use the first random access resources, for example, if one or more wireless devices determines that the received power of the one or more SSBs is below the first threshold. This may be a waste.

In a potential implementation of at least some technologies, a fallback from 2-step random access (RA) type to 4-step RA type may happen due to at least one of the following reasons: a wireless device not receiving a contention resolution message (e.g., MsgB), poor radio conditions or high network load. Using existing technologies may lead to one or more wireless devices falling back to one of the first RA type or the second RA type. Using existing technologies may cause unnecessary congestion while some allocated resources are not used and wasted. When the base station reduces the transmission power of the one or more SSBs, the received power of the one or more SSBs may be low. The one or more wireless devices may use, for instance, the second RA type and use the second RA resources, for example, if one or more wireless devices determine that the received power of the one or more SSBs is below the first threshold. This may cause congestion of the second RA resource while the first RA resources are not used.

Embodiments of the present disclosure are related to an approach for solving the problems as described herein. These and other features of the present disclosure are described further below.

A base station may send (e.g., transmit), to a wireless device and using a system information block (SIB), a resource configuration information indicating/notifying that first RA resources of an SSB of a cell may be used for a first type of RA type and second RA resources of the SSB of a cell may be used for the second type of RA type. The base station may send (e.g., transmit) an indication/notification when a transmission power of one or more SSBs is changed. Based on receiving the indication/notification, the wireless devices may send (e.g., transmit), via the first RA resource and for the second type RA procedure, an RA preamble. Given that the base station knows when it reduces the transmission power of the SSB, the base station may timely provide the notification for the wireless device to use the first RA resources for the second RA type. The base station knows in terms of at what (reduced) transmission power of the SSB, a received power of the SSB as measured by the wireless devices may be less than the first threshold such that the wireless device may not use the first RA resources. A timely notification from the base station may ensure that the first RA resources are not wasted. A base station may send (e.g., transmit) the notification in case the base station determines that using the first RA type may not be suitable. The base station determines that using a given RA type may not be suitable due to at least one of: prone to lots of failures and hence, may lead to wastage of resource while impacting user QoS/QoE; or one or more receivers (e.g., TRP) at the base station operating at a lower power in comparison with an earlier used power; when one or more transmission power restrictions/controls apply to, for example, PUSCH. The base station may send a common notification to one or more wireless devices as there may be almost line of sight (LOS) between a satellite base station and the one or more wireless devices, for example, in case a base station is hosted on a satellite.

Example embodiments may comprise a base station performing at least one of the following actions: determining one or more (future) transmission powers of the SSB (of a beam) over a time window (e.g., SSB transmission power configuration in time-domain), sending (e.g., transmitting) the one or more (future) transmission powers of the SSB (of the beam) over the time window (e.g., the SSB transmission power configuration in time-domain) to one or more wireless devices and/or sending (e.g., transmitting) indication/notifications of one or more expected behaviors of the one or more wireless devices depending on RRC connection states of the one or more wireless devices at the one or more (future) transmission powers of the SSB (of the beam). The time window may be expressed in terms of at least one of: absolute time; in number of subframes; or in number of radio frames. Given that the base station may operate one or more SSBs within a cell, the base station may send (e.g., transmit) the SSB transmission power configuration in time-domain for each of the one or more SSBs in the cell.

The base station may determine one or more (future) transmission powers of the SSB (of a beam) over a time window (e.g., SSB transmission power configuration in time-domain) depending at least on one of: energy capacity; future user/traffic demand and QoS expected; or geographical area(s) to be served. A transmission power of an SSB may refer to an average energy per resource element (EPRE) of the resources elements that carry secondary synchronization signals in dBm that a network used for SSB transmission (e.g., *ss-PBCH-BlockPower*).

A base station may need to send (e.g., transmit) one or more beams under energy constraints. Each of the one or more beams may be identified by an SSB index (e.g., sb-Index). An SSB index (e.g., *ssb-Index*) may be used to indicate the SS/PBCH index of the SS/PBCH block corresponding to the random access attempt. Each of the one or more beams may be associated with a single SSB. For example, each beam may comprise an SSB. Due to energy constraints, each beam may take at least one of the following states for different time duration/period - an off state, a common messages or common control signaling state or an active traffic state.

The off state may mean that there is neither transmission nor reception of common control channels/signals or active traffic specific channels/signals. The common messages or common control signaling state may mean there are common control channels/signals are sent (e.g., transmitted) and received. The active traffic state may mean common control channels/signals and active traffic specific channels/signals are sent (e.g., transmitted) and received.

The base station may send (e.g., transmit) different states of a beam (e.g., beam DTX/DRX configuration) to one or more wireless devices. In the off state, a wireless device may not send (e.g., transmit) RA preamble. For example, given that within a cell a base station may send (e.g., transmit) one or more SSBs, embodiments of the current disclosure may teach that a base station timely send (e.g., transmit) one or more transmission powers of the one or more SSBs over a time window (e.g., SSB transmission power configuration in time-domain) and/or time duration of one or more states of each beam over the time window. For example, given that within a cell a base station may send (e.g., transmit) one or more beams, where each beam is identified by an SSB index, embodiments of the current disclosure may teach that a base station timely send (e.g., transmit) at least the one or more transmission powers of the one or more SSBs over the time window (e.g., SSB transmission power configuration in time-domain) and/or time duration of one or more states of each beam over the time window (e.g., beam DTX/DRX configuration).

For example, due to energy constraints, each SSB may be associated with at least one of the following states for different time duration/period - an off state, a common messages or common control signaling state or an active traffic state. The off state may mean that there is neither transmission nor reception of common control channels/signals or active traffic specific channels/signals. The common messages or common control signaling state means that an SSB may be associated with scheduling of common control channels/signals. The active traffic state means that the SSB may be associated with common control channels/signals and active traffic specific channels/signals. This means that each SSB may have an SSB-specific DTX/DRX pattern. The SSB-specific DTX/DRX pattern may be called SSB DTX/DRX configuration (e.g., ssbDTX/DRX-Config). The terminologies such as beam DTX/DRX configuration and SSB DTX/DRX configuration mean the same and hence, they are used interchangeably throughout the current disclosure.

A base station may operate one or more cells. The base station may operate one or more SSBs per cell. The base station may operate one or more beams per cell. A beam may be identified by an SSB index. For example, each of the one or more beams may be associated with a single SSB time position or an SSB index. For example, given that the base station operates under energy-constraints, the base station may dynamically change transmission powers of the one or more SSBs used within a cell.

The base station may be hosted by a satellite. The satellite may be of a regenerative payload type. The satellite may be of a non-geosynchronous orbit type. Hard energy-constraints of a base station operation may be further constrained by limited feeder link bandwidth.

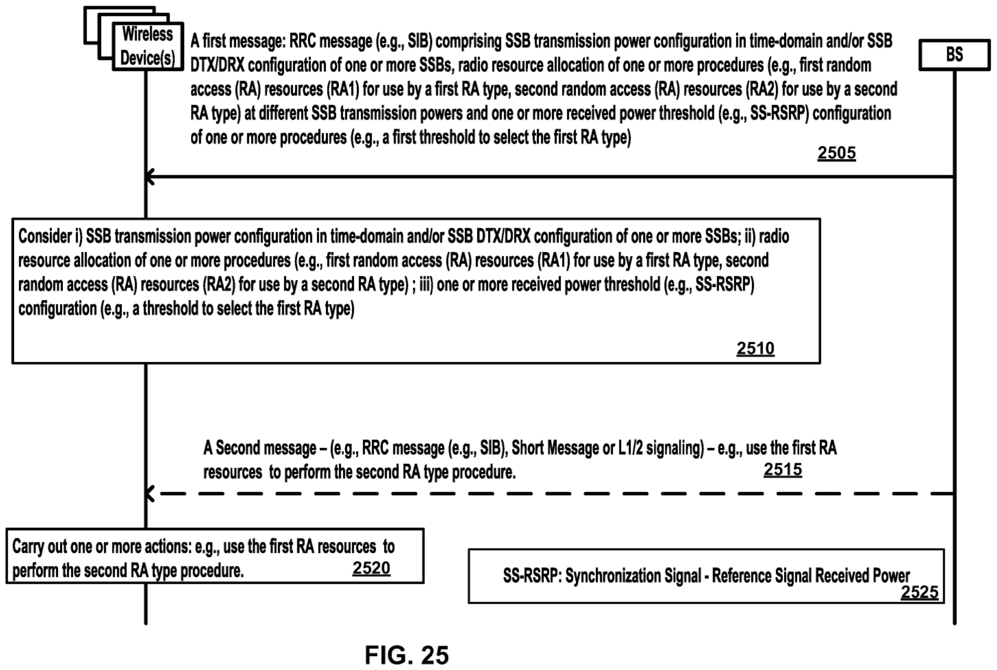

FIG. 25 shows an example where a base station operates under energy constraints. A base station may send (e.g., transmit), to a wireless device (or a group of wireless devices), a first message using at least one of: one or more RRC messages (e.g., MIB, SIB1, SIB19, or cell specific RRC, UE-specific RRC messages). The first message may be implemented at least based on examples described in relation to FIG. 19.

At step 2505, the first message may comprise at least one of: cell selection information (e.g., *cellSelectionInfo 1902*); cell access related information (e.g., *cellAccessRelatedInfo* 1904); serving cell common configuration information (e.g., *serving Cell ConfigCommon* 1906); wireless device timers and constants (e.g., *ue-TimersAndConstants* 1908); idle mode measurement configurations (e.g., e.g., *idleModeMeasurementsNR* 1910); or other parameters.

The serving cell common configuration information (e.g., *servingCell ConfigCommon* 1906) of the first configuration parameters is of type, *ServingCellConfigCommonSIB,* which may comprise cell specific parameters of a serving cell of one or more wireless devices (e.g., UEs). The *ServingCellConfigCommonSIB* may comprise at least one of: downlink common configuration parameters (e.g., *downlinkConfigCommon* 1918); uplink common configuration parameters (*uplinkConfigCommon* 1920); average energy per resource element (EPRE) of the resources elements that carry secondary synchronization signals in dBm that a network used for SSB transmission (e.g., *ss-PBCH-BlockPower* 1922); or other parameters.

The first message may further comprise at least one of: SSB transmission power configuration in time-domain of each of one or more SSBs/beams the base station operates; SSB/beam DTX/DRX configuration of each of one or more SSBs/beams the base station operates; radio resource allocation of one or more procedures (e.g., first random access (RA) resources (RA1) for use by a first RA type, second random access (RA) resources (RA2) for use by a second RA type) and configuration of one or more received power thresholds (e.g., thresholds associated with synchronization signal reference signal received power (SS-RSRP) measurements) for one or more procedures (e.g., a first threshold used by the UE to select the first RA type based on comparison between a measured SS-RSRP and the configured threshold).

The base station may send (e.g., transmit) the first message to one or more wireless devices. At step 2510, a wireless device may receive the first message and consider at least one of: SSB transmission power configuration in time-domain and/or SSB DTX/DRX configuration of one or more SSBs; ii) radio resource allocation of one or more procedures (e.g., first random access (RA) resources (RA1) for use by a first RA type on meeting a first threshold, second random access (RA) resources (RA2) for use by a second RA type); iii) one or more received power threshold (e.g., for SS-RSRP 2525) configuration (e.g., the first threshold to select the first RA type). The base station may allocate/configure radio resources for one or more procedures (e.g., first random access (RA) resources (RA1) for use by a first RA type on meeting a first threshold, second random access (RA) resources (RA2) for use by a second RA type) per SSB. The base station may configure one or more thresholds (e.g., threshold for SS-RSRP 2525) per SSB.

A wireless device measures a received power of an SSB and uses allocated resources based on a measured received power of the SSB. The wireless device may use the first random access (RA) resources (RA1) for use by a first RA type when the received power of the SSB is greater than the first threshold. The wireless devices may send (e.g., transmit), via the first RA resource and for the first type RA procedure, an RA preamble, when the received power of the SSB is greater than the first threshold. The wireless device may send (e.g., transmit), via the first RA resource and for the first type RA procedure, an RA preamble, on meeting the first threshold. The wireless device may send (e.g., transmit), via the second RA resource and for the second type RA procedure, an RA preamble, when the received power of the SSB is less than the first threshold. The wireless devices may send (e.g., transmit), via the second RA resource and for the second type RA procedure, an RA preamble, on not meeting the first threshold.

A received power as measured by a wireless device may be one of the following: synchronization signal - reference signal received power (SS-RSRP 2525); synchronization signal - reference signal received quality (SS-RSRQ); or synchronization signal - signal-to-interference plus noise ratio (SS-SINR). For example, given that the base station dynamically changes the transmission power of the SSB, not timely informing one or more wireless devices about the change of transmission power may lead to wastage of resources. If a received power of the SSB as measured by each of one or more wireless devices is less than the first threshold, a wireless device (e.g., each wireless device) may be forced to use the second RA resource and for the second type RA. This may cause congestion while the first RA resources are unused and wasted.

At step 2515, the base station may send (e.g., transmit) a second message when the base station dynamically changes the transmission power of the SSB, for example, as a way to alleviate unnecessary congestion and wastage of resources. Given that the base station knows when it reduces the transmission power of the SSB, the base station may timely provide the notification for the wireless device to use the first RA resources for the second RA type. The base station knows in terms of at what (reduced) transmission power of the SSB, a received power of the SSB as measured by the wireless devices may be less than the first threshold such that the wireless device may not be able use the first RA resources. A timely notification from the base station may ensure that the first RA resources are not wasted.

A base station may send (e.g., transmit) a second message to one or more wireless devices in case the base station determines that using the first RA type may not be suitable. The base station determines that using a given RA type may not be suitable due to at least one of: prone to lots of failures and hence, may lead to wastage of resource while impacting user QoS/QoE; one or more receivers (e.g., TRP) at the base station operating at a lower power in relation to an earlier used power; or when one or more transmission power restrictions/controls apply to, for example, PUSCH.

A wireless device may receive the second message indicating/notifying the use of the first RA resources for the second RA type. For example, at step 2520, on receiving the second message, the wireless devices may send (e.g., transmit), via the first RA resource and for the second type RA procedure, an RA preamble. For example, on receiving the second message, the wireless devices may send (e.g., transmit), via at least one of the first RA resource or the second RA resources and for the second type RA procedure, an RA preamble. A timely notification from the base station may ensure that the first RA resources are not wasted.

The first RA type may be of the 2-step RA type. If a wireless device is configured by a base station initially for the first RA type and later a wireless device uses the first RA resources to send (e.g., transmit) a preamble as part of the 4-step RA type, the wireless devices which is configured with one or more PUSCH resources for sending (e.g., transmitting) MsgA may use the one or more PUSCH resources for other purposes. The wireless device which is in the RRC_CONNECTED state may use the one or more PUSCH resources in a conflict-free manner by adopting a listen before talk (LBT) mechanism. If *maxEnergyDetectionThreshold* is set to -85 dBm, the wireless device may interpret any detected energy level above -85 dBm as an indication/notification that the one or more PUSCH resources is occupied. The wireless device may then refrain from using the one or more PUSCH resources for transmission. Conversely, if the detected energy is below this threshold, the channel may be considered available for use by the wireless device.

The base station may send (e.g., transmit) the second message using at least one of the following: one or more system information messages (e.g., SIB19); a dedicated/group paging message; a short massage; a wake up signal; a dedicated signaling (e.g., RRC reconfiguration); or L1/L2 signaling such as downlink control information (DCI) or medium access control control element (MAC CE). If a wireless device does not receive the second message indicating/notifying the use of the first RA resources for the second RA type, the wireless devices may send (e.g., transmit), via the second RA resource and for the second type RA procedure, an RA preamble if a received power of the SSB as measured by the wireless devices is less than the first threshold. If this is because the base station reduces the transmission power of the SSB, one or more wireless devices may not be able to meet the first threshold. In the absence of the second message, one or more devices may use the second RA resources causing congestion while the first RA resources are not used.

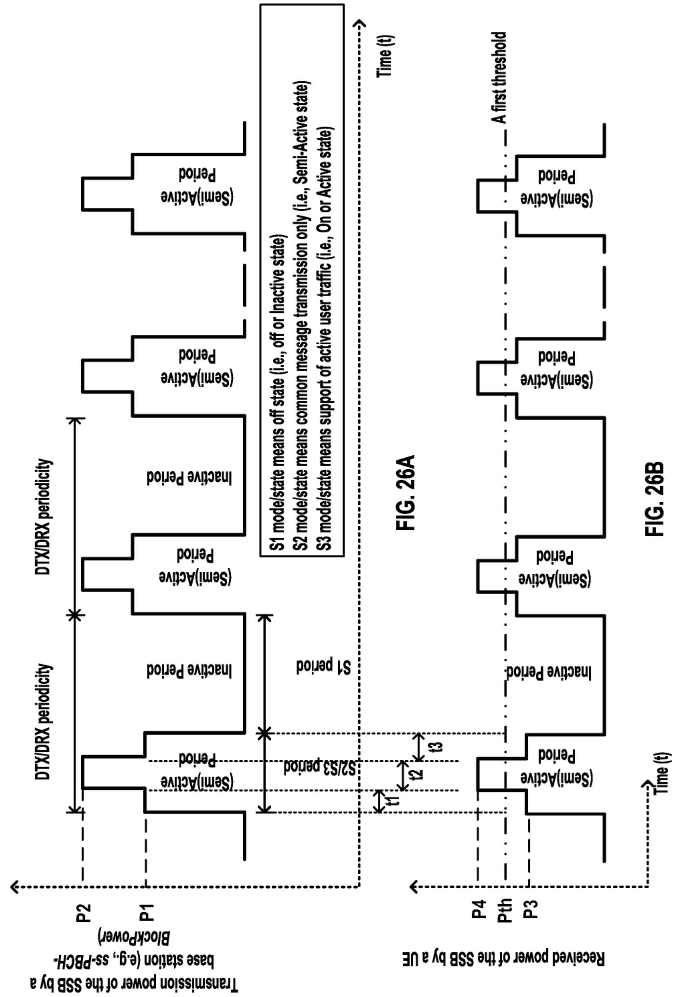

FIG. 26A shows SSB transmission power configuration in time-domain and/or SSB DTX/DRX configuration of an SSB. For example, due to energy constraints, a base station may dynamically change a transmission power of the SSB. For example, depending on energy constraints, the base station may send (e.g., transmit) the SSB at one or more power levels (e.g., P1, P2, P3,...). As shown in FIG. 26A, the base station may send (e.g., transmit) the SSB at power P1, P2 and P1 for time periods t1, t2 and t3 respectively.

FIG. 26B shows received powers of the SSB (e.g., SS-RSRP) at different time periods. If a transmission power of an SSB is P1, a respective received power of the SSB may be P3. If the transmission power of the SSB is P2, the respective received power of the SSB may be P4. The first threshold may be denoted by Pth. As depicted in FIG. 26B, a received power, P3 may be less than Pth whereas a received power, P4 is greater than Pth. For example, constant path loss and channel impairment may be considered across period t1, t2 and t3 to easily teach inventive steps taken by the present example.

The base station may send (e.g., transmit) the second message at the start of t1 or t3 because one or more wireless devices may use the second RA resources for the second RA type while the first RA resources are unused. the base station may send (e.g., transmit) the second message at the start of t1 or t3, for example, for balancing resource usage. The base station may timely provide the notification for the wireless device to use the first RA resources for the second RA type, for example, given that the base station knows when it reduces the transmission power of the SSB. The base station may know in terms of at what (reduced) transmission power of the SSB, a received power of the SSB as measured by the wireless devices may be less than the first threshold such that the wireless device may not be able use the first RA resources. A timely notification from the base station may ensure that the first RA resources are not wasted.

A base station may send (e.g., transmit) a second message to one or more wireless devices in case the base station determines that using the first RA type may not be suitable. The base station may determine that using a given RA type may not be suitable due to at least one of: prone to lots of failures and hence, may lead to wastage of resource while impacting user QoS/QoE; or one or more receivers (e.g., TRP) at the base station operating at a lower power in relation to an earlier used power.

A wireless device may receive the second message indicating/notifying the use of the first RA resources for the second RA type. For example, on receiving the second message, the wireless devices may send (e.g., transmit), via the first RA resource and for the second type RA procedure, an RA preamble. A timely notification from the base station may ensure that the first RA resources are not wasted.

A base station may send (e.g., transmit) the first message comprising at least an SSB transmission power configuration in time-domain of a sent (e.g., transmitted) SSB. The first message may additionally comprise an indication/notification expecting one or more wireless devices to use, for instance, the first RA resources for the second RA type, for instance, during t1 and t3. This means that the base station may not have to send a second message.

A wireless device may receive the first message comprising at least an SSB transmission power configuration in time-domain of a sent (e.g., transmitted) SSB from the base station. The first message may additionally comprise an indication/notification expecting one or more wireless devices to use, for instance, the first RA resources for the second RA type, for instance, during t1 and t3. The wireless device may send (e.g., transmit), via the first RA resource and for the second type RA procedure, an RA preamble during time periods, t1 and t3 (of FIG. 26B). The SSB transmission power configuration in time-domain of the sent (e.g., transmitted) SSB from the base station may help the wireless devices to use the first RA resources for the second RA type. For example, receiving the first message itself may ensure that the first RA resources are not wasted. For example, receiving the first message itself may ensure that the first RA resources are not wasted without needing the second message.

As shown in FIG. 26A, an SSB DTX/DRX configuration of an SSB. For example, due to energy constraints, each SSB may be associated with at least one of the following states for different time duration/period: an off state; a common messages or common control signaling state; or an active traffic state. The off state may mean that there is neither transmission nor reception of common control channels/signals or active traffic specific channels/signals. The common messages or common control signaling state means that an SSB may be associated with scheduling of common control channels/signals. The active traffic state means that the SSB may be associated with common control channels/signals and active traffic specific channels/signals. In the off state, a wireless device may not send (e.g., transmit) RA preamble. For example, given that within a cell a base station may send (e.g., transmit) one or more SSBs, embodiments of the current disclosure teach that a base station may timely send (e.g., transmit) one or more transmission powers of the one or more SSBs over a time window (e.g., SSB transmission power configuration in time-domain) and/or time duration of one or more states of each SSB (e.g., SSB DTX/DRX configuration) over the time window.

FIG. 26A exemplarily depicts the off state as S1 state, common messages or common control signaling state as S2 state and the active traffic state as S3 state. The off state is depicted in FIG. 26A as an inactive S1 state and an S1 period is the length of the off state. The S2 and S3 states are collectively depicted as a (semi)active state and the length of the (semi)active state consists of S2 and S3 periods.

In the off state, at least one of the following may apply: a base station may not send (e.g., transmit) an aperiodic CSI; a wireless device (e.g., a UE) may not send (e.g., transmit) an aperiodic sounding reference signal (SRS); a wireless device (e.g., a UE) may not send (e.g., transmit) Msg1/Msg3 or initiate Msg1/Msg3 transmission as part of the 4-step RACH procedure; a wireless device (e.g., a UE) may not send (e.g., transmit) MsgA or initiate MsgA transmission as part of the 2-step RACH procedure; a wireless device (e.g., a UE) may not monitor PDCCH for RAR during Msg2 (RAR) window length in number of slots *(e.g., ra-ResponseWindow)* or monitor a Msg4 during a contention resolution timer (e.g., *ra-ContentionResolutionTimer*); or a wireless device (e.g., a UE) may not monitor PDCCH for any retransmission or after a scheduling request. In the common messages or common control signaling state, there may be transmissions/receptions of at least one of: an SSB; an SIB1; other SIBs e.g. SIB19; or the PDCCH and PRACH occasions. In the active traffic state, there may be transmissions/receptions of at least one of: periodic/semi-static CSI-RS; group-common/UE-specific PDCCH; SPS PDSCH; PUCCH carrying SR; PUCCH/PUSCH carrying CSI reports; PUCCH carrying HARQ-ACK for SPS; CG-PUSCH; SRS; or positioning RS (PRS).

The common messages state or common control signaling state may enable transmission and/or reception of common control signaling and the common control signaling may involve the transmission and reception of one or more common physical channels and signals comprising at least one of: physical broadcast channel; physical downlink control channel (PDCCH); physical uplink control channel (PUCCH); primary synchronization signal (PSS); secondary synchronization signal (SSS); or channel state information reference signal (CSI-RS). The active traffic state means supporting control signaling and active user traffic and the active traffic state supports transmission and reception of one or more common physical channels and signals comprising at least one of: physical broadcast channel; physical downlink control channel (PDCCH); physical downlink shared channel (PDSCH); physical uplink control channel (PUCCH); physical uplink shared channel (PUSCH); physical random access channel (PRACH); primary synchronization signal (PSS); or secondary synchronization signal (SSS).

Given that the current disclosure assumes that a base station operates under hard energy constraints, where the base station may use different transmission power of one or more channels and signals (e.g., SSB) at different point in time, timely notifying an SSB/beam DTX/DRX configuration of an SSB to one or more wireless devices may be essential.

Sending (e.g., transmitting) a SIB1 message to indicate/notify any dynamic change of a transmission power of an SSB may not be (power) efficient and effective in case the changes happen dynamically within short time windows (e.g., less than SIB1 periodicity or SI-periodicity). The base station may include an SSB configuration in a system information used to send (e.g., transmit) satellite assistance information (e.g., SIB19) and send (e.g., transmit) the satellite assistance information (e.g., SIB19) to one or more wireless devices.

The satellite assistance information (e.g., SIB19) may comprise at least one of: an indication/notification (a Boolean flag) to indicate whether the base station can dynamically change a transmission power of one or more channels/signals (e.g., SSB); an SSB configuration of one or more SSBs used by the satellite base station. For example, NTN neighbor configuration of the satellite assistance information (e.g., SIB19) may comprise at least one of: an indication/notification (a Boolean flag) to indicate whether a neighbor base station a transmission power of one or more channels/signals (e.g., SSB) the neighbor base station operates; SSB configuration of one or more SSBs that the neighbor base station operates.

Satellite switch with resynchronization (e.g., *SatSwitchWithReSync*) configuration of the satellite assistance information (e.g., SIB19) may comprise at least one of: an indication/notification (a Boolean flag) to indicate whether an incoming base station (e.g., satellite base station) can dynamically change a transmission power of one or more channels/signals (e.g., SSB); or SSB configuration of one or more SSBs that the incoming base station (e.g., satellite base station) operates.

The SSB configuration of an SSB that a base station operates may comprise at least one of: an SSB index; one or more geographical areas where the SSB is used to project a beam; an SSB transmission power configuration in time-domain of the SSB; SSB/beam DTX/DRX configuration of the SSB; a first notification including one or more threshold offsets to dynamically adjust one or more thresholds (e.g., RSRP, TB size) associated with the RACH procedure, small data transmission procedure and the like; a second notification for one or more wireless devices to adjust measurement gaps; a third notification including one or more timer offsets for one or more wireless devices to dynamically adjust one or more timers and constants; a fourth notification to update aggregation level or repetition number/factors of PDCCH, PDSCH and the like; a fifth notification to suspend certain procedures or timers running in one or more wireless devices; a sixth notification to indicate scaling factor of DCI size, TB size; an SSB periodicity in ms (e.g., *ssb-Periodicity*); a subcarrier spacing of the SSB (e.g., *ssbSubcarrierSpacing*); time domain positions of sent (e.g., transmitted) SS-blocks in a half frame with SS/PBCH blocks (e.g., *ssb-PositionsInBurst*); a power offset (dB) of non-zero power (NZP) CSI-RS resource element (RE) to SSS RE (e.g., *PowerControlOffsetSS*); a power offset of PDSCH RE to NZP CSI-RS RE (e.g., *PowerControlOffset*); a pattern of the SSB (e.g., *SSB-ToMeasure*); a time offset of the SSB (from a beam) of a target satellite at its uplink time synchronization reference point with respect to the SSB (of a beam) from a source satellite at its uplink time synchronization reference point (e.g., *ssb-TimeOffset* given in number of subframes); time information on when an SSB (of a beam) from a target satellite is going to start serving an area currently covered by a serving satellite while considering the SSB transmission power configuration in time-domain of the SSB; SSB/beam DTX/DRX configuration of the SSB of concerned SSBs (e.g., *t-ServiceStart* of an SSB (of a beam) of a target base station). A base station may send (e.g., transmit) the SSB configuration of each of one or more SSBs the base station operates to one or more wireless devices.

A base station may include a SSB configuration of each of one or more SSBs the base station operates and a SSB configuration of one or more SSBs operated by neighbor base stations in an RRC Release message and send (e.g., transmit) the RRC Release message to a wireless device when the base station releases an RRC connection or suspends an RRC connection. The wireless device may receive the SSB configuration of one or more SSBs in an RRC Release message and behaves according to what the following examples describe.

A base station may send (e.g., transmit) the SSB configuration of each of one or more SSBs the base station operates using at least one of: a system information message; a dedicated/group paging message; a short massages; a wake up signal; a dedicated signaling (e.g., RRC reconfiguration message, RRC Release message); or L1/L2 signaling such as DCI or MAC CE to one or more wireless devices. A base station may choose an SSB periodicity of an SSB depending on at least one of: time of a day; user demand; or geographical location.

Each of the one or more geographical areas contained in the SSB configuration of an SSB may include at least one of: absolute geographical coordinates of a geographical area covered by an SSB; relative geographical coordinates of a geographical area covered by an SSB in relation to geographical coordinates of a known reference point; tracking area id (TAI); or cell global id (CGI). A geographical coordinate may be a coordinate used by global navigation satellite system (GNSS). A geographical coordinate may comprise at least one or more of: latitude; longitude; elevation. For example, each geographical area covered by an SSB may be represented by a geographical identifier meaning that an SSB configuration may include one or more geographical identifiers to represent one or more geographical areas the beam serves. In some examples, an SSB may be associated with a single geographical area, such that a wireless device receiving that SSB identifies coverage corresponding to that single area. The wireless device may receive the SSB during an enabled state, such as a state in which SSB reception, measurement, or random access procedures are permitted for the identified geographical area.

The SSB DTX/DRX configuration (e.g., *ssbDTX-DRX-Config*) may comprise at least one of: an active period/duration at the beginning of an SSB DTX/DRX cycle (e.g., *ssbDTX-DRX-onDurationTimer*); an S2 period/duration within the active duration of an SSB (e.g., *ssbDTX-DRX-S2-DurationTimer*); an S3 period/duration within the active duration of an SSB (e.g., *ssbDTX-DRX-S3-DurationTimer*); a subframe where an SSB DTX/DRX cycle starts (e.g., *ssbDTX-DRX-CycleStartOffset*); a delay before starting the *ssbDTX-DRX-onDurationTimer* (e.g., *beamDTX-DRX-SlotOffset*); an initial activation status of an SSB DTX/DRX indicating/notifying whether a wireless device needs to activate the configuration according to received parameters (e.g., *ssbDTX-DRX-ActivationStatus*); or an indication/notification to indicate whether the SSB DTX/DRX configuration is for DTX only, DRX only, or joint DTX/DRX operation (e.g., *ssbDTX-DRX-ConfigType*). Terminologies such as period and duration may be used interchangeably in this disclosure.

A base station may operate a beam which is identified by an SSB index and may be associated with a single SSB time position and/or an SSB index. This means that the SSB DTX/DRX configuration (e.g., *ssbDTX-DRX-Config*) may refer to the DTX/DRX configuration of a beam (e.g., *beamDTX-DRX-Config*). Terminologies such as SSB DTX/DRX configuration and beam DTX/DRX configuration may be used interchangeably throughout the current disclosure.

An SSB DTX/DRX cycle period (e.g., *ssbDTX-DRX-Cycle*) consists of S1 period, S2 period and S3 period. As shown in FIG. 26A, S1 may refer to the off state, S2 may refer to the common messages or common control signaling state and S3 may refer to the active traffic state. The off state is depicted in FIG. 26A as an inactive S1 state and S1 period is the length of the off state. The S2 and S3 state may be collectively depicted as a (semi)active state and the length of the (semi) active state consists of S2 and S3 periods.

A base station may operate a beam which is identified by an SSB index and may be associated with a single SSB time position and/or an SSB index. This means that the SSB DTX/DRX configuration (e.g., *ssbDTX-DRX-Config*) may refer to the DTX/DRX configuration of a beam (e.g., *beamDTX-DRX-Config*). Terminologies such as SSB DTX/DRX configuration and beam DTX/DRX configuration may be used interchangeably throughout the current disclosure.

An active duration at the beginning of an SSB DTX/DRX cycle (e.g., *ssbDTX-DRX-onDurationTimer*) may comprise a duration of the common messages or common control signaling state and a duration of the active traffic state. After detecting an active duration at the beginning of an SSB DTX/DRX cycle (e.g., *ssbDTX-DRX-onDurationTimer*) a wireless device may subsequently detect an S2 period or S3 period within the active duration to figure out different actions (e.g., when to start a random access process, when to suspend SDT, when to expect a DCI providing a scheduling grant and the like).

The SSB DTX/DRX configuration may comprise one or more duration timers (e.g., *ssbDTX-DRX-onDuration-Timer*, *ssbDTX-DRX-S2-DurationTimer*, *ssbDTX-DRX-S3-DurationTimer*) as applicable at one or more transmission powers of an SSB. For example, RRC may configure each SSB with a periodic SSB DTX pattern including at least one or more of: off period (i.e., S1 period); common messages or common control signaling period (i.e., S2 period); or an active traffic period (i.e., S3 period). In a non-limiting example, only the S1, S2, and S3 periods are present in the pattern.

If an SSB/beam is in the off state, a base station may not send (e.g., transmit) any physical signal or channel. In the off state, a wireless device (e.g., a UE) may not send (e.g., transmit) an aperiodic sounding reference signal (SRS). In the off state, a wireless device (e.g., a UE) may not initiate Msg1/Msg3 transmission as part of the 4-step RACH procedure. In the off state, a wireless device (e.g., a UE) may not initiate MsgA transmission as part of the 2-step RACH procedure. In the off state, a wireless device (e.g., a UE) may not monitor PDCCH for RAR during Msg2 (RAR) window length in number of slots *(e.g., ra-ResponseWindow)* or monitor a Msg4 during a contention resolution timer (e.g., *ra-ContentionResolutionTimer)*. A wireless device (e.g., a UE) may not monitor PDCCH for any retransmission or after a scheduling request.

If an SSB/beam is in the off state, a wireless device may not take SS-RSRP, SS-RSRQ, SS-SINR, CSI-RSRP, CSI-RSRQ and CSI-SINR measurements for a serving cell, for example, if it is the beam that serves the wireless device. An SSB DTX operation may impact one or more operations of a wireless device depending on the RRC state of the wireless device (e.g., RRC_IDLE, RRC_INACTIVE, RRC_CONNECTED). A wireless device RRC_IDLE state may not camp on a cell when a serving SSB/beam is in the off state. A wireless device RRC_INACTIVE state may need to suspend small data transmission when a serving SSB/beam is in the off state.

If an SSB/beam is in the common messages or common control signaling state, a base station may send (e.g., transmit) at least one of: an SSB; an SIB1; other SIBs e.g. SIB19; or the PDCCH. If an SSB/beam is in the active traffic state, a base station may send (e.g., transmit) periodic/semi-static CSI-RS; group-common/UE-specific PDCCH; or SPS PDSCH. If an SSB/beam is in the active traffic state, a wireless device may send (e.g., transmit) PUCCH carrying SR; PUCCH/PUSCH carrying CSI reports; PUCCH carrying HARQ-ACK for SPS; CG-PUSCH; or SRS.

The SSB DTX operation may control a monitoring activity of PDCCH and configured downlink assignments of a wireless device which is in the RRC_CONNECTED state. If an SSB/beam DTX is in the active traffic state, a MAC entity of a wireless device may monitor PDCCH for any configured downlink assignments.

RRC may configure each SSB or each beam which is identified at least by an SSB index with a periodic SSB DRX pattern consisting at least one or more of: off period (i.e., S1 period); common messages or common control signaling period (i.e., S2 period); or an active traffic period (i.e., S3 period). The SSB/beam DRX operation may control scheduling request and configured uplink grant transmission activity of a wireless device which is in the RRC_CONNECTED state. If an SSB/beam DTX is in the active traffic state, a MAC entity of a wireless device may send (e.g., transmit) configured uplink grant transmissions and scheduling request.

RRC may control the SSB/beam DTX and the SSB/beam DRX operation by configuring the following parameters in *ssbDTX-DRX-Config*: an active duration at the beginning of an SSB DTX/DRX cycle (e.g., *ssbDTX-DRX-onDurationTimer*); an S2 period/duration within the active duration of an SSB (e.g., *beamDTX-DRX-S2-DurationTimer*); an S3 period/duration within the active duration of an SSB (e.g., *ssbDTX-DRX-S3-DurationTimer*); an SSB DTX/DRX cycle period consisting of S1 period, S2 period and S3 period (e.g., *ssbDTX-DRX-Cycle*); a subframe where an SSB DTX/DRX cycle starts (e.g., *ssbDTX-DRX-CycleStartOffset*); a delay before starting the *ssbDTX-DRX-onDurationTimer* (e.g., *ssbDTX-DRX-SlotOffset*); an initial activation status of an SSB DTX/DRX indicating/notifying whether a wireless device needs to activate the configuration according to received parameters (e.g., *ssbDTX-DRX-ActivationStatus*); or an indication/notification to indicate whether the SSB DTX/DRX configuration is for beam DTX, beam DRX, or joint beam DTX/DRX operation (e.g., *beamDTX-DRX-ConfigType)*. The SSB/beam DTX may be configured if *ssbDTX-DRX-ConfigType* is set to *dtx* or *dtxdrx.* When the SSB DTX is configured and activated for a serving cell, the SSB DTX active period/duration may include the time while *ssbDTX-DRX-onDurationTimer* is running for the associated serving cell.

If notified, a wireless device may determine a subframe where the active traffic period of the SSB DTX/DRX cycle starts (e.g., *ssbDTX-DRX-CycleStartOffset*) by carrying out at least one of the following steps: determining a total number of subframes elapsed since the start of the frame numbering by multiplying the current system frame number (SFN) by 10 and adding a current subframe number; using the modulo operation to a total number of subframes elapsed by considering *ssbDTX-DRX-Cycle* as a modulo; determining whether the modulo operation matches with the *ssbDTX-DRX-CycleStartOffset* provided by a base station; in case the S2 period precedes the S3 period, waiting until S2 period elapses. The wireless device may consider the epoch time of an NTN serving cell to determine a subframe where the active traffic period of the SSB DTX/DRX cycle starts.

The first notification of the SSB configuration one or more threshold offsets (e.g., *ss-PBCH-BlockPower* offset) to dynamically adjust or scale one or more thresholds (e.g., RSRP, TB size) that are applicable when one or more values of transmission powers of an SSB used. This may be required if a previously used transmission power of the SSB needs to be changed before a next SI (e.g., SIB1) broadcast is due because of an energy constrained operation of a base station. The first notification of the SSB configuration may comprise one or more thresholds that are currently applicable depending on SSB transmission power configuration in time-domain of the SSB. The one or more thresholds may relate to at least one of: random access procedure (e.g., 2-step type or 4-step type); SDT procedure; or PUCCH repetitions. The one or more thresholds (e.g., RSRP) may comprise at least one of: an RSRP threshold for a wireless device to decide whether to use a 2-step type random access procedure (e.g., *msgA-RSRP-Threshold*); a RSRP threshold to evaluate a quality of an SSB beam (e.g., *msgA-RSRP-ThresholdSSB*); an RSRP threshold for Msg1 repetition with repetition number 2 (e.g., *rsrp-ThresholdMsg1-RepetitionNum2*); an RSRP threshold for Msg1 repetition with repetition number 4 (e.g., *rsrp-Thresh-*

*oldMsg1-RepetitionNum4*); an RSRP threshold for Msg1 repetition with repetition number 8 (e.g., *rsrp-ThresholdMsg1-RepetitionNum8*); an RSRP threshold for Msg3 repetition (*rsrp-ThresholdMsg3*); a maximum number of MsgA transmissions when both 4-step and 2-step RA type random access resources are configured (e.g., *msgA-TransMax*); a power offset that is applied to random access preamble transmissions for Group B preambles in Msg1 (e.g., *messagePowerOffsetGroupB*); a transport block size threshold in bits (e.g., *ra-MsgA-SizeGroupA*); or an L1-RSRP threshold used for determining whether a candidate beam may be used by the wireless device to attempt contention free random access to recover from beam failure (e.g., *rsrp-ThresholdSSB*).

An immediate reason for scaling or adjusting the one more thresholds may be to balance resources used for the 2-step and the 4-step type random access procedures. A base station may send (e.g., transmit) the first notification. One or more wireless devices may receive the first notification and scale/adjust the one or more thresholds with one or more threshold offsets received in the first notification. Another reason for adjusting or scaling the one more thresholds may be for a wireless device to decide whether to use contention-based RA preamble of group A (e.g., based on *ra-MsgA-SizeGroupA*) at one or more scaled thresholds. For example, one another reason for adjusting or scaling the one more thresholds (e.g., *rsrp-ThresholdMsg1-RepetitionNum2, rsrp-ThresholdMsgl-RepetitionNum4, rsrp-ThresholdMsg1-RepetitionNum8*) may be for a wireless device to decide whether to send (e.g., transmit) Msg1 with a repetition number 2, 4 or 8. For example, one or more wireless devices may adjust or scale the one or more thresholds and determine whether to use the 2-step or the 4-step type random access procedure at one or more scaled thresholds. For example, on seeing a new SSB power (e.g., *ss-PBCH-BlockPower*) offset, a wireless device may scale the one or more thresholds to determine whether to use the 2-step and the 4-step type random access procedures.

The one or more thresholds may comprise at least one of: a data volume threshold for the wireless device to determine whether to perform SDT procedure initiated for MO-SDT (e.g., *sdt-DataVolumeThreshold*); an RSRP threshold for wireless device to determine whether to perform SDT procedure initiated for MOSDT (e.g., *sdt-RSRP-Threshold*); or an RSRP threshold configured for SSB selection for CG-SDT (e.g., *cg-SDT-RSRP-ThresholdSSB*). An immediate reason for scaling or adjusting the one more thresholds (e.g., *sdt-DataVolumeThreshold* or *sdt-RSRP-Threshold*) may be for a wireless device to decide whether to perform small data transmission for MO-SDT at one or more scaled thresholds. An immediate reason for scaling or adjusting the one more thresholds (e.g., *cg-SDT-RSRP-ThresholdSSB*) may be for a wireless device to decide whether to perform CG-SDT at one or more scaled thresholds.

The one or more thresholds may comprise at least one of: a threshold used by a wireless device for determining a configuration of the MAC entity for PUCCH repetition for Msg4 HARQ-ACK (e.g., *rsrp-ThresholdMsg4HARQ-ACK*); or a number/quantity of repetition slots for PUCCH transmission with HARQ-ACK information for Msg4 (e.g., *numberOfMsg4HARQ-ACK-Repetitions*). An immediate reason for scaling or adjusting the one more thresholds (e.g., *rsrp-ThresholdMsg4HARQ-ACK*) may be for a wireless device to decide on a number/quantity of PUCCH repetition for Msg4 HARQ-ACK at one or more scaled thresholds. An immediate reason for scaling or adjusting the one more thresholds (e.g., *rsrp-ThresholdMsg4HARQ-ACK*) may be for a wireless device to decide on a number/quantity of repetition slots for PUCCH transmission with HARQ-ACK information for Msg4 at one or more scaled thresholds.

The second notification of the SSB configuration may comprise an indication/notification to dynamically adjust at least one of: a measurement gap length (e.g. *mgl*); measurement gap repetition period (e.g., *mgta*); or measurement gap repetition period (e.g., mgrp). An immediate reason for adjusting the measurement gap length may be to take advantage of the off period/duration of a serving SSB/beam for taking neighbor beam/cell or inter-frequency measurements. The base station may configure such that SS/PBCH block measurement timing configuration (SMTC) window falls within the off period/duration of the serving SSB/beam. A serving SSB/beam may send (e.g., transmit) the second notification. A wireless device may receive the second notification and configure a measurement gap autonomously such that the measurement gap coincides or falls within the off state period/duration of the serving SSB/beam. Although these UE-specific measurement gaps are configured using dedicated signaling (e.g., RRC), per FR gaps (e.g., gapFR1, gapFR2,...) may be signaled on a system information block (SIB). If the off period of a serving SSB/beam exceeds a given measurement threshold, a wireless device (e.g. UE) may restart taking measurements for the serving SSB/beam if that serving SSB/beam moves to (semi)active state from the off state. Examples of the measurements are RSRP, RSRQ, etc. A measurement threshold may depend on the length of the DRX cycle, e.g., K*DRX cycle length.

The base station may send (e.g., transmit) the third notification to one or more wireless devices. The third notification of the SSB configuration may comprise one or more timer offsets to dynamically adjust one or more timers and constants, and the one or more timers and constants may comprise at least one of: timers and constants for detecting and triggering cell-level radio link failure (e.g., *rlf-TimersAndConstants such as t310, t311*); a timer for a beam failure detection (e.g., *beamFailureDetectionTimer*); interval between periodical UE measurement reports (e.g., *reportInterval of ReportConfigNR*); a RAR window length in number of slots (e.g., *ra-ResponseWindow*); initial value for the contention resolution timer (e.g., *ra-ContentionResolutionTimer*); a default interval for the paging cycle(e.g., *defaultPagingCycle*); an SDT failure detection timer; a configured grant timer *(e.g. configuredGrantTimer);* or a number/quantity of paging within a paging cycle and paging occasion *(e.g. nAndPagingFrameOffset)*. An immediate reason for adjusting one or more timers and constants may be to consider the off state period/duration - one or more adjustments to one or more timers and constants may be made by either extending values of the one or more timers and constants by the off state period/duration of a serving cell or suspend these timers when a serving cell is in the off state. The base station may send (e.g., transmit) the third notification. A wireless device may receive the third notification and either extend the one or more timers and constants by the off state period/duration of a serving SSB/beam or suspend these timers when a serving SSB/beam is in the off state.

The base station may send (e.g., transmit) the third notification to update a default interval for the paging cycle (e.g., *defaultPagingCycle)* or a number/quantity of paging within a paging cycle and paging occasion (*e.g. nAndPaging-FrameOffset*) of paging-related configuration (e.g., *PCCH-Config)* depending on how long the off state of an SSB/beam is. An allocation of paging occasions and paging frames may need to be consistent with the SSB DTX/DRX configuration such that no paging occasions are expected when the SSB/beam is in the off state. For example, one or more wireless device may receive the third notification comprising at least one of: a default interval for the paging cycle (e.g., *defaultPaging-Cycle*)*;* or a number/quantity of paging within a paging cycle and paging occasion (*e.g. nAndPagingFrameOffset*) of paging-related configuration (e.g., *PCCH-Config*) and update a paging behavior such as not monitoring paging occasion or paging frames when a serving SSB/beam is in the off state. Based on off state period/duration of a serving SSB/beam/cell, one or more wireless devices may adjust or extend a DRX period while ensuring that a DRX may not end when the serving SSB/beam/cell is in the off state. For example, based on an off state period/duration of a serving SSB/beam/cell, one or more wireless devices may adjust or extend a DRX period so that an end of the DRX period tallies or coincides with an end of the off state period/duration of the serving SSB/beam/cell.

By timely informing one or more wireless devices (e.g., UEs), which are in different connection states (e.g., RRC_IDLE, RRC_INACTIVE, RRC_CONNECTED), of the SSB configuration, SSB transmission power configuration in time-domain of an SSB or SSB/beam DTX/DRX configuration of one or more SSBs/beams a base station or neighbor base station operate, unwanted wireless device behaviors can be alleviated. For instance, an RRC_CONNECTED wireless device may not have to declare a RLF on noticing that an SSB/beam is in the off state; instead, it may, for instance, extend its DRX period to save energy.

One or more wireless devices may indicate support for an energy-constrained operation of a base station or serving cell. For example, one or more wireless devices may send (e.g., transmit) a new information element to indicate support for an energy-constrained operation as part of *NTN-Parameters* which may be used to convey the subset of wireless device radio access capability parameters that apply to NTN access when there is a difference compared to terrestrial network access. The new information element may indicate at least one of: support for SSB DTX and beam DRX operation; or support for SSB/beam DTX/DRX configuration.

The fourth notification of the SSB configuration may comprise an indication/notification to dynamically adjust at least one of: aggregation level; or repetition number/factors of PDCCH, PDSCH and the like. At present, a number/quantity of repetitions for SPS PDSCH *(e.g., pdsch-aggregationfactor)* can be n2, n4 or n8. That is, the maximum number of repetitions that the PDSCH can have may be 8 - this may be further extended to 16, 32, 64 and the like depending on a user application. For example, one intention may be for a base station to dynamically adjust a number/quantity of repetitions of, for instance, PDCCH or PDSCH depending on *ss-PBCH-BlockPower* used. For example, depending on different SSB transmission powers used, the base station may send (e.g., transmit) the fourth notification of the SSB configuration to indicate to one or more wireless devices in terms of what aggregation level or repetition number is in use. For example, depending on different SSB transmission powers used, the base station may send (e.g., transmit) the fourth notification of the SSB configuration to indicate to one or more wireless devices in terms of what PDCCH repetition (e.g., for PDCCH in common search space), CORESET symbol number and aggregation level, or PDSCH repetition for PDSCH Msg4 and PDSCH carrying SIB1/SIB19 is in use.

The fifth notification of the SSB configuration may comprise an indication/notification to suspend certain procedures or timers running in one or more wireless devices. A base station may send (e.g., transmit) the fifth notification to one or more wireless devices to request at least one of: a wireless devices which is in RRC_INACTIVE state to disable or suspend any SDT during the off state of a serving SSB/beam/cell; a wireless device which is in RRC_CONNECTED state to disable or suspend at least radio link monitoring (e.g., out of sync detection, in-sync detection etc.), RLF procedure, beam failure detection, candidate beam detection, RRC connection re-establishment, handover, conditional handover or LTM-related actions during when a serving SSB/beam/cell is in the off state; a wireless device (e.g., UEs) which is in RRC_IDLE or RRC_INACTIVE state to suspend preferably procedures associated with cell (re)selection, measurement on serving SSB/beam/cell for evaluation of beam/cell selection criteria S when a serving SSB/beam/cell is in the off state; or a wireless device which is in RRC_CONNECTED state to use/consider the off state period/duration of the serving SSB/beam as an autonomous gap to take neighbor SSB/beam/cell measurements.

One or more wireless devices may receive the fifth notification of the beam configuration from a base station. On receiving the fifth notification, a wireless devices may perform one or more of the following actions depending on the RRC state of the wireless device - The wireless device which is in RRC_INACTIVE state may disable or suspend any SDT during the off state of a serving SSB/beam/cell; the wireless device which is in RRC_CONNECTED state may disable or suspend at least radio link monitoring (e.g., out of sync detection, in-sync detection etc.), RLF procedure, beam failure detection, candidate beam detection, RRC connection re-establishment, handover, conditional handover or LTM-related actions during when a serving SSB/beam/cell is in the off state; the wireless device (e.g., UE) which is in RRC_IDLE or RRC_INACTIVE state, may suspend preferably procedures associated with cell (re)selection, measurement on serving SSB/beam/cell for evaluation of cell selection criteria S, when a serving SSB/beam/cell is in the off state; or the wireless device which is in RRC_CONNECTED state may use/consider the off state period/duration of the serving SSB/beam as an autonomous gap to take neighbor SSB/beam/cell measurements.

The sixth notification of the SSB configuration may comprise at least one of: a scaling factor of DCI size; transport block (TB) size that may apply at different SSB transmission powers. A base station may send (e.g., transmit) the sixth notification to one or more wireless devices to indicate one or more scaling factors of DCI size (e.g., two-stage DCI or anything similar), DCI segmentation or transport block (TB) sizes that are applicable when one or more SSB transmission power values are in use.

For example, using inventive steps as presented in one or more examples of this disclosure especially to a satellite case may lead to efficient operations - for instance, with timely transmission of dynamic SSB configuration information, one or more wireless devices now learn how to act when a serving SSB/beam/cell takes different states (e.g., S1, S2, or S3). One or more wireless devices in various RRC states may not have to react in an unexpected way that would otherwise cause flooding of signaling and huge energy waste (e.g., declaring RLF in case of uninformed cell off). These may lead to saving of energy from a wireless device perspective, cutting down of unwanted and unnecessary network wide signaling while enabling one or more wireless devices to access cells as quickly as possible - e.g., a satellite switch with resync.

In terms of geographical size, one NTN or a satellite cell may consist of one or more NR beams. Given the sheer size of an NTN or a satellite cell, trying to manipulate energy saving at an NTN cell level using existing technologies can easily impact 1000s of wireless devices, which is not the case in terrestrial networks. These limitations of existing technologies may be addressed by the inventive steps taken as described in relation to one or more examples of this disclosure.

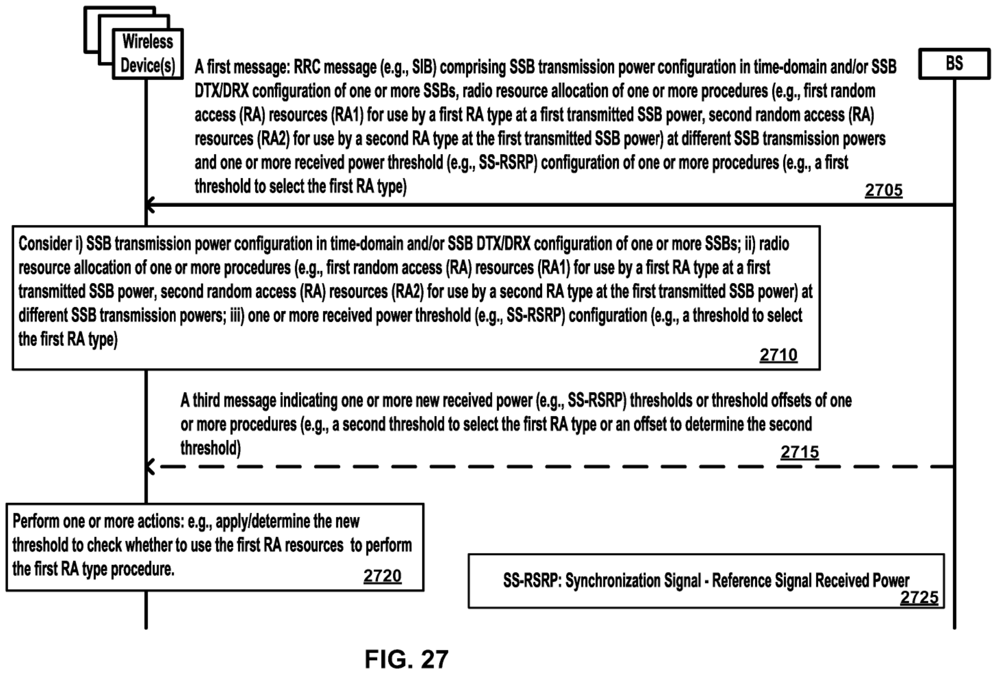

FIG. 27 shows an example where a base station operates under energy constraints. At step 2705, the first message may further comprise at least one of: SSB transmission power configuration in time-domain of each of one or more SSBs/beams the base station operates; SSB/beam DTX/DRX configuration of each of one or more SSBs/beams the base station operates; radio resource allocation of one or more procedures (e.g., first random access (RA) resources (RA1) for use by a first RA type, second random access (RA) resources (RA2) for use by a second RA type) and one or more received power threshold (e.g., synchronization signal - reference signal received power (SS-RSRP)) configuration of one or more procedures (e.g., a first threshold to select the first RA type).

The base station may send (e.g., transmit) the first message to one or more wireless devices. At step 2710, a wireless device may receive the first message and consider at least one of: SSB transmission power configuration in time-domain and/or SSB DTX/DRX configuration of one or more SSBs; ii) radio resource allocation of one or more procedures (e.g., first random access (RA) resources (RA1) for use by a first RA type on meeting a first threshold, second random access (RA) resources (RA2) for use by a second RA type); iii) one or more received power threshold (e.g., SS-RSRP) configuration (e.g., the first threshold to select the first RA type). The base station may allocate/configure radio resources for one or more procedures (e.g., first random access (RA) resources (RA1) for use by a first RA type on meeting a first threshold, second random access (RA) resources (RA2) for use by a second RA type) per SSB. The base station may configure one or more thresholds (e.g., SS-RSRP 2725) per SSB.

A wireless device measures a received power of an SSB and uses allocated resources based on a measured received power of the SSB. The wireless device may use the first random access (RA) resources (RA1) for use by a first RA type when the received power of the SSB is greater than the first threshold. The wireless devices may send (e.g., transmit), via the first RA resource and for the first type RA procedure, an RA preamble, when the received power of the SSB is greater than the first threshold. The wireless device may send (e.g., transmit), via the first RA resource and for the first type RA procedure, an RA preamble, on meeting the first threshold. The wireless device may send (e.g., transmit), via the second RA resource and for the second type RA procedure, an RA preamble, when the received power of the SSB is less than the first threshold. The wireless devices may send (e.g., transmit), via the second RA resource and for the second type RA procedure, an RA preamble, on not meeting the first threshold.

At step 2715, the base station may send (e.g., transmit) a third message to one or more wireless devices. The third message may comprise at least one of: one or more new received power (e.g., SS-RSRP 2725) thresholds or threshold offsets of one or more procedures (e.g., a second threshold to select the first RA type or an offset to determine the second threshold. The benefit of sending (e.g., transmitting) the third message may be for one or more wireless devices to adjust/scale one or more thresholds. For example, on receiving the third message with a threshold offset related to the first threshold, a wireless device may scale the first threshold with the threshold offset for deriving a second threshold. At step 2720, the wireless device may compare a measured SS-RSRP 2725 with the second threshold to decide whether it can use the first RA resources for the first RA type.

An immediate reason for scaling or adjusting the one more thresholds may be to balance resources used for the 2-step and the 4-step type random access procedures. A base station may send (e.g., transmit) the third message. A wireless devices may receive the third message comprising one or more threshold offsets and scale/adjust the one or more thresholds with one or more threshold offsets received. Another reason for adjusting or scaling the one more thresholds may be for a wireless device to decide whether to use contention-based RA preamble of group A (e.g., based on *ra-MsgA-SizeGroupA*) at one or more scaled thresholds. For example, another reason for adjusting or scaling the one more thresholds (e.g., *rsrp-ThresholdMsg1-RepetitionNum2, rsrp-ThresholdMsg1-RepetitionNum4, rsrp-ThresholdMsg1-RepetitionNum8*) may be for a wireless device to decide whether to send (e.g., transmit) Msg1 with a repetition number 2, 4 or 8. For example, one or more wireless devices may adjust or scale the one or more thresholds and determine whether to use the 2-step or the 4-step type random access procedure at one or more scaled thresholds. For example, on seeing a new threshold, a wireless device may scale the one or more thresholds to determine, for instance, whether to use the 2-step and the 4-step type random access procedures.

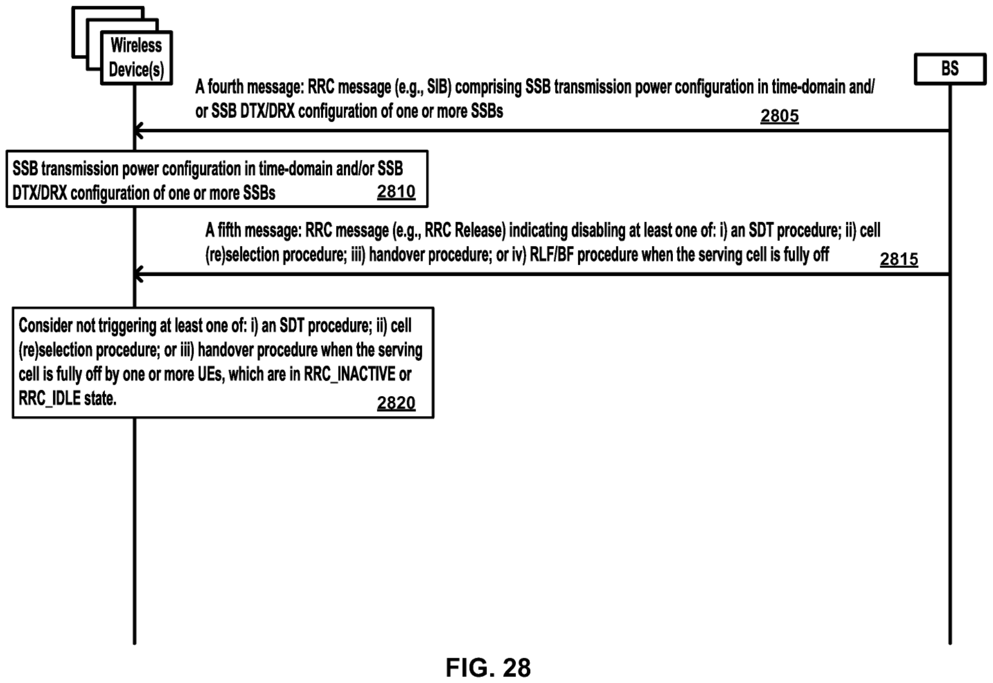

An example, as shown by FIG. 28 is set to work in an example where a base station may dynamically change SSB transmission powers due to an energy-constrained operation. At step 2805, the base station may send (e.g., transmit) a fourth message to one or more wireless devices using at least one of: a system information message (e.g., SIB1); a dedicated/group paging message; a short message; a wake up signal or dedicated signaling (e.g., RRC reconfiguration) or L1/L2 signaling such as DCI or MAC CE to notify one or more wireless devices. As shown in step 2810, the fourth message may comprise at least one of: SSB transmission power configuration in time-domain; or SSB DTX/DRX configuration. The fourth message may comprise a fifth notification to suspend certain procedures running in one or more wireless devices.

At step 2815, the fifth notification may comprise an indication/notification to suspend certain procedures running in one or more wireless devices. A base station may send (e.g., transmit) the fifth notification to one or more wireless devices to request at least one of: wireless devices which are in RRC_INACTIVE state to disable or suspend any SDT during the off state of a serving SSB/beam/cell; wireless devices which are in RRC_CONNECTED state to disable or suspend at least radio link monitoring (e.g., out of sync detection, in-sync detection etc.), RLF procedure, beam failure detection, candidate beam detection, RRC connection re-establishment, handover, conditional handover or LTM-related actions during when a serving SSB/beam/cell is in the off state; wireless devices (e.g., UEs) which are in RRC_IDLE or RRC_INACTIVE state to suspend preferably procedures associated with cell (re)selection, measurement on serving cell for evaluation of cell selection criteria S when a serving SSB/beam/cell is in the off state.

For example, one or more wireless devices may receive the fifth notification from a base station. At step 2820, on receiving the fifth notification, a wireless device may perform one or more of the following actions depending on the RRC state of the wireless device - for example, the wireless device which is in the RRC_INACTIVE state may disable or suspend any SDT during the off state of a serving SSB/beam/cell; the wireless device which is in the RRC_CONNECTED state may disable or suspend at least radio link monitoring (e.g., out of sync detection, in-sync detection etc.), RLF procedure, beam failure detection, candidate beam detection, RRC connection re-establishment, handover, conditional handover or LTM-related actions during when a serving SSB/beam/cell is in the off state; the wireless device which is in the RRC_IDLE or RRC_INACTIVE state, may suspend preferably procedures associated with cell (re)selection, measurement on serving SSB/beam/cell for evaluation of cell selection criteria S, when a serving SSB/beam/cell is in the off state.

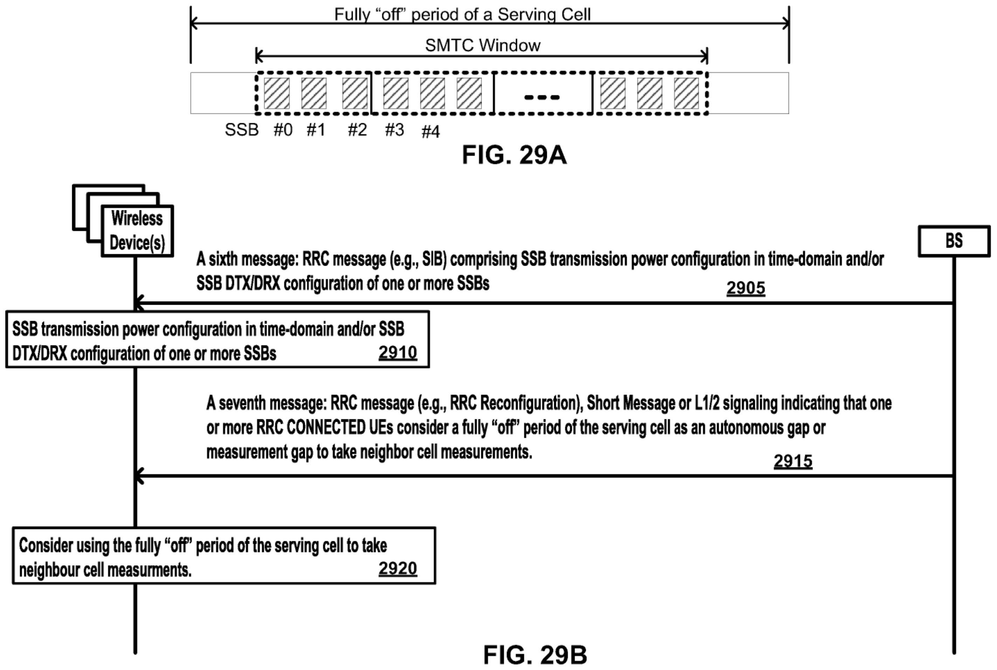

An example, as shown by FIG. 29A and FIG. 29B is set to work in an example where a base station may dynamically change SSB transmission powers due to an energy-constrained operation. At step 2905, a base station may send (e.g., transmit) a sixth message to one or more wireless devices using at least one of: a system information message (e.g., SIB1); a dedicated/group paging message; a short message; a wake up signal or dedicated signaling (e.g., RRC reconfiguration) or L1/L2 signaling such as DCI or MAC CE to notify one or more wireless devices. As shown in step 2910, the sixth message may comprise at least one of: SSB transmission power configuration in time-domain; or SSB DTX/DRX configuration. At step 2915, the base station may subsequently send (e.g., transmit) a seventh message comprising a second notification.

As shown at step 2920, the second notification of the seventh message may comprise an indication/notification to dynamically adjust at least one of: a measurement gap length (e.g. *mgl*); measurement gap repetition period (e.g., *mgta*); or measurement gap repetition period (e.g., mgrp). An immediate reason for adjusting the measurement gap length may be to take advantage of the off period/duration of a serving SSB/beam/cell for taking neighbor SSB/beam/cell or inter-frequency measurements. The base station may configure such that SS/PBCH block measurement timing configuration (SMTC) window falls within the off period/duration of the serving SSB/beam/cell. A base station may send (e.g., transmit) the second notification. A wireless device may receive the second notification and configure a measurement gap autonomously such that the measurement gap coincides or falls within the off state period/duration of the serving SSB/beam/cell. Although these UE-specific measurement gaps are configured using dedicated signaling (e.g., RRC), per FR gaps (e.g., gapFR1, gapFR2,...) may be signaled on a system information block (SIB). If the off period of a serving cell exceeds a given measurement threshold, a wireless device (e.g. UE) may restart taking measurements for the serving SSB/beam/cell if that serving cell moves to (semi)active state from the off state. Examples of the measurements may be RSRP, RSRQ, etc. A measurement threshold may depend on the length of the DRX cycle, e.g., K*DRX cycle length.

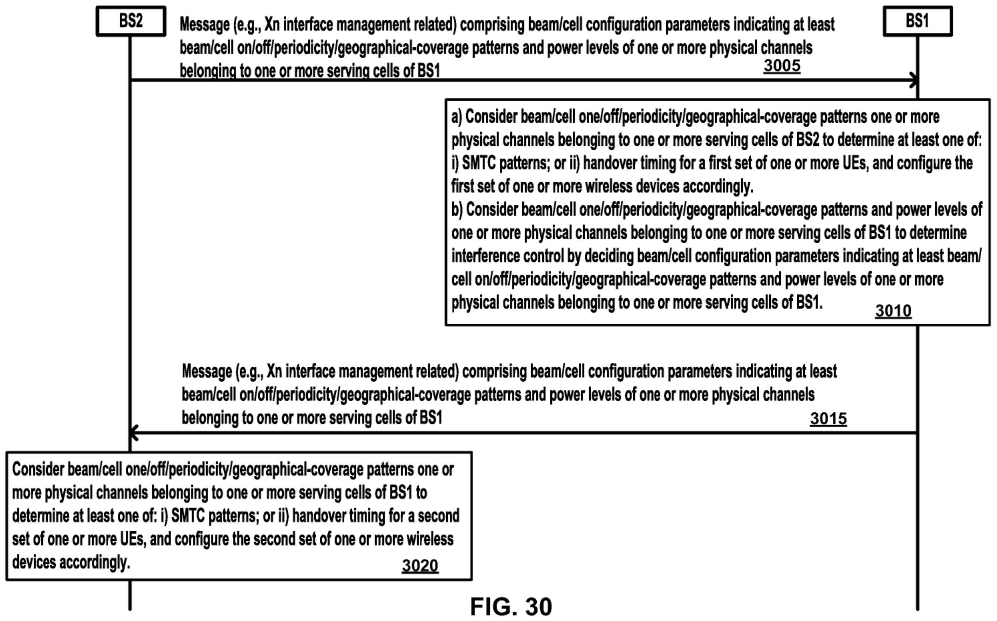

FIG. 30 shows how neighboring base stations exchange a beam configuration of each of one or more beams that either base station operates on the Xn interface. A neighbor base station may exchange a beam configuration of each of one or more beams that either base station operates using one or more of Xn-based global procedures (e.g., Xn setup procedure or NG-RAN node configuration update procedure).

At step 3005, a first base station (BS1) may send (e.g., transmit) the beam configuration of each of one or more beams that the first base station operates and/or one or more beams that one or more neighbor base stations operate to a second base station (BS2). The beam configuration operates may comprise at least one of: an SSB index for one or more wireless devices to identify a beam; one or more geographical areas served by a beam (e.g., given by one or more geographical ids); a time domain pattern of a beam; a power domain pattern of a beam; an SSB periodicity in ms (e.g., *ssb-Periodicity*); a subcarrier spacing of an SSB (e.g., *ssbSubcarrierSpacing*); time domain positions of sent (e.g., transmitted) SS-blocks in a half frame with SS/PBCH blocks (e.g., *ssb-PositionsInBurst*); a power offset (dB) of non-zero power (NZP) CSI-RS resource element (RE) to SSS RE (e.g., *PowerControlOffsetSS*); a power offset of PDSCH RE to NZP CSI-RS RE (e.g., *PowerControlOffset*); or a pattern of SSBs (e.g., *SSB-ToMeasure*).

The beam configuration may further comprise at least one of: time division duplexing (TDD) configuration; or sub-band full duplex (SBFD) configuration. The power domain and/or time domain pattern of a beam may be referred to as beam DTX/DRX configuration (e.g., *beamDTX-DRX-Config).* The beam DTX/DRX configuration of a beam which may be identified by an SSB index may comprise at least one of: an active period/duration at the beginning of a beam DTX/DRX cycle (e.g., *beamDTX-DRX-onDurationTimer*); an S2 period/duration within the active duration of a beam (e.g., *beamDTX-DRX-S2-DurationTimer*); an S3 period/duration within the active duration of a beam (e.g., *beamDTX-DRX-S3-DurationTimer*); a subframe where a beam DTX/DRX cycle starts (e.g., *beamDTX-DRX-CycleStartOffset*); a delay before starting the *beamDTX-DRX-onDurationTimer* (e.g., *beamDTX-DRX-SlotOffset*); an initial activation status of a beam DTX/DRX indicating/notifying whether a wireless device needs to activate the configuration according to received parameters (e.g., *beamDTX-DRX-ActivationStatus*); or an indication/notification to indicate whether the beam DTX/DRX configuration is for beam DTX, beam DRX, or joint beam DTX/DRX operation (e.g., *beamDTX-DRX-ConfigType*).

A beam may be associated with a single SSB time position and/or an SSB index. This means that the power domain and/or time domain pattern or beam DTX/DRX configuration (e.g., *beamDTX-DRX-Config*) of the beam may refer to the power domain and/or time domain pattern or DTX/DRX configuration (e.g., *beamDTX-DRX-Config*) of the single SSB. The power domain and/or time domain pattern or DTX/DRX configuration of the single SSB may be termed *ssbDTX-DRX-Config.*

The beam DTX/DRX configuration of a beam may comprise one or more duration timers (e.g., *beamDTX-DRX-onDurationTimer, beamDTX-DRX-S2-DurationTimer beamDTX-DRX-S3-DurationTimer*) as applicable at different average EPREs of resources elements (e.g., *ss-PBCH-BlockPower*) that carry secondary synchronization signals that the base station used for SSB transmission. The beam DTX/DRX configuration of a beam may comprise one or more duration timers (e.g., *beamDTX-DRX-onDurationTimer, beamDTX-DRX-S2-DurationTimer beamDTX-DRX-S3-DurationTimer*) as applicable at one or more *ss-PBCH-BlockPower* values used. The beam DTX/DRX configuration of a beam may comprise one or more active durations (e.g., *beamDTX-DRX-onDurationTimer*) at one or more *ss-PBCH-BlockPower* values used.

The beam configuration of each of the one or more beams that the first base station (BS1) operates may be included as part of *Served Cell Information NR* of an XN SETUP REQUEST message. In response to an XN SETUP REQUEST message, the second base station may send (e.g., transmit) an XN SETUP RESPONSE message. The beam configuration of each of one or more beams that the second base station (BS2) operates may be included as part of *Served Cell Information NR* of an XN SETUP RESPONSE message.

For example, based on the *Served Cell Information NR* of an XN SETUP REQUEST message, the second base station (BS2) may perform at least one of: use interference control and determine the beam configuration of each of the one or more beams that the second base station (BS2) operates; send (e.g., transmit) the beam configuration of each of the one or more beams that the second base station (BS2) operates as part of *Served Cell Information NR* of an XN SETUP RESPONSE message to the first base station (BS1).

The beam configuration of each of the one or more beams that the first base station (BS1) operates may be included as part of *Served Cells To Update NR* of an NG-RAN NODE CONFIGURATION UPDATE message. In response to an NG-RAN NODE CONFIGURATION UPDATE message, the second base station may send (e.g., transmit) an NG-RAN NODE CONFIGURATION UPDATE ACKNOWLEDGE message. The beam configuration of each of one or more beams that the second base station (BS2) operates may be included as part of *Served Cell Information NR* of an NG-RAN NODE CONFIGURATION UPDATE ACKNOWLEDGE message.

At step 3010, the beam configuration of each of one or more beams that each of one or more neighbor base station of the first base station (BS1) operates may be included as part of *Neighbor Information NR* of an XN SETUP REQUEST message. In response to an XN SETUP REQUEST message, the second base station may send (e.g., transmit) an XN SETUP RESPONSE message. The beam configuration of each of one or more beams that each of one or more neighbor base station of the second base station (BS2) operates may be included as part of *Neighbor Information NR* of an XN SETUP RESPONSE message.

For example, by knowing the beam configuration of each of one or more beams that each of one or more neighbor base station operates, a base station may make appropriate SMTC and handover decisions. If a source base station (e.g., BS1) knows the power domain pattern and/or the time domain pattern (e.g., the beam DTX/DRX configuration), SSB periodicity and especially *ss-PBCH-BlockPower, PowerControlOffsetSS* and *PowerControlOffset* of a possible candidate target beam, it may be possible for the source base station to make appropriate SMTC and pass it on to a one or more wireless devices to take measurements ahead of any handover. Any handover-related measurements may be taken during the S2 period while a handover preparation, execution and completion take place during the S3 period of the possible candidate target beam. By knowing the power domain pattern and/or the time domain pattern (e.g., the beam DTX/DRX configuration) of every neighbor beam/cell, it may be possible for the source base station to decide when to trigger handover-related measurements and when to prepare, execute and complete a handover. On the other, hand, in the absence of such information, the source base station may attempt a handover at a wrong time (e.g., during the S1 period of a possible target candidate beam) that can result in increased handover failure rate.

At step 3015, the power domain pattern and/or the time domain pattern (e.g., the beam DTX/DRX configuration), *SSB periodicity and* especially *ss-PBCH-BlockPower, PowerControlOffsetSS and PowerControlOffset,* of a source base station and a possible target candidate target base station may be exchanged in a HANDOVER REQUEST and HANDOVER REQUEST ACKNOWLEDGE message for both the source base stations and target base stations to know each other's the power domain pattern and/or the time domain pattern (e.g., the beam DTX/DRX configuration), *SSB periodicity and especially ss-PBCH-BlockPower, PowerControlOffsetSS and PowerControlOffset.* This way, during a handover preparation, the source base station may pass such information of the target base station onto a wireless device to synchronize with a target beam. The source base station may use a handover command (which is embedded within a *RRCReconfiguration* message) for this purpose. With the power domain pattern and/or the time domain pattern (e.g., the beam DTX/DRX configuration) of a target beam, the wireless device knows when to send a *RRCReconfigurationComplete* message to the target beam.

As shown in step 3020, by knowing the beam configuration of each of one or more beams that each of one or more neighbor base station operates, a source base station may include S1, S2 and S3 period of a target candidate cell/beam in conditional handover execution timing conditions and send (e.g., transmit) to one or more wireless devices. For example, neighbor base stations know each other's power domain pattern and/or the time domain pattern (e.g., the beam DTX/DRX configuration), *SSB periodicity,* power of SSBs/CSI-RS, that may be useful for initiating a wireless device handover at appropriate time. This way the number of handover failures (HOF) may be brought down.

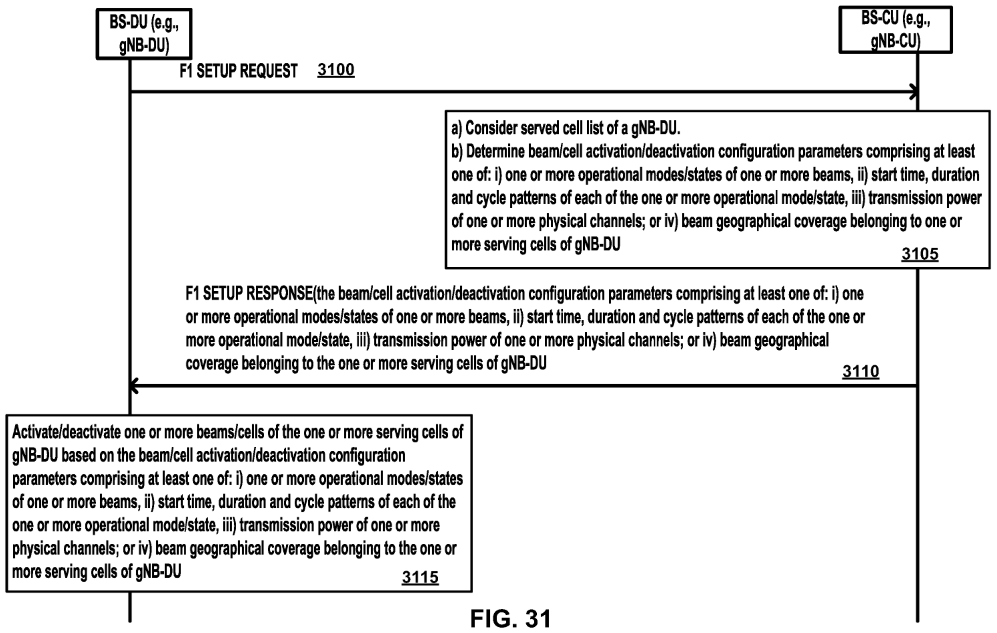

FIG. 31 shows how a gNB-DU may send (e.g., transmit) a beam configuration of each of one or more beams that the gNB-DU operates to a gNB-CU on the F1 interface. At step 3100, the gNB-DU may send (e.g., transmit) the beam configuration of each of one or more beams that the gNB-DU operates using non-UE associated signaling (e.g., F1 SETUP REQUEST).

A gNB-DU may send (e.g., transmit) the beam configuration of each of one or more beams that the gNB-DU operates to a gNB-CU. Step 3105 shows that the beam configuration operates may comprise at least one of: an SSB index for one or more wireless devices to identify a beam; one or more geographical areas served by a beam (e.g., given by one or more geographical ids); a time domain pattern of a beam; a power domain pattern of a beam; an SSB periodicity in ms (e.g., *ssb-Periodicity*); a subcarrier spacing of an SSB (e.g., *ssbSubcarrierSpacing*); time domain positions of sent (e.g., transmitted) SS-blocks in a half frame with SS/PBCH blocks (e.g., *ssb-PositionsInBurst*); a power offset (dB) of non-zero power (NZP) CSI-RS resource element (RE) to SSS RE (e.g., *PowerControlOffsetSS*); a power offset of PDSCH RE to NZP CSI-RS RE (e.g., *PowerControlOffset*)*;* or a pattern of SSBs (e.g., *SSB-ToMeasure*).

The beam configuration may further comprise at least one of: time division duplexing (TDD) configuration; or sub-band full duplex (SBFD) configuration. The power domain and/or time domain pattern of a beam is referred to as beam DTX/DRX configuration (e.g., *beamDTX-DRX-Config*). The beam DTX/DRX configuration of a beam which may be identified by an SSB index may comprise at least one of: an active period/duration at the beginning of a beam DTX/DRX cycle (e.g., *beamDTX-DRX-onDurationTimer*); an S2 period/duration within the active duration of a beam (e.g., *beamDTX-DRX-S2-DurationTimer*); an S3 period/duration within the active duration of a beam (e.g., *beamDTX-DRX-S3-DurationTimer*); a subframe where a beam DTX/DRX cycle starts (e.g., *beamDTX-DRX-CycleStartOffset*); a delay before starting the *beamDTX-DRX-onDurationTimer* (e.g., *beamDTX-DRX-SlotOffset*); an initial activation status of a beam DTX/DRX indicating/notifying whether a wireless device needs to activate the configuration according to received parameters (e.g., *beamDTX-DRX-ActivationStatus*); or an indication/notification to indicate whether the beam DTX/DRX configuration is for beam DTX, beam DRX, or joint beam DTX/DRX operation (e.g., *beamDTX-DRX-ConfigType*).

A beam may be associated with a single SSB time position and/or an SSB index. This means that the power domain and/or time domain pattern or beam DTX/DRX configuration (e.g., *beamDTX-DRX-Config*) of the beam may refer to the power domain and/or time domain pattern or DTX/DRX configuration (e.g., *beamDTX-DRX-Config*) of the single SSB. The power domain and/or time domain pattern or DTX/DRX configuration of the single SSB may be termed *ssbDTX-DRX-Config.*

The beam DTX/DRX configuration of a beam may comprise one or more duration timers (e.g., *beamDTX-DRX-*

*onDurationTimer, beamDTX-DRX-S2-DurationTimer beamDTX-DRX-S3-DurationTimer*) as applicable at different average EPREs of resources elements (e.g., *ss-PBCH-BlockPower*) that carry secondary synchronization signals that the gNB-DU used for SSB transmission. The beam DTX/DRX configuration of a beam may comprise one or more duration timers (e.g., *beamDTX-DRX-onDurationTimer, beamDTX-DRX-S2-DurationTimer beamDTX-DRX-S3-DurationTimer*) as applicable at one or more *ss-PBCH-BlockPower* values used. The beam DTX/DRX configuration of a beam may comprise one or more active durations (e.g., *beamDTX-DRX-onDurationTimer*) at one or more *ss-PBCH-BlockPower* values used.

The beam configuration of each of the one or more beams that the gNB-DU operates may be included as part of *Served Cell Information NR* of an F1 SETUP REQUEST message. At step 3110, based on the *Served Cell Information NR* of an F1 SETUP REQUEST message, the gNB-CU may perform at least one of: use interference control (e.g., based on inputs from one or more gNB-DUs) and determine the beam configuration of each of the one or more beams that gNB-DU operates; send (e.g., transmit) the beam configuration of each of the one or more beams that the gNB-DU operates as part of *Beams/Cells to be Activated List* of an F1 SETUP RESPONSE message to the gNB-DU. At step 3115, the gNB-DU may use the beam configuration to appropriate beams based on *Beams/Cells to be Activated List* of an F1 SETUP RESPONSE message.

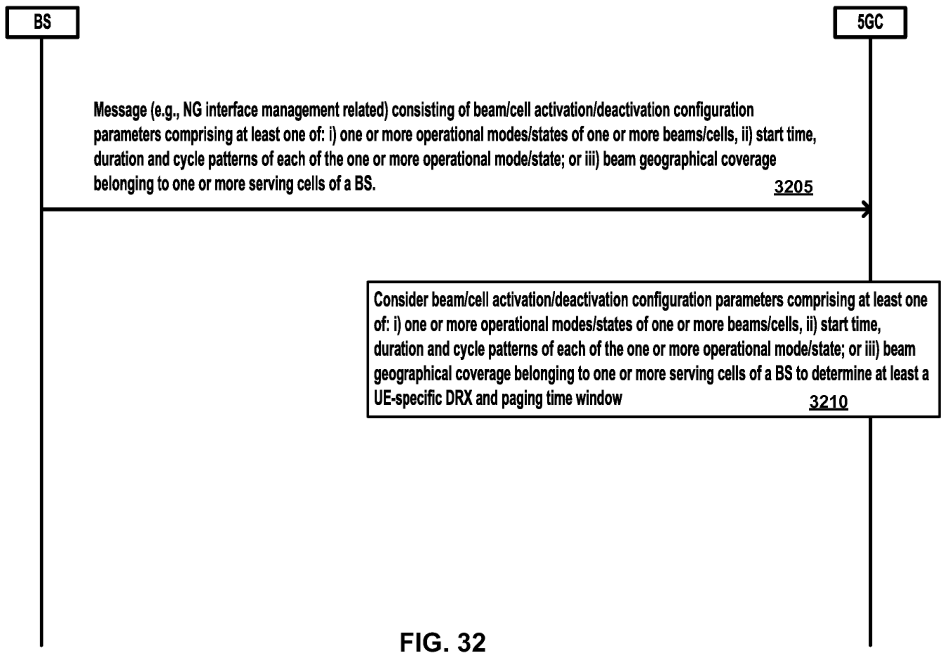

FIG. 32 shows how a base station may send (e.g., transmit) a beam configuration of each of one or more beams that the base station operates to a core network node. The base station may exchange the beam configuration of each of one or more beams that the base station operates using non-UE associated signaling (e.g., NG SETUP REQUEST message, RAN CONFIGURATION UPDATE message).

At step 3205, a base station (BS1) may send (e.g., transmit) the beam configuration of each of one or more beams that the base station operates to a core network node. The beam configuration may comprise at least one of: an SSB index for one or more wireless devices to identify a beam; one or more geographical areas served by a beam (e.g., given by one or more geographical ids); or a time domain pattern of a beam. Step 3210 shows that the time domain pattern of a beam which is identified by an SSB index may comprise at least one of: an active period/duration at the beginning of a beam DTX/DRX cycle (e.g., *beamDTX-DRX-onDurationTimer*); an S2 period/duration within the active duration of a beam (e.g., *beamDTX-DRX-S2-DurationTimer*); an S3 period/duration within the active duration of a beam (e.g., *beamDTX-DRX-S3-DurationTimer*); a subframe where a beam DTX/DRX cycle starts (e.g., *beamDTX-DRX-CycleStartOffset*); a delay before starting the *beamDTX-DRX-onDurationTimer* (e.g., *beamDTX-DRX-SlotOffset*); an initial activation status of a beam DTX/DRX indicating/notifying whether a wireless device needs to activate the configuration according to received parameters (e.g., *beamDTX-DRX-ActivationStatus*); or an indication/notification to indicate whether the beam DTX/DRX configuration is for beam DTX, beam DRX, or joint beam DTX/DRX operation (e.g., *beamDTX-DRX-ConfigType*).

A beam may be associated with a single SSB time position and/or an SSB index. This means that the time domain pattern of the beam may refer to the time domain pattern of the single SSB. The power domain and/or time domain pattern or DTX/DRX configuration of the single SSB may be termed *ssbDTX-DRX-Config.*

The core network node may be at least one of: an access and mobility management function (AMF); or mobility management function. For example, based on the beam configuration of each of one or more beams that the base station operates, the core network node may determine a UE-specific DRX and paging time window and send (e.g., transmit) to a wireless device and the base station respectively. The core network node may consider the off state of a serving beam/cell where the wireless device is located to determine the UE-specific DRX and paging time window so that a paging request may not be sent when a serving beam/cell of a wireless device is in the off state. The core network node configures the UE-specific DRX so that the wireless device may not wake up when a serving beam/cell of the wireless device is in the off state.

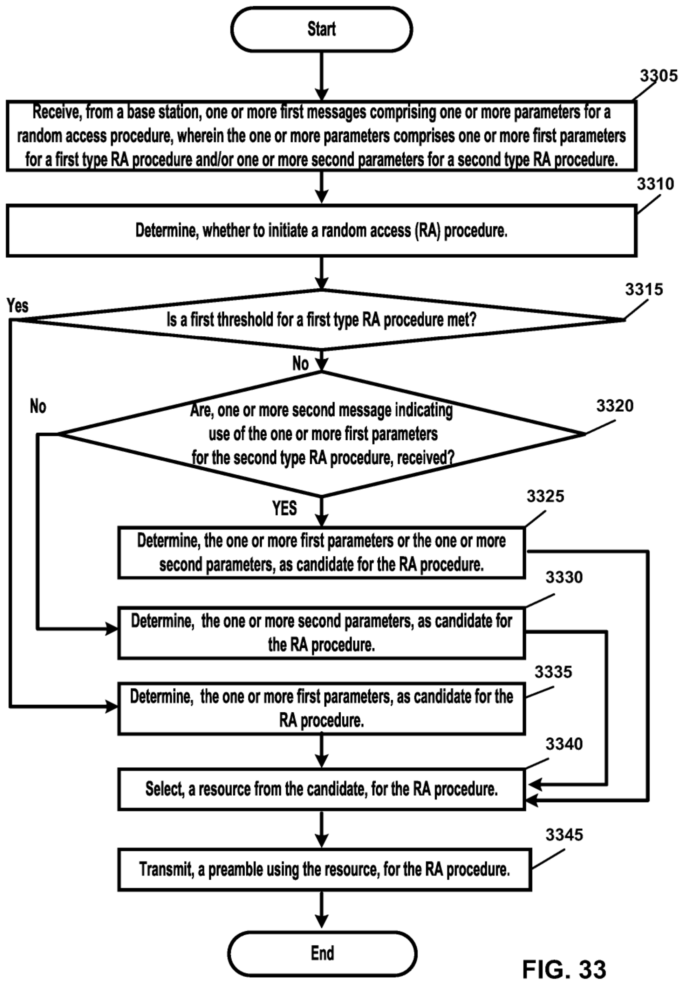

FIG. 33 shows one or more actions expected from a wireless device perspective in an example where a base station may dynamically change SSB transmission powers due to an energy-constrained operation. At step 3305, a wireless device may receive, from a base station, one or more first messages comprising one or more parameters for a random access (RA) procedure, wherein the one or more parameters comprises one or more first parameters for a first type RA procedure and/or one or more second parameters for a second type RA procedure. The one or more first parameters comprise first random access resources (e.g., RA1) meant for use of a first RA type. The one or more second parameters comprise second random access resources (e.g., RA2) meant for use of a second RA type.

The first RA (RA1) resources may comprise at least one of a first set of RA preambles or a first set of physical random access channel (PRACH) occasions. The second RA (RA2) resources may comprise at least one of: a second set of RA preambles, a second set of physical random access channel (PRACH) occasions or a second set of PUSCH resources. The wireless device receives a first threshold to select the first RA type as part of the one or more first messages.

At step 3310, the wireless device may determine to initiate a random access (RA) procedure. At step 3315, the wireless device may measure a received power of an SSB and compare against the first threshold. If the received power of the SSB is higher than the first threshold, the wireless device may send (e.g., transmit), via the first RA resource and for the first type RA procedure, an RA preamble. If the received power of the SSB is higher than the first threshold, the wireless device may consider the one or more first parameters as candidate for the RA procedure at step 3335.

If the received power of the SSB is less than the first threshold, the wireless device may further check whether the wireless device receives one or more second message indicating/notifying use of the one or more first parameters for the second RA type at step 3320. At step 3325, in case the wireless device receives at least one of the one or more second messages, the wireless device may consider the one or more first parameters or the one or more second parameters as candidate for the RA procedure. In case the wireless device receives at least one of the one or more second messages, the wireless device may send (e.g., transmit), via the first RA resource or via the second RA resource and for the second type RA procedure, an RA preamble.

If the received power of the SSB is less than the first threshold, the wireless device may further check whether the wireless device receives one or more second message indicating/notifying use of the one or more first parameters for the second RA type. In case the wireless device does not receive at least one of the one or more second messages, the wireless device may consider the one or more second parameters as candidate for the RA procedure at step 3330.

If the received power of the SSB is less than the first threshold, the wireless device may further check whether the wireless device receives one or more second message indicating/notifying use of the one or more first parameters for the second RA type (step 3340). At step 3345, in case the wireless device does not receive at least one of the one or more second messages, the wireless device may send (e.g., transmit), via the second RA resource and for the second type RA procedure, an RA preamble.

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising: receiving, by a wireless device, one or more system information block messages indicating: a first group of random access resources, of a synchronization signal block, that are assigned to a first type of random access procedure.

Clause 2. The method of clause 1, further comprising: a second group of random access resources, of the synchronization signal block, that are assigned to a second type of random access procedure.

Clause 3. The method of clause 1 or clause 2, further comprising: receiving an indication of a transmit power pattern of the synchronization signal block.

Clause 4. The method of any one of clauses 1 to 3, further comprising: based on the transmit power pattern of the synchronization signal block indicating to use a second type of random access procedure, re-assigning at least one random access resource of the first group of random access resources for use in the second type of random access procedure.

Clause 5. The method of any one of clauses 1 to 4, further comprising: transmitting, via the at least one random access resource, a random access preamble for the second type of random access procedure.

Clause 6. The method of any one of clauses 1 to 5, further comprising: receiving, by the wireless device, a second system information block message indicating a power threshold and a power offset associated with at least one synchronization signal block; and wherein the re-assigning of at least one random access resource of the first group for use in the second type of random access procedure is based on a comparison of: a reference signal received power of the synchronization signal block; the power offset corresponding to the synchronization signal block; and the power threshold.

Clause 7. The method of any one of clauses 1 to 6, further comprising: the method of claim 1, wherein the receiving the indication of the transmit power pattern of the synchronization signal block further comprises receiving a transmission power configuration of the synchronization signal block in a time domain, and wherein the re-assigning the at least one random access resource is further based on the transmission power configuration of the synchronization signal block in the time domain.

Clause 8. The method of any one of clauses 1 to 7, further comprising: the method of claim 1, wherein the first type of random access procedure is a 2-step random access procedure, and wherein the second type of random access procedure is a 4-step random access procedure.

Clause 9. The method of any one of clauses 1 to 8, further comprising: the method of claim 1, further comprising: receiving, by the wireless device, a further indication from a network node; and wherein the re-assigning of at least one random access resource for use in the second type of random access procedure is further based on the further indication.

Clause 10. The method of any one of clauses 1 to 9, further comprising: the method of claim 1, wherein the synchronization signal block is associated with a single geographical area, and wherein the method further comprises receiving the synchronization signal block during an enabled state.

Clause 11. The method of any one of clauses 1 to 10, further comprising: the method of claim 1, further comprising: based on the indication of the transmit power pattern of the synchronization signal block, controlling at least one timer for radio link monitoring or beam failure detection.

Clause 12. The method of any one of clauses 1 to 11, further comprising: the method of claim 1, wherein receiving the indication of the transmit power pattern of the synchronization signal block comprises receiving the indication via at least one of: a system information block; a signal via a physical downlink control channel; downlink control information via a physical downlink control channel; a short message via a physical downlink control channel; a signal via a physical downlink shared channel; or a medium access control control element via a physical downlink shared channel.

Clause 13. A computing device comprising: one or more processors; and memory storing instructions that, when executed by the one or more processors, cause the computing device to perform the method of any one of clauses 1 to 12.

Clause 14. A system comprising: a wireless device configured to perform the method of any one of clauses 1 to 12; and a base station configured to transmit the indication of the transmit power pattern.

Clause 15. A computer-readable medium storing instructions that, when executed, cause performance of the method of any one of clauses 1 to 12.

Clause 16. A method comprising: receiving, by a wireless device, at least one synchronization signal block.

Clause 17. The method of clause 16, further comprising: receiving a first system information block message indicating: a first group of random access resources, of a synchronization signal block of the at least one synchronization signal block, that are assigned to a 2-step random access procedure; a second group of random access resources, of the synchronization signal block, that are assigned to a 4-step random access procedure; and a power threshold for determination of whether to use the 2-step random access procedure.

Clause 18. The method of clause 16 or 17, further comprising: receiving a second system information block message comprising satellite assistance information for non-terrestrial network access, wherein the second system information block message indicates, for each synchronization block of the at least one synchronization signal block, a corresponding power offset; and

Clause 19. The method of any one of clauses 16 to 18, further comprising: transmitting, via a random access resource and for a random access procedure, a random access preamble, wherein the random access resource is selected from the first group of random access resources or the second group of random access resources based on: a reference signal received power of a selected synchronization signal block of the at least one synchronization signal block; a power offset, corresponding to the selected synchronization signal block; and the power threshold.

Clause 20. The method of any one of clauses 16 to 19, wherein the first system information block message further indicates, for the selected synchronization signal block, a time-domain transmit power configuration, and wherein the method further comprises selecting a random access resource from the first group of random access resources or the second group of random access resources is further based on a transmit power indicated in the time-domain transmit power configuration.

Clause 21. The method of any one of clauses 16 to 20, further comprising: wherein the synchronization signal block is associated with one or more operational states comprising at least one of: an off state; a state associated with at least one of a common message or a common control signaling; or an active traffic state.

Clause 22. The method of any one of clauses 16 to 21, wherein the power threshold is a first power threshold, and wherein the method further comprises: determining a second power threshold by scaling the first power threshold with the power offset corresponding to the synchronization signal block; and determining whether to use the 2-step random access procedure or the 4-step random access procedure based on a comparison of the second power threshold with a reference signal received power of the synchronization signal block.

Clause 23. The method of any one of clauses 16 to 22, further comprising: determining, by the wireless device, a timing offset for selection of the random access resource based on at least one of: a transmit power pattern of the selected synchronization signal block; or a variation in the reference signal received power over time.

Clause 24. The method of any one of clauses 16 to 23, wherein the synchronization signal block is associated with a single geographical area, and wherein the method further comprises detecting a change in transmit power of the synchronization signal block during an enabled state.

Clause 25. The method of any one of clauses 16 to 24, further comprising: selecting the synchronization signal block for the random access procedure by: using satellite assistance information received via the second system information block message to determine a synchronization signal block, of the at least one synchronization signal block, as the synchronization block; and applying a corresponding power offset indicated in the satellite assistance information for non-terrestrial network access.

Clause 26. A computing device comprising: one or more processors; and memory storing instructions that, when executed by the one or more processors, cause the computing device to perform the method of any one of clauses 16 to 25.

Clause 27. A system comprising: a wireless device configured to perform the method of any one of clauses 16 to 25; and a base station configured to transmit the indication of the transmit power pattern.

Clause 28. A computer-readable medium storing instructions that, when executed, cause performance of the method of any one of clauses 16 to 25.

Clause 29. A method comprising: transmitting, by a base station, one or more system information block messages indicating: a first group of random access resources, of a synchronization signal block, that are assigned to a 2-step random access procedure; and a second group of random access resources, of the synchronization signal block, that are assigned to a 4-step random access procedure.

Clause 30. The method of clause 29, further comprising: determining, by the base station, a transmit power pattern of the synchronization signal block.

Clause 31. The method of clause 29 or clause 30, further comprising: transmitting, based on the transmit power pattern of the synchronization signal block indicating to use the 4-step random access procedure, an indication to one or more wireless devices to use at least one random access resource of the first group of random access resources for the 4-step random access procedure.

Clause 32. The method of any one of clauses 29 to 31, further comprising: transmitting, by the base station, a time-domain transmit power configuration of the synchronization signal block that indicates when transmit power is active, reduced, or disabled.

Clause 33. The method of any one of clauses 29 to 32, wherein the transmit power pattern of the synchronization signal block indicates a change of reception power associated with one or more common physical channels.

Clause 34. The method of any one of clauses 29 to 33, further comprising: applying a discontinuous transmission cycle of the synchronization signal block based on at least one of: an off state; a common messages only or common control signaling state; or an active traffic state.

Clause 35. The method of any one of clauses 29 to 34, wherein the one or more system information block messages further indicate at least one of: a synchronization signal block periodicity; a synchronization signal block subcarrier offset; a synchronization signal block subcarrier spacing; a synchronization signal block power; a transmission power of synchronization signal block; a transmission power of a channel state information reference signal; a synchronization signal block time offset; a time division duplexing configuration; or a sub-band full duplex configuration.

Clause 36. A computing device comprising: one or more processors; and memory storing instructions that, when executed by the one or more processors, cause the computing device to perform the method of any one of clauses 29 to 35.

Clause 37. A system comprising: a wireless device configured to perform the method of any one of clauses 29 to 35; and a base station configured to transmit the indication of the transmit power pattern.

Clause 38. A computer-readable medium storing instructions that, when executed, cause performance of the method of any one of clauses 29 to 35.

Clause 39. A method comprising: receiving, by a wireless device, system information block (SIB) messages of a cell indicating: first random access (RA) resources, of a synchronization signal block (SSB) of the cell, for a first type RA procedure; and second RA resources, of the SSB, for a second type RA procedure.

Clause 40. The method of clause 39, further comprising: receiving an indication of a transmit power pattern of the SSB.

Clause 41. The method of clause 39 or 40, further comprising: determining, based on the indication for the second type RA procedure, an RA resource among the first RA resources of the first type RA procedure.

Clause 42. The method of any one of clauses 39 to 41, further comprising: transmitting, via the RA resource of the first type RA procedure and for the second type RA procedure, an RA preamble.

Clause 43. The method of any one of clauses 39 to 42, wherein the transmit power pattern indicates a first transmit power of the SSB, wherein the wireless device transmits, via the first RA resources for the 4-step RA procedure, an RA preamble.

Clause 44. The method of any one of clauses 39 to 43, wherein the transmit power pattern indicates a second transmit power of the SSB, wherein the wireless device transmits, via the second RA resources for the 4-step RA procedure, an RA preamble.

Clause 45. A computing device comprising: one or more processors; and memory storing instructions that, when executed by the one or more processors, cause the computing device to perform the method of any one of clauses 39 to 44.

Clause 46. A system comprising: a wireless device configured to perform the method of any one of clauses 39 to 44; and a base station configured to transmit the indication of the transmit power pattern.

Clause 47. A computer-readable medium storing instructions that, when executed, cause performance of the method of any one of clauses 39 to 44.

Clause 48. A method comprising: receiving, by a wireless device, one or more parameters, of a cell, indicating: first random access (RA) resources, of a synchronization signal block (SSB) of the cell, for a 2-step RA procedure; and an indication of a transmit power pattern of the SSB.

Clause 49. The method of clause 48, further comprising: transmitting, for a 4-step RA procedure of the cell, an RA preamble via the first RA resources based on the indication.

Clause 50. The method of clause 48 or 49, wherein the one or more parameters further indicates second RA resources of the SSB for the 4-step RA procedure.

Clause 51. The method of any one of clauses 48 to 50, further comprising: determining by the wireless device based on the indication, an RA resource between the first RA resources and the second RA resources before transmitting the RA preamble.

Clause 52. The method of any one of clauses 48 to 51, wherein the transmit power pattern indicates a first transmit power of the SSB, wherein the wireless device transmits, via the first RA resources for the 4-step RA procedure, an RA preamble.

Clause 53. The method of any one of clauses 48 to 52, wherein the transmit power pattern indicates a second transmit power of the SSB, wherein the wireless device transmits, via the second RA resources for a 4-step RA procedure, an RA preamble.

Clause 54. The method of any one of clauses 48 to 53, wherein the wireless device receives the one or more parameters indicating the first RA resources via system information block (SIB).

Clause 55. The method of any one of clauses 48 to 54, wherein the SIB is at least one of SIB1 or SIB 19.

Clause 56. The method of any one of clauses 48 to 55, wherein the wireless device receives the indication via at least one of: system information block 19 (SIB19); a signal via a physical downlink control channel (PDCCH); downlink control information (DCI) (e.g., DCI format 1_0) via a PDCCH; a short message via a PDCCH; a signal via a physical downlink shared channel (PDSCH); or medium access control control information (MAC CE) via PDSCH.

Clause 57. The method of any one of clauses 48 to 56, wherein the indication further comprises: one or more transmit powers of the SSB (e.g., the first transmit power of the SSB, the second transmit power of the SSB; or starting time, duration and/or a cycle pattern of each of the one or more transmit powers of the SSB.

Clause 58. The method of any one of clauses 48 to 57, wherein the SSB may be associated with at least: an off state; a common messages only or common control signaling only state; or an active traffic state.

Clause 59. The method of any one of clauses 48 to 58, wherein the off state indicates that there is no transmission or reception of any physical channels (i.e., neither control signaling nor active user traffic).

Clause 60. The method of any one of clauses 48 to 59, wherein the common messages only state or common control signaling state means that an SSB may be associated with scheduling of common control channels/signals.

Clause 61. The method of any one of clauses 48 to 60, wherein the common messages only state or common control signaling state enables transmission and/or reception of common control signaling only and the common control signaling involves the transmission and reception of one or more common physical channels and signals comprising at least one of: Physical broadcast channel; Physical downlink control channel (PDCCH); Physical uplink control channel (PUCCH); Primary synchronization signal (PSS); Secondary synchronization signal (SSS); or Channel state information reference signal (CSI-RS).

Clause 62. The method of any one of clauses 48 to 61, wherein the active traffic state means that the SSB may be associated with common control channels/signals and active traffic specific channels/signals.

Clause 63. The method of any one of clauses 48 to 62, wherein the active traffic state means supporting control signaling and active user traffic and the active traffic state supports transmission and reception of one or more common physical channels and signals comprising at least one of: Physical broadcast channel; Physical downlink control channel (PDCCH); Physical downlink shared channel (PDSCH); Physical uplink control channel (PUCCH); Physical uplink shared channel (PUSCH); Physical random access channel (PRACH); Primary synchronization signal (PSS); Secondary synchronization signal (SSS); Channel state information reference signal (CSI-RS); Demodulation reference signals (DM-RS); Phase tracking reference signal (PT-RS); Sounding reference signal (SRS); or Tracking reference signal (TRS).

Clause 64. The method of any one of clauses 48 to 63, wherein the transmit power pattern of the SSB indicates a change of reception power of the one or more common physical channels and signals.

Clause 65. The method of any one of clauses 48 to 64, wherein at least one of the following indicates a discontinuous transmission (DTX) cycle/pattern of the SSB: i) the off state, ii) the common messages only or common control signaling state; or iii) the active traffic state.

Clause 66. The method of any one of clauses 48 to 65, further comprising: receiving by the wireless device the one or more parameters and the one or more parameters further comprise at least one of: SSB periodicity; SSB subcarrier offset; SSB subcarrier spacing; SSB block power (or transmission power of SSB and/or CSI-RS); SSB time offset; Time division duplexing (TDD) configuration; or Sub-band full duplex (SBFD) configuration.

Clause 67. A computing device comprising: one or more processors; and memory storing instructions that, when executed by the one or more processors, cause the computing device to perform the method of any one of clauses 48 to 66.

Clause 68. A system comprising: a wireless device configured to perform the method of any one of clauses 48 to 66; and a base station configured to transmit the indication of the transmit power pattern.

Clause 69. A computer-readable medium storing instructions that, when executed, cause performance of the method of any one of clauses 48 to 66.

Clause 70. A method comprising: transmitting, by a base station, to one or more wireless devices, one or more parameters, of a cell, indicating: first random access (RA) resources, of a synchronization signal block (SSB) of the cell, for 2-step RA procedure; and second RA resources, of the SSB, for 4-step RA procedure.

Clause 71. The method of clause 70, further comprising: determining a transmit power pattern of the SSB.

Clause 72. The method of clause 70 or 71, further comprising: transmitting, by a base station based on the transmit power pattern of the SSB of the cell, an indication for the one or more wireless devices to use the first RA resources for a first 4-step RA procedure.

Clause 73. A computing device comprising: one or more processors; and memory storing instructions that, when executed by the one or more processors, cause the computing device to perform the method of any one of clauses 70 to 72.

Clause 74. A system comprising: a wireless device configured to perform the method of any one of clauses 70 to 72; and a base station configured to transmit the indication of the transmit power pattern.

Clause 75. A computer-readable medium storing instructions that, when executed, cause performance of the method of any one of clauses 70 to 72.

Clause 76. A method comprising: receiving, by a wireless device, system information block (SIB) messages of a cell, indicating: first random access (RA) resources, of a synchronization signal block (SSB), for 2-step RA procedure; and second RA resources, of the SSB, for 4-step RA procedure.

Clause 77. The method of clause 76, further comprising: receiving a notification indicating a transmit power of the SSB of the cell.

Clause 78. The method of clause 76 or 77, further comprising: determining, based on the transmit power of the SSB, an RA resource from the first RA resources and the second RA resources.

Clause 79. The method of any one of clauses 76 to 78, further comprising: transmitting, via the first RA resources and for the 4-step RA procedure, an RA preamble.

Clause 80. A computing device comprising: one or more processors; and memory storing instructions that, when executed by the one or more processors, cause the computing device to perform the method of any one of clauses 76 to 79.

Clause 81. A system comprising: a wireless device configured to perform the method of any one of clauses 76 to 79; and a base station configured to transmit the indication of the transmit power pattern.

Clause 82. A computer-readable medium storing instructions that, when executed, cause performance of the method of any one of clauses 76 to 79.

Clause 83. A method comprising: receiving, by a wireless device and via a cell, one or more synchronization signal blocks(SSBs).

Clause 84. The method of clause 83, further comprising: receiving a first system information block (SIB) message, of the cell, indicating: first random access (RA) resources, of an SSB of the one or more SSBs, for a 2-step RA procedure; second RA resources, of the SSB, for a 4-step RA procedure; and a power threshold for determining the 2-step RA procedure.

Clause 85. The method of clause 83 or 84, further comprising: receiving a second SIB message comprising satellite assistance information for non-terrestrial network access, wherein the second SIB message indicates a respective power offset of each of the one or more SSBs.

Clause 86. The method of any one of clauses 83 to 85, further comprising: selecting, for an RA procedure, the SSB of the one or more SSBs.

Clause 87. The method of any one of clauses 83 to 86, further comprising: transmitting, via an RA resource and for the RA procedure, an RA preamble, wherein the RA resource is selected from the first RA resources and the second RA resources based on: a reference signal received power (RSRP) of the selected SSB; and a power offset, corresponding to the selected SSB, applied to the power threshold.

Clause 88. A computing device comprising: one or more processors; and memory storing instructions that, when executed by the one or more processors, cause the computing device to perform the method of any one of clauses 83 to 87.

Clause 89. A system comprising: a wireless device configured to perform the method of any one of clauses 83 to 87; and a base station configured to transmit the indication of the transmit power pattern.

Clause 90. A computer-readable medium storing instructions that, when executed, cause performance of the method of any one of clauses 83 to 87.

Clause 91. A method comprising: receiving one or more system information block (SIB) messages, of a cell, indicating: a power threshold for determining a 2-step RA procedure; and a respective power offset of each of one or more synchronization signal blocks (SSBs) of the cell.

Clause 92. The method of clause 91, further comprising: transmitting, via an RA resource, an RA preamble, wherein the RA resource is selected from first RA resources, associated with 2-step RA procedure, and second RA resources, associated with 4-step RA procedure, based on: a reference signal received power (RSRP) of an SSB of the one or more SSBs; and a power offset, corresponding to the SSB, applied to the power threshold.

Clause 93. A computing device comprising: one or more processors; and memory storing instructions that, when executed by the one or more processors, cause the computing device to perform the method of any one of clauses 91 or 92.

Clause 94. A system comprising: a wireless device configured to perform the method of any one of clauses 91 or 92; and a base station configured to transmit the indication of the transmit power pattern.

Clause 95. A computer-readable medium storing instructions that, when executed, cause performance of the method of any one of clauses 91 or 92.

A wireless device may perform a method comprising multiple operations. The wireless device may receive one or more system information block messages indicating: a first group of random access resources, of a synchronization signal block, that are assigned to a first type of random access procedure. The wireless device may receive a second group of random access resources, of the synchronization signal block, that are assigned to a second type of random access procedure. The wireless device may receive an indication of a transmit power pattern of the synchronization signal block. Based on the transmit power pattern of the synchronization signal block indicating to use a second type of random access procedure, the wireless device may re-assign at least one random access resource of the first group of random access resources for use in the second type of random access procedure. The wireless device may transmit, via the at least one random access resource, a random access preamble for the second type of random access procedure. The wireless device may receive, by the wireless device, a second system information block message indicating a power threshold and a power offset associated with at least one synchronization signal block; and wherein the re-assigning of at least one random access resource of the first group for use in the second type of random access procedure is based on a comparison of: a reference signal received power of the synchronization signal block; the power offset corresponding to the synchronization signal block; and the power threshold. The wireless device may receive the indication of the transmit power pattern of the synchronization signal block, further receiving a transmission power configuration of the synchronization signal block in a time domain, and the re-assigning the at least one random access resource may be further based on the transmission power configuration of the synchronization signal block in the time domain. The first type of random access procedure may be a 2-step random access procedure, and the second type of random access procedure may be a 4-step random access procedure. The wireless device may receive a further indication from a network node and the re-assigning of at least one random access resource for use in the second type of random access procedure may further be based on the further indication. The synchronization signal block may be associated with a single geographical area and the wireless device may receive the synchronization signal block during an enabled state. Based on the indication of the transmit power pattern of the synchronization signal block, the wireless device may control at least one timer for radio link monitoring or beam failure detection. The wireless device may receive the indication via at least one of: a system information block; a signal via a physical downlink control channel; downlink control information via a physical downlink control channel; a short message via a physical downlink control channel; a signal via a physical downlink shared channel; or a medium access control control element via a physical downlink shared channel. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to transmit the indication of the transmit power pattern. A computer-readable medium may store instructions that, when executed, cause performance of the described method, additional operations, and/or include the additional elements.

A wireless device may perform a method comprising multiple operations. The wireless device may receive at least one synchronization signal block. The wireless device may receive a first system information block message indicating: a first group of random access resources, of a synchronization signal block of the at least one synchronization signal block, that are assigned to a 2-step random access procedure; a second group of random access resources, of the synchronization signal block, that are assigned to a 4-step random access procedure; and a power threshold for determination of whether to use the 2-step random access procedure. The wireless device may receive a second system information block message comprising satellite assistance information for non-terrestrial network access, wherein the second system information block message indicates, for each synchronization block of the at least one synchronization signal block, a corresponding power offset. The wireless device may transmit, via a random access resource and for a random access procedure, a random access preamble, and the random access resource may be selected from the first group of random access resources or the second group of random access resources based on: a reference signal received power of a selected synchronization signal block of the at least one synchronization signal block; a power offset, corresponding to the selected synchronization signal block; and the power threshold. The first system information block message indicates, for the selected synchronization signal block, a time-domain transmit power configuration, and the method further comprises selecting a random access resource from the first group of random access resources or the second group of random access resources may be further based on a transmit power indicated in the time-domain transmit power configuration. The synchronization signal block may be associated with one or more operational states of at least one of: an off state; a state associated with at least one of a common message or a common control signaling; or an active traffic state. The power threshold may be a first power threshold. The wireless device may determine a second power threshold by scaling the first power threshold with the power offset corresponding to the synchronization signal block. The wireless device may determine whether to use the 2-step random access procedure or the 4-step random access procedure based on a comparison of the second power threshold with a reference signal received power of the synchronization signal block. The wireless device may determine a timing offset for selection of the random access resource based on at least one of: a transmit power pattern of the selected synchronization signal block; or a variation in the reference signal received power over time. The synchronization signal block may be associated with a single geographical area, and the wireless device may detect a change in transmit power of the synchronization signal block during an enabled state. The wireless device may select the synchronization signal block for the random access procedure by: using satellite assistance information received via the second system information block message to determine a synchronization signal block, of the at least one synchronization signal block, as the synchronization block; and applying a corresponding power offset indicated in the satellite assistance information for non-terrestrial network access. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to transmit the indication of the transmit power pattern. A computer-readable medium may store instructions that, when executed, cause performance of the described method, additional operations, and/or include the additional elements.

A base station may perform a method comprising multiple operations. A base station may transmit one or more system information block messages indicating: a first group of random access resources, of a synchronization signal block, that are assigned to a 2-step random access procedure; and a second group of random access resources, of the synchronization signal block, that are assigned to a 4-step random access procedure. The base station may determine a transmit power pattern of the synchronization signal block. Based on the transmit power pattern of the synchronization signal block indicating to use the 4-step random access procedure, an indication to one or more wireless devices may use at least one random access resource of the first group of random access resources for the 4-step random access procedure. The base station may transmit a time-domain transmit power configuration of the synchronization signal block that indicates when transmit power is active, reduced, or disabled. The transmit power pattern of the synchronization signal block may indicate a change of reception power associated with one or more common physical channels. A discontinuous transmission cycle of the synchronization signal block may be applied based on at least one of: an off state; a common messages only or common control signaling state; or an active traffic state. The one or more system information block messages may further indicate at least one of: a synchronization signal block periodicity; a synchronization signal block subcarrier offset; a synchronization signal block subcarrier spacing; a synchronization signal block power; a transmission power of synchronization signal block; a transmission power of a channel state information reference signal; a synchronization signal block time offset; a time division duplexing configuration; or a sub-band full duplex configuration. The base station may comprise one or more processors; and memory storing instructions that, when executed by the one or more processors, cause the base station to perform the described method, additional operations and/or include the additional elements. A system may comprise a base station configured to perform the described method, additional operations and/or include the additional elements; and a base station configured to transmit the indication of the transmit power pattern. A computer-readable medium may store instructions that, when executed, cause performance of the described method, additional operations, and/or include the additional elements.

A wireless device may perform a method comprising multiple operations. A wireless device may receive system information block (SIB) messages of a cell indicating: first random access (RA) resources, of a synchronization signal block (SSB) of the cell, for a first type RA procedure; and second RA resources, of the SSB, for a second type RA procedure. The wireless device may receive an indication of a transmit power pattern of the SSB. The wireless device may determine, based on the indication for the second type RA procedure, an RA resource among the first RA resources of the first type RA procedure. The wireless device may transmit, via the RA resource of the first type RA procedure and for the second type RA procedure, an RA preamble. The transmit power pattern may indicate a first transmit power of the SSB, and the wireless device may transmit, via the first RA resources for the 4-step RA procedure, an RA preamble. The transmit power pattern may indicate a second transmit power of the SSB, and the wireless device transmits, via the second RA resources for the 4-step RA procedure, an RA preamble. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to transmit the indication of the transmit power pattern. A computer-readable medium may store instructions that, when executed, cause performance of the described method, additional operations, and/or include the additional elements.

A wireless device may perform a method comprising multiple operations. A wireless device may receive one or more parameters, of a cell, indicating: first random access (RA) resources, of a synchronization signal block (SSB) of the cell, for a 2-step RA procedure; and an indication of a transmit power pattern of the SSB. The wireless device may transmit, for a 4-step RA procedure of the cell, an RA preamble via the first RA resources based on the indication. The one or more parameters further indicates second RA resources of the SSB for the 4-step RA procedure. The wireless device may determine, based on the indication, an RA resource between the first RA resources and the second RA resources before transmitting the RA preamble. The transmit power pattern may indicate a first transmit power of the SSB, and the wireless device may transmit, via the first RA resources for the 4-step RA procedure, an RA preamble. The transmit power pattern may indicate a second transmit power of the SSB, and the wireless device may transmit, via the second RA resources for a 4-step RA procedure, an RA preamble. The wireless device receives the one or more parameters indicating the first RA resources via system information block (SIB). The SIB may be at least one of SIB1 or SIB 19. The wireless device may receive the indication via at least one of: system information block 19 (SIB19); a signal via a physical downlink control channel (PDCCH); downlink control information (DCI) (e.g., DCI format 1_0) via a PDCCH; a short message via a PDCCH;

a signal via a physical downlink shared channel (PDSCH); or medium access control control information (MAC CE) via PDSCH. The indication may further include: one or more transmit powers of the SSB (e.g., the first transmit power of the SSB, the second transmit power of the SSB; or starting time, duration and/or a cycle pattern of each of the one or more transmit powers of the SSB. The SSB may be associated with at least: an off state; a common messages only or common control signaling only state; or an active traffic state. The off state may indicate that there is no transmission or reception of any physical channels (i.e., neither control signaling nor active user traffic). The common messages only state or common control signaling state may indicate that an SSB may be associated with scheduling of common control channels/signals. The common messages only state or common control signaling state enables transmission and/or reception of common control signaling only and the common control signaling may involve the transmission and reception of one or more common physical channels and signals comprising at least one of: Physical broadcast channel; Physical downlink control channel (PDCCH); Physical uplink control channel (PUCCH); Primary synchronization signal (PSS); Secondary synchronization signal (SSS); or Channel state information reference signal (CSI-RS). The active traffic state means that the SSB may be associated with common control channels/signals and active traffic specific channels/signals. The active traffic state may mean supporting control signaling and active user traffic and the active traffic state supports transmission and reception of one or more common physical channels and signals comprising at least one of: Physical broadcast channel; Physical downlink control channel (PDCCH); Physical downlink shared channel (PDSCH); Physical uplink control channel (PUCCH); Physical uplink shared channel (PUSCH); Physical random access channel (PRACH); Primary synchronization signal (PSS); Secondary synchronization signal (SSS); Channel state information reference signal (CSI-RS); Demodulation reference signals (DM-RS); Phase tracking reference signal (PT-RS); Sounding reference signal (SRS); or Tracking reference signal (TRS). The transmit power pattern of the SSB may indicate a change of reception power of the one or more common physical channels and signals. At least one of the following may indicate a discontinuous transmission (DTX) cycle/pattern of the SSB: i) the off state, ii) the common messages only or common control signaling state; or iii) the active traffic state. The wireless device may receive the one or more parameters and the one or more parameters further comprise at least one of: SSB periodicity; SSB subcarrier offset; SSB subcarrier spacing; SSB block power (or transmission power of SSB and/or CSI-RS); SSB time offset; Time division duplexing (TDD) configuration; or Sub-band full duplex (SBFD) configuration. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to transmit the indication of the transmit power pattern. A computer-readable medium may store instructions that, when executed, cause performance of the described method, additional operations, and/or include the additional elements.

A base station may perform a method comprising multiple operations. A base station may transmit to one or more wireless devices, one or more parameters, of a cell, indicating: first random access (RA) resources, of a synchronization signal block (SSB) of the cell, for 2-step RA procedure; and second RA resources, of the SSB, for 4-step RA procedure. The base station may determine a transmit power pattern of the SSB. The base station may transmit, based on the transmit power pattern of the SSB of the cell, an indication for the one or more wireless devices to use the first RA resources for a first 4-step RA procedure. The base station may comprise one or more processors; and memory storing instructions that, when executed by the one or more processors, cause the base station to perform the described method, additional operations and/or include the additional elements. A system may comprise a base station configured to perform the described method, additional operations and/or include the additional elements; and a base station configured to transmit the indication of the transmit power pattern. A computer-readable medium may store instructions that, when executed, cause performance of the described method, additional operations, and/or include the additional elements.

A wireless device may perform a method comprising multiple operations. A wireless device may receive system information block (SIB) messages of a cell, indicating: first random access (RA) resources, of a synchronization signal block (SSB), for 2-step RA procedure; and second RA resources, of the SSB, for 4-step RA procedure. The wireless device may receive a notification indicating a transmit power of the SSB of the cell. The wireless device may determine, based on the transmit power of the SSB, an RA resource from the first RA resources and the second RA resources. The wireless device may transmit, via the first RA resources and for the 4-step RA procedure, an RA preamble. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to transmit the indication of the transmit power pattern. A computer-readable medium may store instructions that, when executed, cause performance of the described method, additional operations, and/or include the additional elements.

A wireless device may perform a method comprising multiple operations. A wireless device may receive, via a cell, one or more synchronization signal blocks (SSBs). The wireless device may receive a first system information block (SIB) message, of the cell, indicating: first random access (RA) resources, of an SSB of the one or more SSBs, for a 2-step RA procedure; second RA resources, of the SSB, for a 4-step RA procedure; and a power threshold for determining the 2-step RA procedure. The wireless device may receive a second SIB message comprising satellite assistance information for non-terrestrial network access, wherein the second SIB message indicates a respective power offset of each of the one or more SSBs. The wireless device may select, for an RA procedure, the SSB of the one or more SSBs. The wireless device may transmit, via an RA resource and for the RA procedure, an RA preamble, and the RA resource may be selected from the first RA resources and the second RA resources based on: a reference signal received power (RSRP) of the selected SSB; and a power offset, corresponding to the selected SSB, applied to the power threshold. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to transmit the indication of the transmit power pattern. A computer-readable medium may store instructions that, when executed, cause performance of the described method, additional operations, and/or include the additional elements.

A wireless device may perform a method comprising multiple operations. A wireless device may receive one or more system information block (SIB) messages, of a cell, indicating: a power threshold for determining a 2-step RA procedure; and a respective power offset of each of one or more synchronization signal blocks (SSBs) of the cell. The wireless device may transmit, via an RA resource, an RA preamble, and the RA resource may be selected from first RA resources, associated with 2-step RA procedure, and second RA resources, associated with 4-step RA procedure, based on: a reference signal received power (RSRP) of an SSB of the one or more SSBs; and a power offset, corresponding to the SSB, applied to the power threshold. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to transmit the indication of the transmit power pattern. A computer-readable medium may store instructions that, when executed, cause performance of the described method, additional operations, and/or include the additional elements.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

A base station may communicate with one or more of wireless devices. Wireless devices and/or base stations may support multiple technologies, and/or multiple releases of the same technology. Wireless devices may have some specific capability(ies) depending on wireless device category and/or capability(ies). A base station may comprise multiple sectors, cells, and/or portions of transmission entities. A base station communicating with a plurality of wireless devices may refer to a base station communicating with a subset of the total wireless devices in a coverage area. Wireless devices referred to herein may correspond to a plurality of wireless devices compatible with a given LTE, 5G, 6G, or other 3GPP or non-3GPP release with a given capability and in a given sector of a base station. A plurality of wireless devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of base stations and/or a plurality of wireless devices in a coverage area that may not comply with the disclosed methods, for example, because those wireless devices and/or base stations may perform based on older releases of LTE, 5G, 6G, or other 3GPP or non-3GPP technology.

One or more parameters, fields, and/or Information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of multi-carrier communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as base stations, wireless devices or user equipment (wireless device), servers, switches, antennas, and/or the like. A network may comprise any wireless technology, including but not limited to, cellular, wireless, WiFi, 4G, 5G, 6G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

## Claims

1. A method comprising:

   receiving, by a wireless device, one or more system information block messages indicating:

   a first group of random access resources, of a synchronization signal block, that are configured for a first type of random access procedure; and
   a second group of random access resources, of the synchronization signal block, that are configured for a second type of random access procedure;

   receiving an indication of a transmit power pattern of the synchronization signal block;
   based on the transmit power pattern of the synchronization signal block indicating to use a second type of random access procedure, selecting at least one random access resource of the first group of random access resources for use in the second type of random access procedure; and
   transmitting, via the at least one random access resource, a random access preamble for the second type of random access procedure.

2. The method of claim 1, further comprising:

   receiving, by the wireless device, a second system information block message indicating a power threshold and a power offset associated with at least one synchronization signal block; and

wherein the selecting of at least one random access resource of the first group for use in the second type of random access procedure is based on a comparison of:

a reference signal received power of the synchronization signal block;
the power offset corresponding to the synchronization signal block; and
the power threshold.

3. The method of claim 1 or claim 2, wherein the receiving the indication of the transmit power pattern of the synchronization signal block further comprises receiving a transmission power configuration of the synchronization signal block in a time domain, and wherein the selecting the at least one random access resource is further based on the transmission power configuration of the synchronization signal block in the time domain.

4. The method of any one of claims 1 to 3, wherein the first type of random access procedure is a 2-step random access procedure, and wherein the second type of random access procedure is a 4-step random access procedure.

5. The method of any one of claims 1 to 4, further comprising:

receiving, by the wireless device, a further indication from a network node; and
wherein the selecting of at least one random access resource for use in the second type of random access procedure is further based on the further indication.

6. The method of any one of claims 1 to 5, wherein the synchronization signal block is associated with a single geographical area, and wherein the method further comprises receiving the synchronization signal block during an enabled state.

7. The method of any one of claims 1 to 6, further comprising: based on the indication of the transmit power pattern of the synchronization signal block, controlling at least one timer for radio link monitoring or beam failure detection.

8. The method of any one of claims 1 to 7, wherein receiving the indication of the transmit power pattern of the synchronization signal block comprises receiving the indication via at least one of:

a system information block;
a signal via a physical downlink control channel;
downlink control information via a physical downlink control channel;
a short message via a physical downlink control channel;
a signal via a physical downlink shared channel; or
a medium access control control element via a physical downlink shared channel.

9. The method of any one of claims 1 to 8, wherein a first system information block message further indicates, for the synchronization signal block, a time-domain transmit power configuration, and wherein the method further comprises selecting a random access resource from the first group of random access resources or the second group of random access resources based on a transmit power indicated in the time-domain transmit power configuration.

10. The method of any one of claims 1 to 9, wherein the synchronization signal block is associated with one or more operational states comprising at least one of:

an off state;
a state associated with at least one of a common message or common control signaling; or
an active traffic state.

11. The method of any one of claims 2 to 10, wherein the power threshold is a first power threshold, and wherein the method further comprises:

determining a second power threshold by scaling the first power threshold with a power offset corresponding to the synchronization signal block; and
determining whether to use the 2-step random access procedure or the 4-step random access procedure based on a comparison of the second power threshold with a reference signal received power of the synchronization signal block.

12. The method of any one of claims 1 to 11, further comprising determining, by the wireless device, a timing offset for selection of the random access resource based on at least one of:

   a transmit power pattern of the synchronization signal block; or
   a variation in the reference signal received power over time.

13. A computing device comprising:

   one or more processors; and
   memory storing instructions that, when executed by the one or more processors, cause the computing device to perform the method of any one of claims 1 to 12.

14. A system comprising:

   a wireless device configured to perform the method of any one of claims 1 to 12; and
   a base station configured to transmit an indication of a transmit power pattern of a synchronization signal block.

15. A computer-readable medium storing instructions that, when executed, cause performance of the method of any one of claims 1 to 12.

**FIG. 1A**

**FIG. 1B**

EP 4 742 816 A1

**Wireless Device 210**

| SDAP 215 | ↔ | SDAP 225 |
| PDCP 214 | ↔ | PDCP 224 |
| RLC 213 | ↔ | RLC 223 |
| MAC 212 | ↔ | MAC 222 |
| PHY 211 | ↔ | PHY 221 |

**Base Station 220**

## FIG. 2A

**Wireless Device 210** — **Base Station 220** — **AMF 230**

| NAS 217 | ↔ | | ↔ | NAS 237 |
| RRC 216 | ↔ | RRC 226 | | |
| PDCP 214 | ↔ | PDCP 224 | | |
| RLC 213 | ↔ | RLC 223 | | |
| MAC 212 | ↔ | MAC 222 | | |
| PHY 211 | ↔ | PHY 221 | | |

## FIG. 2B

65

**IP Packets**

**FIG. 3**

**FIG. 4A**

**FIG. 4B**

EP 4 742 816 A1

Downlink

FIG. 5A

Uplink

FIG. 5B

FIG. 6

**FIG. 7**

**FIG. 8**

**FIG. 9**

EP 4 742 816 A1

**FIG. 10A**

**FIG. 10B**

**FIG. 11A**

**FIG. 11B**

Tx beam

Base Station 1210

Rx beam

Wireless Device 1205

P1

P2

P3

**FIG. 12A**

Rx beam

Base Station 1210

Tx beam

Wireless Device 1205

U1

U2

U3

**FIG. 12B**

Base Station 1302

Wireless Device 1301

Configuration 1330

Preamble 1341

Msg A 1331

1342

Transport block

Msg B 1332

**FIG. 13C**

Base Station 1302

Wireless Device 1301

Configuration 1320

Msg 1 1321

Msg 2 1322

**FIG. 13B**

Base Station 1302

Wireless Device 1301

Configuration 1310

Msg 1 1311

Msg 2 1312

Msg 3 1313

Msg 4 1314

**FIG. 13A**

FIG. 14A

FIG. 14B

FIG. 15A

EP 4 742 816 A1

FIG. 15B

**FIG. 16A**

**FIG. 16B**

**FIG. 16D**

**FIG. 16C**

EP 4 742 816 A1

EP 4 742 816 A1

| NG-RAN node1 | NG-RAN node2 |
|---|---|

XN SETUP REQUEST

XN SETUP RESPONSE

**FIG. 17A**

| NG-RAN node1 | NG-RAN node2 |
|---|---|

NG-RAN NODE CONFIGURATION UPDATE

NG-RAN NODE CONFIGURATION UPDATE ACKNOWLEDGE

**FIG. 17B**

| gNB-DU | gNB-CU |
|---|---|

F1 SETUP REQUEST

F1 SETUP RESPONSE

**FIG. 17C**

| gNB-DU | gNB-CU |
|---|---|

GNB-DU NODE CONFIGURATION UPDATE

GNB-DU CONFIGURATION UPDATE ACKNOWLEDGE

**FIG. 17D**

EP 4 742 816 A1

```
┌──────────┐                      ┌──────────┐
│  NG-RAN  │                      │   AMF    │
│   node   │                      │          │
└──────────┘                      └──────────┘
     │                                 │
     │      NG SETUP REQUEST           │
     │────────────────────────────────▶│
     │                                 │
     │      NG SETUP RESPONSE          │
     │◀────────────────────────────────│
     │                                 │
```

**FIG.18A**

```
┌──────────┐                      ┌──────────┐
│  NG-RAN  │                      │   AMF    │
│   node   │                      │          │
└──────────┘                      └──────────┘
     │                                 │
     │   RAN CONFIGURATION UPDATE      │
     │────────────────────────────────▶│
     │                                 │
     │ RAN CONFIGURATION UPDATE ACKNOWLEDGE │
     │◀────────────────────────────────│
     │                                 │
```

**FIG.18B**

```
┌──────────┐                      ┌──────────┐
│  NG-RAN  │                      │   AMF    │
│   node   │                      │          │
└──────────┘                      └──────────┘
     │                                 │
     │  INITIAL CONTEXT SETUP REQUEST  │
     │────────────────────────────────▶│
     │                                 │
     │ INITIAL CONTEXT SETUP RESPONSE  │
     │◀────────────────────────────────│
     │                                 │
```

**FIG. 18C**

```
┌──────────┐                      ┌──────────┐
│  NG-RAN  │                      │   AMF    │
│   node   │                      │          │
└──────────┘                      └──────────┘
     │                                 │
     │           PAGING                │
     │◀────────────────────────────────│
     │                                 │
```

**FIG.18D**

FIG. 19

2000 SIB 19

2002 NTN configuration (e.g., *ntn-config*)

2004 Service Stop time (e.g., *t-Service*)

2006 Reference Location (e.g., *referenceLocation*)

2008 Distance threshold (e.g., *distanceThreshold*)

2010 NTN neighbor cell configuration list (e.g., *ntn-NeighCellConfigList*)

2012 Moving Reference Location (e.g., *movingReferenceLocation*)

2014 Epoch Time (e.g., *epochTime*)

2018 NTN UL Synchronization Validity duration (e.g., *ntn-UlSyncValidityDuration*)

2022 Cell-specific $K_{offset}$ (e.g., *cellSpecificKoffset*)

2024 $K_{mac}$

2026 NTN Polarization in UL (e.g., *ntn-PolarizationUL*)

2028 NTN Polarization in DL (e.g., *ntn-PolarizationDL*)

2030 Ephemeris Information (e.g., *ephemerisInfo*)

2032 Timing Advance Information (e.g., *TA-Info*)

2036 NTN coverage enhancement configurations (e.g., *ntnCovEnh*)

2038 Number of Msg4 with HARQ-ACK repetitions (e.g., *numberOFMsg4HARQ-ACK-Repetitions*)

2040 RSRP threshold for Msg4 PUCCH repetitions (e.g., *rsrp-ThresholdMsg4HARQ-ACK*)

2042 ⌐ ⌐

2044 Common Timing Advance (e.g., *ta-Common*)

2046 Common Timing Advance Drift (e.g., *ta-CommonDrift*)

2048 Common Timing Advance Drift Variant (e.g., *ta-CommonDriftVariant*)

2050 Satellite Switch with resynchronization configurations (e.g., *SatSwitchWithReSync*)

2056 NTN configuration (e.g., *ntn-config*)

2060 Service Start Time (e.g., *t-ServieStart*)

2064 SSB Time Offset (e.g., *ssb-TimeOffset*)

2068 ⌐ ⌐

2062 ⌐ ⌐

2076 NTN configuration (e.g., *ntn-config*)

2080 Carrier Frequency (e.g., *carrierFreq*)

2084 Physical Cell Id (e.g., *physCellId*)

2090 ⌐ ⌐

EP 4 742 816 A1

FIG. 20

**FIG. 21A**

**FIG. 21B**

EP 4 742 816 A1

FIG. 22

**Example parameters of SSB transmission:**

- **SCS: 15KHz**
- **Frequency: 3GHz<fc<=6GHz**
- **Maximum Number of SSBs in SS burst (e.g., Lmax=8)**
- **SSB starting symbol indexes: 2, 8, 16, 22, 30, 36, 44, 50**

**FIG. 23**

RA1

RA2

A pool of first random access (RA) resources (RA1) for use by a first RA type at a first transmitted SSB power

A pool of second random access (RA) resources (RA2) for use by a second RA type at the first transmitted SSB power

In a network where a base station dynamically changes a transmission power and/or states of one or more SSBs (e.g., *ss-PBCH-BlockPower*) pre-assigned resources can be a waste, if a pre-assigned threshold prevents one or more wireless devices from using one or more subsets of pre-assigned resources.

▦ Resource representation of RA preambles and physical RA channel Occasions (PRACH Occasions) for use by the first RA type

⊠ Resource representation of RA preambles, physical RA channel Occasions (PRACH Occasions) and PUSCH resource for use by the second RA type

RA1

RA2

The second RA procedure uses a pool of the first RA Resources ( RA1) and the second RA Resources (RA2) at a second transmitted SSB power

FIG. 24

Wireless Device(s)

**A first message:** RRC message (e.g., SIB) comprising SSB transmission power configuration in time-domain and/or SSB DTX/DRX configuration of one or more SSBs, radio resource allocation of one or more procedures (e.g., first random access (RA) resources (RA1) for use by a first RA type, second random access (RA) resources (RA2) for use by a second RA type) at different SSB transmission powers and one or more received power threshold (e.g., SS-RSRP) configuration of one or more procedures (e.g., a first threshold to select the first RA type)

2505

BS

Consider i) SSB transmission power configuration in time-domain and/or SSB DTX/DRX configuration of one or more SSBs; ii) radio resource allocation of one or more procedures (e.g., first random access (RA) resources (RA1) for use by a first RA type, second random access (RA) resources (RA2) for use by a second RA type) ; iii) one or more received power threshold (e.g., SS-RSRP) configuration (e.g., a threshold to select the first RA type)

2510

A Second message – (e.g., RRC message (e.g., SIB), Short Message or L1/2 signaling) – e.g., use the first RA resources to perform the second RA type procedure. 2515

Carry out one or more actions: e.g., use the first RA resources to perform the second RA type procedure. 2520

SS-RSRP: Synchronization Signal - Reference Signal Received Power 2525

**FIG. 25**

FIG. 26A

FIG. 26B

Transmission power of the SSB by a base station (e.g., *ss-PBCH-BlockPower*)

Received power of the SSB by a UE

S1 mode/state means off state (i.e., off or inactive state)
S2 mode/state means common message transmission only (i.e., Semi-Active state)
S3 mode/state means support of active user traffic (i.e., On or Active state)

**FIG. 27**

Wireless Device(s) — BS

A first message: RRC message (e.g., SIB) comprising SSB transmission power configuration in time-domain and/or SSB DTX/DRX configuration of one or more SSBs, radio resource allocation of one or more procedures (e.g., first random access (RA) resources (RA1) for use by a first RA type at a first transmitted SSB power, second random access (RA) resources (RA2) for use by a second RA type at the first transmitted SSB power) at different SSB transmission powers and one or more received power threshold (e.g., SS-RSRP) configuration of one or more procedures (e.g., a first threshold to select the first RA type) 2705

Consider i) SSB transmission power configuration in time-domain and/or SSB DTX/DRX configuration of one or more SSBs; ii) radio resource allocation of one or more procedures (e.g., first random access (RA) resources (RA1) for use by a first RA type at a first transmitted SSB power, second random access (RA) resources (RA2) for use by a second RA type at the first transmitted SSB power) at different SSB transmission powers; iii) one or more received power threshold (e.g., SS-RSRP) configuration (e.g., a threshold to select the first RA type) 2710

A third message indicating one or more new received power (e.g., SS-RSRP) thresholds or threshold offsets of one or more procedures (e.g., a second threshold to select the first RA type or an offset to determine the second threshold) 2715

Perform one or more actions: e.g., apply/determine the new threshold to check whether to use the first RA resources to perform the first RA type procedure. 2720

SS-RSRP: Synchronization Signal - Reference Signal Received Power 2725

EP 4 742 816 A1

EP 4 742 816 A1

Wireless Device(s)

BS

A fourth message: RRC message (e.g., SIB) comprising SSB transmission power configuration in time-domain and/ or SSB DTX/DRX configuration of one or more SSBs
2805

SSB transmission power configuration in time-domain and/or SSB DTX/DRX configuration of one or more SSBs          2810

A fifth message: RRC message (e.g., RRC Release) indicating disabling at least one of: i) an SDT procedure; ii) cell (re)selection procedure; iii) handover procedure; or iv) RLF/BF procedure when the serving cell is fully off          2815

Consider not triggering at least one of: i) an SDT procedure; ii) cell (re)selection procedure; or iii) handover procedure when the serving cell is fully off by one or more UEs, which are in RRC_INACTIVE or RRC_IDLE state.          2820

**FIG. 28**

**BS**

**Wireless Device(s)**

A sixth message: RRC message (e.g., SIB) comprising SSB transmission power configuration in time-domain and/or SSB DTX/DRX configuration of one or more SSBs    2905

SSB transmission power configuration in time-domain and/or SSB DTX/DRX configuration of one or more SSBs    2910

A seventh message: RRC message (e.g., RRC Reconfiguration), Short Message or L1/2 signaling indicating that one or more RRC CONNECTED UEs consider a fully "off" period of the serving cell as an autonomous gap or measurement gap to take neighbor cell measurements.    2915

Consider using the fully "off" period of the serving cell to take neighbour cell measurments.    2920

**FIG. 29B**

Fully "off" period of a Serving Cell

SMTC Window

SSB  #0  #1  #2  #3  #4

**FIG. 29A**

BS2

Message (e.g., Xn interface management related) comprising beam/cell configuration parameters indicating at least beam/cell on/off/periodicity/geographical-coverage patterns and power levels of one or more physical channels belonging to one or more serving cells of BS1
3005

BS1

a) Consider beam/cell one/off/periodicity/geographical-coverage patterns one or more physical channels belonging to one or more serving cells of BS2 to determine at least one of: i) SMTC patterns; or ii) handover timing for a first set of one or more UEs, and configure the first set of one or more wireless devices accordingly.
b) Consider beam/cell one/off/periodicity/geographical-coverage patterns and power levels of one or more physical channels belonging to one or more serving cells of BS1 to determine interference control by deciding beam/cell configuration parameters indicating at least beam/cell on/off/periodicity/geographical-coverage patterns and power levels of one or more physical channels belonging to one or more serving cells of BS1.
3010

Message (e.g., Xn interface management related) comprising beam/cell configuration parameters indicating at least beam/cell on/off/periodicity/geographical-coverage patterns and power levels of one or more physical channels belonging to one or more serving cells of BS1
3015

Consider beam/cell one/off/periodicity/geographical-coverage patterns one or more physical channels belonging to one or more serving cells of BS1 to determine at least one of: i) SMTC patterns; or ii) handover timing for a second set of one or more UEs, and configure the second set of one or more wireless devices accordingly.
3020

**FIG. 30**

EP 4 742 816 A1

```
┌─────────────┐                                              ┌─────────────┐
│ BS-DU (e.g., │                                              │ BS-CU (e.g., │
│   gNB-DU)    │                                              │   gNB-CU)    │
└─────────────┘                                              └─────────────┘
```

F1 SETUP REQUEST    3100

a) Consider served cell list of a gNB-DU.

b) Determine beam/cell activation/deactivation configuration parameters comprising at least one of: i) one or more operational modes/states of one or more beams, ii) start time, duration and cycle patterns of each of the one or more operational mode/state, iii) transmission power of one or more physical channels; or iv) beam geographical coverage belonging to one or more serving cells of gNB-DU

3105

F1 SETUP RESPONSE(the beam/cell activation/deactivation configuration parameters comprising at least one of: i) one or more operational modes/states of one or more beams, ii) start time, duration and cycle patterns of each of the one or more operational mode/state, iii) transmission power of one or more physical channels; or iv) beam geographical coverage belonging to the one or more serving cells of gNB-DU

3110

Activate/deactivate one or more beams/cells of the one or more serving cells of gNB-DU based on the beam/cell activation/deactivation configuration parameters comprising at least one of: i) one or more operational modes/states of one or more beams, ii) start time, duration and cycle patterns of each of the one or more operational mode/state, iii) transmission power of one or more physical channels; or iv) beam geographical coverage belonging to the one or more serving cells of gNB-DU

3115

**FIG. 31**

EP 4 742 816 A1

**BS**

**5GC**

Message (e.g., NG interface management related) consisting of beam/cell activation/deactivation configuration parameters comprising at least one of: i) one or more operational modes/states of one or more beams/cells, ii) start time, duration and cycle patterns of each of the one or more operational mode/state; or iii) beam geographical coverage belonging to one or more serving cells of a BS.

3205

Consider beam/cell activation/deactivation configuration parameters comprising at least one of: i) one or more operational modes/states of one or more beams/cells, ii) start time, duration and cycle patterns of each of the one or more operational mode/state; or iii) beam geographical coverage belonging to one or more serving cells of a BS to determine at least a UE-specific DRX and paging time window

3210

**FIG. 32**

FIG. 33

Europäisches
Patentamt
European
Patent Office
Office européen
des brevets

# EUROPEAN SEARCH REPORT

**Application Number**

EP 25 21 4152

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ERICSSON: "Procedure for Two-step RACH", 3GPP DRAFT; R1-1907181 PROCEDURE FOR TWO-STEP RACH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20190513 - 20190517 13 May 2019 (2019-05-13), XP051728624, Retrieved from the Internet: URL:http://www.3gpp.org/ftp/Meetings%5F3GP P%5FSYNC/RAN1/Docs/R1%2D1907181%2Ezip [retrieved on 2019-05-13] * sections 4, 4.1; figure 4 * ----- | 1-15 | INV. H04W74/0833 ADD. H04W74/00 |
| A | LEI WANG ET AL: "Discussion on adaptation of common signal and channel transmissions", 3GPP DRAFT; R1-2406294; TYPE DISCUSSION; NETW_ENERGY_NR_ENH-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANC , vol. RAN WG1, no. Maastricht, NL; 20240819 - 20240823 9 August 2024 (2024-08-09), XP052637517, Retrieved from the Internet: URL:https://www.3gpp.org/ftp/TSG_RAN/WG1_R L1/TSGR1_118/Docs/R1-2406294.zip R1-2406294 Discussion on adaptation of common signal and channel transmissions.docx [retrieved on 2024-08-09] * section 2.3 * ----- -/-- | 1-15 | TECHNICAL FIELDS SEARCHED (IPC) H04W |

The present search report has been drawn up for all claims

| Place of search | Date of completion of the search | Examiner |
|---|---|---|
| The Hague | 11 March 2026 | Saffell, Christine |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

          ...........................................................................................
& : member of the same patent family, corresponding
document

EPO FORM 1503 03.82 (P04C01)

**page 1 of 2**

Europäisches
Patentamt

European
Patent Office

Office européen
des brevets

# EUROPEAN SEARCH REPORT

**Application Number**

EP 25 21 4152

## DOCUMENTS CONSIDERED TO BE RELEVANT

| Category | Citation of document with indication, where appropriate, of relevant passages | Relevant to claim | CLASSIFICATION OF THE APPLICATION  (IPC) |
|---|---|---|---|
| A | US 2023/164828 A1 (UESAKA KAZUYOSHI [JP] ET AL) 25 May 2023 (2023-05-25) <br> * paragraphs [0022], [0025], [0133], [0168] * <br> ----- | 1-15 | |
| A | WO 2024/065694 A1 (ZTE CORP [CN]) 4 April 2024 (2024-04-04) <br> * paragraphs [0120] - [0130], [0162], [0171], [0190], [0192] - [0194], [0217] - [0219], [0257] * <br> ----- | 1-15 | |
| A | ZTE ET AL: "Remaining issues of 2-step RACH procedures", <br> 3GPP DRAFT; R1-1911828, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE <br> , <br> vol. RAN WG1, no. Reno, USA; 20191118 - 20191122 <br> 9 November 2019 (2019-11-09), XP051823022, <br> Retrieved from the Internet: <br> URL:https://ftp.3gpp.org/tsg_ran/WG1_RL1/T SGR1_99/Docs/R1-1911828.zip R1-1911828 Remaining issues of 2-step RACH procedures.docx <br> [retrieved on 2019-11-09] <br> * sections 2.3, 4.5 * <br> ----- | 1-15 | **TECHNICAL FIELDS SEARCHED    (IPC)** |

The present search report has been drawn up for all claims

| Place of search | Date of completion of the search | Examiner |
|---|---|---|
| The Hague | 11 March 2026 | Saffell, Christine |

EPO FORM 1503 03.82 (P04C01)

## ANNEX TO THE EUROPEAN SEARCH REPORT
## ON EUROPEAN PATENT APPLICATION NO.

EP 25 21 4152

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2026

| Patent document cited in search report | Publication date | Patent family member(s) | | Publication date |
|---|---|---|---|---|
| US 2023164828 A1 | 25-05-2023 | EP | 4133881 A1 | 15-02-2023 |
| | | US | 2023164828 A1 | 25-05-2023 |
| | | WO | 2021206620 A1 | 14-10-2021 |
| WO 2024065694 A1 | 04-04-2024 | CN | 119605304 A | 11-03-2025 |
| | | EP | 4541125 A1 | 23-04-2025 |
| | | JP | 2025526541 A | 15-08-2025 |
| | | KR | 20250023383 A | 18-02-2025 |
| | | US | 2025119956 A1 | 10-04-2025 |
| | | WO | 2024065694 A1 | 04-04-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63718394